# EUROPEAN PATENT APPLICATION

(11) **EP 0 719 693 A2**
(43) Date of publication of application: **03.07.1996**
(21) Application number: 95118612.1
(22) Date of filing: 27.11.1995
(51) Int. Cl.: B62B 7/08, A61G 5/08

(54) **Collapsible seating apparatus**

(30) Priority: 25.11.1994 JP 291119/94; 25.11.1994 JP 291183/94; 25.11.1994 JP 291159/94; 25.11.1994 JP 291160/94; 25.11.1994 JP 291161/94; 25.11.1994 JP 291162/94; 29.05.1995 JP 129928/95; 30.10.1995 JP 315715/95
(71) Applicant: COMBI CORPORATION, Chiyoda-ku, Tokyo (JP)
(72) Inventor: Takahashi, Hayato, c/o Combi Corp., Urawa-shi, Saitama (JP)
(74) Representative: Buzzi, Franco

(57) **Abstract**

A collapsible baby buggy includes, as principal elements, front legs (2) rear legs (3) arm rest members (4), push bars (5) and side bars (6) which are symmetrical in relation to the longitudinal direction of the baby buggy. These side members (6) are folded up longitudinally without a change in their width. A tension spring (12) and a compression spring (13) are arranged in series in the longitudinal direction of a rear leg (3). A slider (7) is hinged to the side bars (6) and is movable up and down in the longitudinal direction of the rear leg (3). A pedal frame (9) is movable up and down in the longitudinal direction of the rear leg. The tension spring (12) is fixed between the slider and the pedal frame, whereas the compression spring (13) is sandwiched between the pedal frame and a bottom member of the rear leg. The slider and the pedal frame are releasable locked at both upper and lower stop positions. The slider is moved up and down by virtue of the restoring forces stored in the tension spring and the compression spring. As a result, the side members are folded up and unfolded.

## Description

### BACKGROUND OF THE INVENTION

### Field of the invention

This invention relates to a collapsible seating apparatus in which a framework of a seating apparatus, for example, a baby buggy, a wheelchair, a baby chair, or a push chair for the aged, is longitudinally folded or unfolded in a simple operation.

### Related art

Some conventional collapsible baby buggies are designed in such a way as to be folded only in its longitudinal direction by folding front and rear legs (this type of baby buggy is usually referred to as a folding-in-two type).

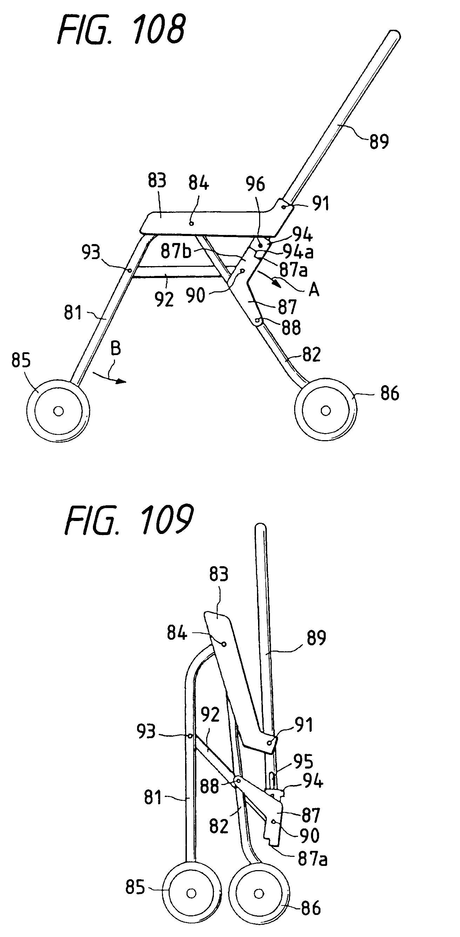

With reference to Figs. 108 and 109, a conventional folding mechanism generally used for this type of baby buggy will now be described. Fig. 108 is a side elevation showing the folding mechanism when fully extended, and Fig. 109 is a side elevation showing the folding mechanism when it is folded up. Throughout these drawings, each of the members of the mechanism is symmetrically formed, and hence an explanation will be given of the members on only the one side shown in the drawings.

In Fig. 108, the upper ends of a front leg 81 and a rear leg 82 are pivotally connected together by means of a pivot pin 84 supported by an arm rest member 83. A front wheel 85 is attached to the lower end of the front leg 81, and a rear wheel 86 is attached to the lower end of the rear leg 82.

A bracket 87 is pivotally connected to the substantially longitudinal center of the rear leg 82 by means of a pivot pin 88. This bracket 87 has an L shape with an obtuse angle, that is, it is shaped like a boomerang. One side (in this case, a longer side) of the bracket 87 upwardly extends along the rear leg 82 from the pivotal pin 88, and the other side (in this case, a shorter side) of the same projects angularly from the upper end of the longer side in an upper rearward direction. The shorter side of the bracket 87, which is designated a projection 87b, is pivotally connected to a press bar 89 by means of a pivot pin 90. This press bar 89 is pivotally connected to the rear end of the arm rest member 83 by means of the pivot pin 91. With this configuration, while the front leg 81 and the rear leg 82 are opened, further pivotal movement of the press bar 89 in a rearward direction is restricted.

The front end of a side bar 92 is pivotally connected to a point on the front leg 81 by means of a pivot pin 93. The rear end of this side bar 92 is pivotally connected to the bracket 87 by means of the pivot pin 90. As a result of this configuration, the opening action of the front leg 81 and the rear leg 82 is limited within a predetermined width.

An open-close lock 94 which vertically slides along the press bar 89 fits on the upper end of the projection 87b of the bracket 87. A stepped portion 94a formed at the lower end of the open-close lock 94 engages with a stepped portion 87a formed at the upper end of the bracket 87, thereby locking the bracket 87.

An elastic member (not shown) for affording a downward pulling force to the open-close lock 94 is housed in the press bar 89. A longitudinal slot 95 (shown in Fig. 109) is formed in this press bar 89. A slave pin 96 which is fixed upright on the inner side of the open-close lock 94 meshes with the longitudinal slot 95. As a result of this, the open-close lock 94 is resiliently urged toward the bracket 87, which in turn holds the stepped portions 94a and 87a engaged together. If the open-close lock 94 is pulled up against the elastic force of the elastic member, the bracket 87 can be unlocked.

The open-close lock 94 is usually coupled to an operation button (not shown) disposed at an upper portion of the press bar 89 by means of a wire (not shown), and the open-close lock 94 is pulled up by actuating this operation button in a pressing manner.

This type of conventional collapsible baby buggy is longitudinally folded up in the manner as shown in Fig. 109 by the steps of pulling up the open-close lock 94 to unlock the bracket 87; lifting the press bar 89 upwards to slightly rotate the bracket 87 about the lower pivot pin 88 in the direction designated by arrow A; and further pressing the press bar 89, so that the bracket 87 starts to rotate in the direction designated by arrow A. This rotation of the bracket 87 is simultaneously followed by the pivotal movement of the front leg 81 via the side bar 92 in the direction designated by arrow B, the bringing of the press bar 89 to an upright position, and the collapsing of the arm rest member 83, as a result of which the overall framework is finally folded up as shown in Fig. 109.

As described above, the pivotal movement of the bracket 87 and the following pivotal movement of the associated elements result in the baby buggy being longitudinally folded up. However, the pivotal movement and the following pivotal movement of the associated elements are initiated by movement of the bracket 87 as a result of a pressing action of the press bar 89, which is entirely dependent on the user's operation.

Further, the pivotal support (the pivot pin 90) of the press bar 89 is situated on the circumference of the pivotal support (the pivot pin 88) of the bracket 87, and hence there is a dead point in the pivotal movement of the bracket 87. When the pivot pin 90 of the press bar 89 is positioned at the dead point, the bracket 87 will not pivotally move in the reversed direction, even if the press bar 89 is pressed. Further, if the press bar 89 is pressed before the pivot pin 90 of the press bar 89 reaches the dead point, the bracket 87 returns to its previous position, which prevents the baby buggy from being folded up.

For these reason, the user is always required to have a certain level of skill when operating the baby buggy. Specifically, the press bar 89 must be folded down while it is being pulled backwards using the rear wheel 86 as a fulcrum. Then, the press bar 89 is pressed down, which turns the bracket 87 over. Thus, laborious operation is required to fold up the baby buggy.

These problems are not limited to the previously mentioned baby buggy, but they are also encountered in many other seating apparatuses such as wheel chairs and a push chair for the aged having a similar framework.

### SUMMARY OF THE INVENTION

This invention is conceived in view of these drawbacks in the prior art, and the object of the invention is to provide a collapsible seating apparatus wherein the conventional folding mechanism using a bracket, which effects pivotal movement and turning action, is completely abandoned, and which enables the folding of the framework in a longitudinal direction with a simple operation.

Accroding to the present invention, there is provided a collapsible seating apparatus comprises a framework including: a front legs and rear legs respectively hinged at their upper ends to arm rest members; press bars respectively hinged to the rear ends of the arm rest members; sliders slidable along the rear legs in the longitudinal direction thereof and being hinged to the lower ends of the press bars; and side bars each with one end thereof being hinged to the slider and with the other end thereof being hinged to the front leg.

A collapsible seating apparatus of the present invention, further comprises first retaining means for holding the slider located at an upper position in order to retain the seating apparatus in an unfolded state; and second retaining means for holding the slider located at a lower position in order to retain the seating apparatus in a folded up state.

The collapsible seating apparatus of the present invention, the second retaining means includes folding spring for resiliently urging the slider in an upward direction.

The collapsible seating apparatus of the present invention, the first retaining means includes an unfolding spring for resiliently urging the slider in a downward direction.

The collapsible seating apparatus of the present invention further comprises a folding spring for resiliently urging the slider in an upward direction; an unfolding spring for resiliently urging the slider in a downward direction; storage means for individually storing the urging forces of the folding and unfolding springs; releasing means for individually releasing the urging forces of the folding and unfolding springs stored in the storage means and transmitting the thus released forces to the slider.

According to the collapsible seating apparatus, wherein the storage means has a mechanism for storing urging forces which are generated by making the folding and unfolding springs flex using a manual depressing force.

According to the collapsible seating apparatus, wherein the first means and the second means include an electric motor for moving the slider upwardly and/or downwardly, respectively.

According to the collapsible seating apparatus, wherein the seating apparatus is at least one of a baby buggy, a wheel chair, a baby chair and a push chair for the aged.

A collapsible seating apparatus of the present invention further comprises: lateral bars having a predetermined length which respectively connect together the right and left sliders, the right and left front legs, and the right and left rear legs; a pedal frame which is disposed on one of the right and left rear legs and slides over the rear leg having the pedal frame in the longitudinal direction thereof below the slider; a tension spring and a compression spring disposed longitudinally along the rear leg having the pedal frame; a lock piece of the slider to which the upper end of the tension spring is fixed; a lock piece of the pedal frame to which the lower end of the tension spring is fixed, the compression spring being sandwiched between the lock piece of the pedal frame and a lower bottom of the rear leg; an upper stopper attached to an upper portion of the rear leg so as to prevent the upward movement of the slider; an upper knock pin being disposed in a releasable manner in the upper portion of the rear leg for preventing the downward movement of the slider from the position where the slider is stopped by the upper stopper; a lower stopper attached to a lower portion of the rear leg to prevent the downward movement of the pedal frame; and a lower knock pin being disposed in a releasable manner in the lower portion of the rear leg for preventing the upward movement of the pedal frame from the position where the pedal frame is stopped by the lower stopper.

The collapsible seating apparatus of the present invention further comprises a front leg sleeve rotatively fitted around the front leg at a predetermined location in a lower portion of the front legs, a first bevel gear attached to outer circumference of the front leg sleeve, a second bevel gear rotatively attached to the outside of the front leg for meshing with the first bevel gear, a rocking piece attached to the second bevel gear, and a joint bar which pivotally connects the rocking piece with the side bar; a front leg lateral bar being hinged at a point thereof and having both ends thereof attached to the right and left front leg sleeves; a slider joint link being hinged at the center thereof and having both ends thereof hinged to the right and left sliders; a rear leg joint link being hinged at the center thereof and having both ends thereof hinged to upper portions of the right and left rear legs; the slider joint link and the rear leg joint link being hinged together at points on both sides of the center link joints thereof; a pedal frame which is disposed on one of the right and left rear legs and slides over the rear leg in the longitudinal direction thereof below the slider; a tension spring and a compression spring longitudinally disposed along the rear leg; a lock piece of the slider to which the upper end of the tension spring is fixed; a lock piece of the pedal frame to which the lower end of the tension spring is fixed, the compression spring being sandwiched between the lock piece of the pedal frame and a lower portion of the rear leg; an upper stopper attached to an upper portion of the rear leg to prevent the upward movement of the slider; an upper knock pin being disposed in a releasable manner in the upper portion of the rear leg for preventing the downward movement of the slider from the position where the slider is stopped by the upper stopper; a lower stopper attached to a lower portion of the rear leg to prevent the downward movement of the pedal frame; and a lower knock pin being disposed in a releasable manner in the lower portion of the rear leg for preventing the upward movement of the pedal frame from the position where the pedal frame is stopped by the lower stopper.

According to the collapsible seating apparatus, the right and left press bars are jointed together at upper portions thereof, and the upper ends of the right and left press bars are respectively connected to both ends of a case housing the operation buttons in a collapsible manner.

According to the collapsible seating apparatus further comprises lateral bars having a predetermined length which respectively connect together the right and left sliders, the right and left front legs, and the right and left rear legs; a pedal projecting outside from the slider 7 disposed on either of the right and left rear legs; a compression spring which is disposed along the rear leg in the longitudinal direction thereof and is sandwiched between a lock piece attached to the slider and a lock piece attached to a lower portion of the rear leg; an upper stopper attached to an upper portion of the rear leg to prevent the upward movement of the slider; a lower stopper attached to a lower portion of the rear leg to prevent the downward movement of the slider; and a knock pin provided in a releasable manner so as to prevent the upward movement of the slider from the position where the slider is stopped by the lower stopper.

The collapsible seating apparatus further comprises a front leg sleeve rotatively fitted around the front leg at a predetermined location in a lower portion of the front leg, a first bevel gear attached to outer circumference of the front leg sleeve, a second bevel gear rotatively attached to the outside of the front leg for meshing with the first bevel gear, a rocking piece attached to the second bevel gear, and a joint bar which pivotally connects the rocking piece with the side bar; a front leg lateral bar being hinged at a point thereof and having both ends thereof attached to the right and left front leg sleeves; a slider joint link being hinged at the center thereof and having both ends thereof hinged to the right and left sliders; a rear leg joint link being hinged at the center thereof and having both ends thereof hinged to upper portions of the right and left rear legs, the slider joint link and the rear leg joint link being hinged together at points on both sides of the center link joints thereof; a pedal projecting outside from the slider disposed on either of the right and left rear legs; a compression spring disposed along the rear leg in the longitudinal direction thereof being sandwiched between a lock piece attached to the slider and a lock piece attached to a lower portion of the rear leg; an upper stopper attached to an upper portion of the rear leg to prevent the upward movement of the slider; a lower stopper attached to a lower portion of the rear leg to prevent the downward movement of the slider; and a knock pin being disposed in a releasable manner in the lower portion of the rear leg to prevent the upward movement of the slider from the position where the slider is stopped by the lower stopper.

The collapsible seating apparatus further comprises lateral bars having a predetermined length for respectively connecting together the right and left front legs, the right and left rear legs, and the right and left sliders; at least one electric motor capable of rotating in forward and reverse directions which is disposed at an upper portion of at least one of the right and left rear legs; a male screw shaft connected to a rotary shaft of the motor in the longitudinal direction of the rear leg; a slide member which is attached to the slider in such a way as to be movable in the longitudinal direction of the rear leg; and
a female screw thread of the slide member, into which the male screw shaft is screwed.

Ths collapsible seating apparatus further comprises a front leg sleeve rotatively fitted around the front leg at a predetermined location in a lower portion of the front leg, a first bevel gear attached to outer circumference of the front leg sleeve, a second bevel gear rotatively attached to the outside of the front leg for meshing with the first bevel gear, a rocking piece attached to the second bevel gear, and a joint bar which pivotally connects the rocking piece to the side bar; a front leg lateral bar being hinged at a point thereof and having both ends thereof attached to the right and left front leg sleeves; a slider joint link being hinged at the center thereof and having both ends thereof hinged to the right and left sliders; a rear leg joint link being hinged at the center thereof and having both ends thereof hinged to upper portions of the right and left rear legs, the slider joint link and the rear leg joint link being hinged together at points on both sides of the center link joints thereof; at least one electric motor which is capable of rotating in forward and reverse directions and is disposed at an upper portion of at least one of the right and left rear legs; a male screw shaft connected to a rotary shaft of the motor in the longitudinal direction of the rear leg; a slide member which is attached to the slider in such a way as to be movable in the longitudinal direction of the rear leg; and a female screw thread of the slide member into which the male screw shaft is screwed.

The collapsible seating apparatus further comprises a pedal frame which is disposed on one of the right and left rear legs and slides over the rear leg in the longitudinal direction thereof below the slider; and first and second tension springs disposed side by side in the longitudinal direction of the rear leg having the pedal frame, wherein the first tension spring is attached at the upper end thereof to a lock member provided at the upper end of the rear leg and is attached at the other end thereof to a lock piece of the pedal frame, and the second tension spring is attached at the upper end thereof to a lock piece of the slider and is attached at the lower end thereof to a lock piece of the pedal frame.

A collapsible seating apparatus further comprises a first bevel gear attached to outer circumference of the front leg sleeve; a second bevel gear rotatively attached to the outside of the front leg for meshing with the first bevel gear; a rocking piece attached to the second bevel gear; a joint bar which pivotally connects the rocking piece to the side bar; a lateral bar being hinged at a point thereof and having both ends thereof attached to the right and left front leg sleeves; a slider joint link being hinged at the center thereof and having both ends thereof hinged to the right and left sliders; a rear leg joint link being hinged at the center thereof and having both ends thereof hinged to upper portions of the right and left rear legs, the slider joint link and the rear leg joint link being hinged together at points on both sides of the center link joints thereof; a pedal frame which is disposed on either of the right and left rear legs and slides over the rear leg in the longitudinal direction thereof below the slider; first and second tension springs disposed side by side in the longitudinal direction of the rear leg having the pedal frame, wherein the first tension spring is attached at the upper end thereof to a lock member provided at the upper end of the rear leg and is attached at the other end thereof to a lock piece of the pedal frame, and the second tension spring is attached at the upper end thereof to a lock piece of the slider and is attached at the lower end thereof to a lock piece of the pedal frame; an upper stopper attached to an upper portion of the rear leg to prevent the upward movement of the slider; an upper knock pin being disposed in a releasable manner in the upper portion of the rear leg to prevent the downward movement of the slider from the position where the slider is stopped by the upper stopper; a lower stopper attached to a lower portion of the rear leg to prevent the downward movement of the pedal frame; and a lower knock pin being disposed in a releasable manner in the lower portion of the rear leg to prevent the upward movement of the pedal frame from the position where the pedal frame is stopped by the lower stopper.

The collapsible seating apparatus further comprises lateral bars having a predetermined length which respectively connect together the right and left sliders, the right and left front legs, and the right and left rear legs; a pedal frame which is disposed on one of the right and left rear legs and slides over the rear leg in the longitudinal direction thereof below the slider; first and second tension springs disposed side by side in the longitudinal direction of the rear leg having the pedal frame, wherein the first tension spring is attached at the upper end thereof to a lock member provided at the upper end of the rear leg and is attached at the other end thereof to a lock piece of the pedal frame, and the second tension spring is attached at the upper end thereof to a lock piece of the slider and is attached at the lower end thereof to a lock piece of the pedal frame; an upper stopper attached to an upper portion of the rear leg to prevent the upward movement of the slider; an upper knock pin being disposed in a releasable manner in the upper portion of the rear leg to prevent the downward movement of the slider from the position where the slider is stopped by the upper stopper; a lower stopper attached to a lower portion of the rear leg to prevent the downward movement of the pedal frame; and a lower knock pin being disposed in a releasable manner in the lower portion of the rear leg to prevent the upward movement of the pedal frame from the position where the pedal frame is stopped by the lower stopper.

According to the collapsible seating apparatus, the tension spring and the compression spring are disposed within the rear leg, and the lock piece of the slider and the lock piece of the pedal frame project to the inside of the rear leg through an elongated guide hole formed in the longitudinal direction of the rear leg.

According to the collapsible seating apparatus, the upper knock pin and the lower knock pin being respectively supported by elastic members so as to project out of holes drilled in the side surface at the upper and lower portions of the rear leg; and further comprising: two rotating plates which are rotatively fixed coaxially with respect to the slider and resiliently return to their original positions, the rotating plates being respectively linked to two operation buttons disposed at an upper portion of the press bars by way of respective wires; and protuberances formed on the respective rotating plates, whereby the rotation of each of the rotating plates resulting from the pressing action of each of the operation buttons causes each of the protuberances of the rotating plates to press one of the upper knock pin and the lower knock pin to such an extent that the knock pin comes to the point below the surface of the rear leg.

According to the collapsible seating apparatus, wherein the tension spring and the compression spring are disposed outside the rear leg.

According to the collapsible seating apparatus, the tension spring and the compression spring includes coil springs, respectively.

According to the collapsible seating apparatus, wherein the compression spring includes a gas spring.

According to ehe collapsible seating apparatus the framework is manually folded up as a result of the elimination of the tension spring.

Accoridng to ehe collapsible seating apparatus, the framework is manually unfolded as a result of the elimination of the compression spring.

According to ehe collapsible seating apparatus, the knock pin being supported by an elastic member so as to project out of the side surface at the lower portion of the rear leg; and further comprising: a rotating plate which is rotatively attached to the slider and resiliently returns to its original position, the rotating plate being linked to an operation button disposed at upper portion of the press bar by way of a wire; and a protuberance formed on the rotating plate, whereby the rotation of the rotating plate resulting from the pressing action of the operation button causes the protuberance of the rotating plate to press the knock pin to such an extent that the knock pin comes to the point below the surface of the rear leg.

According to ehe collapsible seating apparatus, a tension spring provided along the rear leg in the longitudinal direction thereof is sandwiched between a lock piece attached to the slider and a lock piece attached to an upper portion of the rear leg.

According to the collapsible seating apparatus, one of the compression spring and the tension spring is disposed within the rear leg.

According to the collapsible seating apparatus, wherein one of the compression spring and the tension spring is disposed outside the rear leg.

Accoridng to ehe collapsible seating apparatus, one of the compression spring and the tension spring includes a coil spring.

According to the collapsible seating apparatus, the slide member is attached to the slider disposed along the outer periphery of the rear leg, the slide member projects to the inside of the rear leg along an elongated guide hole formed in the rear leg in the longitudinal direction thereof, and the male screw shaft at the upper and lower portions thereof being supported in a slidable way by the inside of the rear leg is screwed into the female screw thread of the slide member provided within the rear leg.

According to ehe collapsible seating apparatus, the male screw shaft is disposed outside the rear leg.

According to ehe collapsible seating apparatus, stopper means are disposed at upper and lower portions of the rear leg for preventing the upper and lower movement of the slider at a predetermined location.

According to ehe collapsible seating apparatus, a switch for starting or stopping the electric motor is provided at an upper portion of the press bar.

According to the collapsible seating apparatus, the upper knock pin and the lower knock pin being respectively supported by elastic members so as to project out of holes drilled in the side surface at the upper and lower portions of the rear leg; and further comprising: two rotating plates which are rotatively fixed coaxially with respect to the slider and resiliently return to their original positions, the rotating plates being respectively linked to two operation buttons disposed at an upper portion of the press bars by way of respective wires; and protuberances formed on the respective rotating plates, whereby the rotation of each of the rotating plates resulting from the pressing action of each of the operation buttons causes each of the protuberances of the rotating plates to press the upper knock pin or the lower knock pin to such an extent that the knock pin comes to the point below the surface of the rear leg.

According to the present invention, the side bar pushes the front leg in a forward direction when the slider is located at an upper position, whereby the legs are opened. Simultaneously, the press bar tilts in a rearward direction about the hinged portions attached to the rear end of the arm rest member, and the arm rest member is brought to an approximate level, whereby the seating apparatus is unfolded. The first retaining means holds the seating apparatus unfolded.

If the slider is manually pushed in a downward direction, the portions of the slider hinged to the side bar and the press bar move downward in a longitudinal direction of the rear leg. As a result of this, the front leg is drawn towards the rear leg, whereby the legs are closed. Concurrently, a rear portion of the arm rest member is tilted downwardly, and the press bar is brought to an upright position, so that the seating apparatus is folded. The second retaining means holds the seating apparatus in a folded up state.

Conversely, if the slider is manually moved in an upward direction, the seating apparatus will be unfolded.

According to the present invention, when the first retaining means is released from the unfolded state, the folding spring moves the slider in the upward direction, whereby the seating apparatus is automatically folded up. The folding spring holds the seating apparatus the folded up state.

According to the present invention, when the second retaining means is released from the folded state, the unfolding spring moves the slider downwardly, whereby the seating apparatus is automatically unfolded. The unfolding spring holds the seating apparatus an unfolded state.

According to the present invention, the storage means separately stores urging forces for each of the folding springs and the unfolding springs. When the releasing means releases the stored urging force of the folding spring, the seating apparatus is automatically folded. On the other hand, when the releasing means releases the stored urging force of the unfolding spring, the seating apparatus is automatically unfolded.

According to the present invention, the urging forces are stored by putting the folding and unfolding springs into a deflected state by means of a force resulting from manual depressing action.

According to the present invention, the slider is moved by means of an electric motor. The seating apparatus is held in either an unfolded or a folded state while the electric motor is stopped.

According to the present invention, the seating apparatus is used as a baby buggy, a wheel chair, a child chair, or a push chair for the aged.

According to the present invention, when the slider is situated at an upper stop position where it is brought into contact with the upper stopper, the side bar pushes the front leg in a forward direction, whereby the legs are opened. At the same time, the press bar is tilted in a rearward direction about the portion of the press bar hinged to the rear end of the arm rest member, whereby the seating apparatus is unfolded.

In this unfolded state, the upper knock pin hinders the downward movement of the slider. Further, the pedal frame is urged upward and brought into contact with the lower end of the slider by means of elastic forces of the tension spring and the compression spring, whereby the pedal frame is stopped and held in contact with the lower end of the slider.

If the pedal frame is pushed down along the rear leg until it comes into contact with the lower stopper, the tension spring is stretched downwardly, and the compression spring is simultaneously compressed in a downward direction. At this time, the tension spring and the compression spring store elastic energy developed in both springs. Specifically, the tension spring possesses a drawing force for urging the slider in a downward direction, whereas the compression spring possesses a restoring force for urging the pedal frame upwardly. In spite of these forces, the pedal frame is prevented from moving upward by the lower knock pint, whereas the slider is prevented from moving downward by the upper knock pin.

If the upper knock pin is released, the slider is urged downward and then moved in the longitudinal direction of the rear leg by means of the drawing force of the tension spring. Upon coming into contact with the upper end of the pedal frame, the slider comes into a stop. At this time, the right and left sliders are coupled together by the lateral bar, and hence the slider without the pedal frame is also similarly urged downward and comes into a stop.

Together with the downward movement of the right and left sliders, the right and left front legs are folded up toward the rear legs by way of the respective side bars. Simultaneously, the hinged portions at the lower ends of the right and left press bars move in a downward direction, as a result of which hinged portions between the press bars and the right and left arm members move downward. The arm rest members then pivot on the portions thereof hinged to the upper ends of the rear legs, so that the rear portions of the arm rest members are tilted downwardly. In this way, the seating apparatus is folded up. Eventually, the overall framework of the seating apparatus is folded up in a longitudinal direction thereof while it is laterally unchanged.

Moreover, if the lower knock pin is released, the pedal frame is urged and moved in an upward direction by means of a restoring force of the compression spring. Simultaneously, the pedal frame pushes the slider up, so that the slider returns until it comes into contact with the upper stopper and then comes into a stop. At this time, the upper knock pin again hinders the downward movement of the slider.

As a result of the upward movement of the slider, the right and left arm rest members and the right and left press bars operate in reverse compared with their operation when the seat is folded up. The right and left front legs, the arm rest members, and the press bars return to their unfolded states.

According to the present invention, a collapsible seating apparatus is constructed so that it can be folded and unfolded not only longitudinally but also laterally.

When the slider is situated at the upper stop position where it is brought into contact with the upper stopper, the side bar pushes the front leg in the forward direction, whereby the legs are opened. Simultaneously, the press bar is tilted in a rearward direction about the portion thereof hinged to the rear end of the arm rest member, as a result of which the seating apparatus is unfolded. At this time, the front leg lateral bar, the slider joint link, and the rear leg joint link are also unfolded. In this way, the seating apparatus is also unfolded in a lateral direction thereof.

When the overall seating apparatus is unfolded in the manner as mentioned above, the slider is prevented from moving downwards by the upper knock pin. Further, although the pedal frame is urged upward by means of the elastic forces of the tension spring and the compression spring, it is held in contact with the lower end of the slider.

If the pedal frame is stepped on and pressed down along the rear leg until it comes into contact with the lower stopper, the tension spring will be stretched in a downward direction. Concurrently, the compression spring is compressed in a downward direction. At this time, the tension spring and the compression spring store the elastic energy developed therein. Specifically, the tension spring possesses a drawing force for urging the slider in a downward direction, whilst the compression spring possesses a restoring force for urging the pedal frame in an upward direction. In spite of these forces, the pedal frame is prevented from moving in the upward direction by the lower knock pin, whereas the slider is prevented from moving in the downward direction by the upper knock pin.

At this time, only the pedal frame is moved, and the slider remains where it is. The front leg lateral bar, the slider joint link, and the rear leg joint link are held in an unfolded state.

If the upper knock pin is then released, one slider is urged downwards in the longitudinal direction of the rear leg by means of the drawing force of the tension spring. A collapsing action arise in the slider joint link and the rear leg joint link, in opposite directions around the right and left portions where the slider joint link and the rear leg joint link are hinged to each other, and the respective center hinged portions of the slider joint link and the rear leg joint link collapse and move away from each other in a symmetrical manner. As a result of this, the rear legs are laterally folded up.

Together with the downward movement of the right and left sliders, the right and left front legs are attracted to the rear legs by way of the side bars respectively hinged to the right and left sliders. The right and left front legs are folded up when they come into line with the hinged portions in the arm rest members.

In conjunction with these operations, the hinged ends of the right and left rocking pieces downwardly pivot around the axes thereof by means of the right and left joint bars hinged to the right and left side bars. As a result of this, the right and left second bevel gears attached to the rocking pieces rotate in the same direction. In association with the rotation of these right and left second bevel gears, the right and left first bevel gears rotate. Then, the right and left front leg sleeves, which are attached to the first bevel gears and are opposite to each other, rotate in a rearward direction. The front leg lateral bar having both ends thereof attached to the right and left front leg sleeves is collapsed at hinged portions thereof, whereby the front legs of the seating apparatus are laterally folded up.

In this way, the seating apparatus is longitudinally folded up, as well as the front and rear legs being laterally folded up in conjunction with the downward movement of the right and left sliders.

Subsequently, when the lower knock pin is released, the pedal frame is urged upward in the longitudinal direction of the rear leg by means of a restoring force of the compression spring. At the same time, the pedal frame pushes up the slider situated above the pedal frame.

This slider moves until it comes into contact with the upper stopper. In conjunction with the upward movement of this slider, the slider joint link and the rear leg joint link return to their stretched states, and the side bars simultaneously pivot on the portions thereof hinged to the front legs so as to push the front legs in the forward direction. At this time, the rocking pieces rotate in the opposite direction by way of the joint bars hinged to the side bars. As a result of this, the first bevel gears rotate so that they return to their original positions, and the second bevel gears also rotate, so that the front lateral bar returns to its stretched state. In this way, the seating apparatus returns to both its longitudinally and laterally unfolded states at the same time.

According to the present invention, when the slider is situated at the upper stop position where it is brought into contact with the upper stopper, the side bar pushes the front leg in a forward direction, whereby the legs are opened. Concurrently, the press bar is tilted in a rearward direction around the portion thereof hinged to the rear end of the arm rest member, and the arm rest member is brought to an approximately level position. In this way, the seating apparatus is unfolded.

In this unfolded state, the slider is urged upward by the compression spring, and hence the slider is held in an upwardly urged state.

If the slider is pushed down along the rear leg using a pedal, the other slider also moves downward along the rear leg, because the right and left sliders are coupled together by means of the lateral bar. The side bars are respectively hinged to the right and left sliders, and these right and left side bars are also hinged to the right and left front legs, respectively. With this configuration, as the right and left sliders move downward along the rear legs, the right and left front legs are attracted toward the rear legs. The right and left front legs and the right and left rear legs pivotally move around the upper ends hinged portions thereof, so that the front and rear legs are closed.

The slider pushed down by the pedal comes to the lower stop position where it is brought into contact with the lower stopper. At this lower stop position, the lock pin locks the slider so as to prevent the slider from moving upward. The slider is held in the lower stop position even though it is urged upward by the compression spring, whereby the front and rear legs are held closed.

Subsequently, if the lock pin that brought the slider into a locked state is released, the slider is urged upward along the longitudinal direction of the rear leg by the restoring force of the compression spring. The slider moves together with the counterpart slider connected to this slider by means of the lateral bar until the right and left sliders come into contact with the upper stoppers. As a result of this, the right and left side bars push the right and left front legs up in a forward direction, so that the legs are opened.

According to the present invention, the a collapsible seating apparatus is constructed so that it can be folded and unfolded not only longitudinally but also laterally.

When the slider is situated at the upper stop position where it is brought into contact with the upper stopper, the side bar pushes the front leg in the forward direction, whereby the legs are opened. Simultaneously, the press bar is tilted in a rearward direction about the portion thereof hinged to the rear end of the arm rest member, as a result of which the seating apparatus is unfolded while the arm rest members are substantially horizontal. At this time, the front leg lateral bar, the slider joint link, and the rear leg joint link are also unfolded. In this way, the seating apparatus is also unfolded in a lateral direction thereof.

In this state, the slider is urged upward by the compression spring, and hence it is held in the upper stop position.

If one of the sliders is pushed down by a pedal, a collapsing action arise in the slider joint link and the rear leg joint link in opposite directions around the right and left portions where the slider joint link and the rear leg joint link are hinged to each other, and the respective center hinged portions of the slider joint link and the rear leg joint link collapse and move away from each other in a symmetrical manner. Associated with this movement, the other slider is also moved downward, as a result of which the rear legs are laterally reduced in size. In this way, the rear legs of the seating apparatus are laterally folded up. In conjunction with the downward movement of the right and left sliders, the right and left front legs are attracted toward the rear legs by way of the side bars hinged to the respective right and left sliders. The right and left front legs are folded up when they come into alignment with the hinged portions of the arm rest members, whereby the seating apparatus is longitudinally folded up.

Further, together with the downward movement of the right and left sliders, the respective hinges portions between the right and left side bars and the joint bars move downward, as a result of which the rocking pieces rotate. As a result of the rotation of the rocking pieces, the first bevel gears rotate in the same direction, and the second bevel gears rotate in conjunction with the rotation of the first bevel gears. The front leg lateral bar is folded at the hinged portions thereof, whereby the front legs of the seating apparatus are laterally folded up.

The sliders that were moved downward come into contact with the lower stoppers. The sliders are locked at this lower stop position by the knock pins so as not to move upward. The sliders are held in the lower stop position although they are urged upwards by the restoring force of the compression spring.

In this way, the seating apparatus is longitudinally folded up, as well as the front and rear legs being laterally folded up simultaneously with the downward movement of the slider. As a result of the locking of one slider with the knock pin, the overall seating apparatus is held in a locked state. Subsequently, if the knock pin engaging with the slider is released, the slider is urged upwardly in the longitudinal direction of the rear leg by means of the restoring force of the compression spring. This slider moves until it comes into contact with the upper stopper. In conjunction with this upward movement of the slider, the slider joint link and the rear leg joint link return to their stretched states. Further, the side bars rotate around the portions thereof hinged to the front legs, so that the front legs are pushed in a forward direction. Simultaneously, the rocking pieces pivotally move in the direction opposite to their previous rotation by way of the joint bars hinged to the side bars. As a result of this, the first bevel gears rotate in such a direction that the gears return to their original positions, and the second bevel gears rotate also rotate concurrently, whereby the front leg lateral bar returns to its stretched state. In this way, the seating apparatus returns to both its longitudinally and laterally unfolded states.

According to the present invention, when the sliders are situated in an upper position, the side bars push the front legs in a forward direction, whereby the legs are opened. Concurrently, the press bars are tilted in a rearward direction around the portions thereof hinged to the rear ends of the arm rest members, so that the seating apparatus is unfolded while the arm rest members are approximately horizontal.

When the male screw bar is rotated by actuating the electric motor, the slide member having a female screw thread into which the male screw bar is screwed moves in the longitudinal direction of the rear leg. The slider attached to the slide member moves downwardly in the longitudinal direction of the rear leg.

Together with the downward movement of the slider, the portion of the slider hinged to the side bar and the portion of the slider hinged to the press bar move up or down in the longitudinal direction of the rear leg. As a result of this, the front legs are attracted towards the rear legs, or they are pushed in the forward direction. In this way, the front and rear legs are opened or closed. Simultaneously, the arm rest members are tilted in a rearward direction or are made to return to the horizontal position, and the press bars are forwardly brought to an upright or rearwardly tilting position.

In this way, the seating apparatus is longitudinally and laterally folded or unfolded by the vertical movement of the slider associated with the rotation of the electric motor.

According to the present invention, a collapsible seating apparatus is constructed so that it can be folded and unfolded not only longitudinally but also laterally.

When the slider is situated at an upper position, the side bar pushes the front leg in a forward direction, whereby the legs are opened. At the same time, the press bar is tilted in a rearward direction around the portion thereof hinged to the rear end of the arm rest member, and the seating apparatus is unfolded so that the seating apparatus is unfolded while the arm rest members are approximately horizontal.

When the male screw bar is rotated by actuating the electric motor, the slide member having a female screw thread into which the male screw bar is screwed moves in the longitudinal direction of the rear leg. The slider attached to the slide member moves downwardly in the longitudinal direction of the rear leg.

As a result of the downward movement of the slider, a collapsing action arise in the slider joint link and the rear leg joint link in opposite directions around the right and left portions where the slider joint link and the rear leg joint link are hinged to each other, and the respective center hinged portions of the slider joint link and the rear leg joint link collapse and move away from each other in a symmetrical manner. Associated with this, the other slider also moves downwards, and the rear legs are laterally reduced in size. In this way, the rear legs of the seating apparatus are laterally folded up.

Further, in conjunction with the downward movement of the right and left sliders, the right and left front legs are attracted toward the rear legs by way of the side bars hinged to the right and left sliders. The right and left front legs are folded when they come into line with the hinged portions of the arm rest members, whereby the seating apparatus is longitudinally folded up.

Moreover, together with the downward movement of the right and left sliders, the respective hinges portions between the right and left side bars and the joint bars move downward, whereby the rocking pieces rotate. As a result of the rotation of the rocking pieces, the first bevel gears rotate in the same direction, and the second bevel gears rotate in conjunction with the rotation of the first bevel gears. The front leg lateral bar is folded at the hinged portions thereof, whereby the front legs of the seating apparatus are laterally folded up.

Subsequently, if the electric motor rotates in a direction opposite to the direction of rotation when the sliders are moved downward, the sliders move upward in the longitudinal direction of the rear legs.

Associated with the upward movement of the sliders, the slider joint link and the rear leg joint link return to their stretched states, and the side bars pivotally move around their ends which are hinged to the front legs so as to push the front legs in a forward direction. Simultaneously, the rocking pieces rotate in a direction opposite to the previous direction of rotation via the joint bars hinged to the side bars. As a result of this, the first bevel gears rotate in such a direction that they return to their original positions, and the second bevel gears also rotate in conjunction with the rotation of the first bevel gears. In this way, the seating apparatus returns to both its longitudinally and laterally unfolded states.

The seating apparatus is folded up and unfolded both longitudinally and laterally by the vertical movement of the sliders resulting from the rotation of the electric motor.

According to the present invention, a double direction folding type seating apparatus is obtained. When the seating apparatus is unfolded, the sliders are prevented from moving downwards by the upper knock pins. Further, the pedal frame is stopped and held in contact with the slider although it is urged upward by the first and second tension springs.

When the pedal frame is pushed down along the rear leg until it comes into contact with the lower stopper, the first and second tension springs are stretched in a downward direction. At this time, the first and second tension springs urged the pedal frame in an upward direction, and they also store a drawing force to urge the slider in a downward direction. However, the pedal frame is prevented from moving upwards by the lower knock pin, whereas the slider is prevented from moving downward by the upper knock pin.

Further, only the pedal frame moves at this time, and the slider stays locked. The front leg lateral bar, the slider joint link, and the rear leg joint link are held in their stretched states.

If the upper knock pin is released, the slider moves downward by means of the first tension spring, so that the slider joint link and the rear leg joint link are folded up. In this way, the right and left rear legs are laterally reduced in size.

Moreover, when the sliders move downward, the right and left front legs are attracted toward the rear legs via the side bars hinged to the sliders. The right and left front legs are folded when they come into line with the hinged portions of the arm rest members, whereby the seating apparatus is longitudinally folded up.

Furthermore, when the right and left rocking pieces rotate via the right and left joint bars hinged to the right and left side bars, the right and left second bevel gears attached to the rocking pieces rotate. In conjunction with the rotation of the second bevel gears, the right and left first bevel gears rotate. Then, the right and left front leg sleeves respectively attached to the first bevel gears rotate in a rearward direction, and the front leg lateral bar fixedly connected between the front leg sleeves is folded at the hinged portions therein, whereby the seating apparatus is laterally folded up.

Among the slider joint link and the rear leg joint link which connect together the right and left rear legs, the rear leg joint link is hinged at its both ends to the upper portions of the right and left rear legs, and the slider joint link is hinged at its both ends to the right and left sliders. Therefore, as the slider moves downward in the longitudinal direction of the rear leg, the hinged portions on both ends of the slider joint link also move downward. As a result of this, the slider join link is folded around its center hinged to the rear leg joint link, so that the rear legs are laterally folded up.

In this way, associated with the downward movement of the right and left sliders, the framework of the seating apparatus is folded up laterally as well as longitudinally.

If the lower knock pin is released, the pedal frame moves upward in the longitudinal direction of the rear leg while pushing up the slider by means of the drawing force of the first tension spring.

This slider moves upward until it comes into contact with the upper stopper. Together with the upward movement of this slider, the slider joint link and the rear leg joint link return to their original stretched states, and the side bars pivotally move around the portions thereof hinged to the front legs so as to push the front legs in a forward direction.

The rocking pieces rotate in the direction opposite to the direction of the previous rotation via the joint bars hinged to the side bars. As a result of this, the first bevel gears rotate in such a direction that they return to their original positions. At the same time, the second bevel gears rotate, so that the front leg lateral bar returns to its stretched state.

In association with the upward movement of the sliders, both ends of the slider joint link hinged to the sliders also move upward, whereby the slider joint link connected to the rear leg joint link in a folded manner returns to its stretched state. In this way, the seating apparatus returns to its original stretched state, that is, it is unfolded both laterally and longitudinally.

On the other hand, in the case of the single direction folding type seating apparatus, the right and left sliders and the right and left front legs, and also the right and left rear legs are respectively fixedly connected together by the lateral bars having a predetermined length. The seating apparatus has no constituent members to laterally fold or unfold the seating apparatus in conjunction with the movement of the sliders, and therefore the framework of the seating apparatus of this type is folded up and unfolded only in its longitudinal direction.

### BRIEF DESCRIPTION OF THE DRAWINGS

Fig. 1 is a perspective view showing a collapsible baby buggy of the first embodiment;
Fig. 2 is a side elevation showing the structure of the collapsible baby buggy shown in Fig. 1 when it is unfolded;
Fig. 3 is a side elevation showing the structure of the collapsible baby buggy shown in Fig. 1 when it is folded up;
Fig. 4A is a top view of a slider (without an indication plate);
Fig. 4B is a side elevation of the slider;
Fig. 4C is a front view of the slider, Fig. 4D is a longitudinal cross-sectional view taken along line C-C shown with an arrow on Fig. 4A;
Fig. 4E is a perspective view of the slider;
Fig. 5A is a perspective view of one rear leg having a pedal frame;
Fig. 5B is a side elevation of the pedal frame as viewed in the direction of line D-D shown in Fig. 5A;
Fig. 6A is a longitudinal central cross-sectional view of the rear leg having the pedal frame;
Fig. 6B is a cross-sectional view of two rotating plates in the slider which is taken along line E-E shown in Fig. 6A;
Fig. 6C is a perspective view of a leaf spring with an upper or lower knock pin;
Fig. 6D is a partial perspective view of one rear leg, wherein the upper or lower knock pin projects out of a hole drilled in the surface of the rear leg;
Fig. 7 is a plan view showing an elongated guide hole formed in the front surface of the rear leg having the pedal frame;
Fig. 8 is a longitudinal cross-sectional view showing the structure of the rear leg when the slider and the pedal frame are moved to an upper stop position;
Fig. 9 is a longitudinal cross-sectional view showing the structure of the rear leg when the pedal frame is moved to a lower stop position while the slider is left in the upper stop position;
Fig. 10 is a longitudinal cross-sectional view showing the structure of the rear leg when the slider and the pedal frame are moved to the lower stop position;
Fig. 11 is a perspective view showing a collapsible baby buggy of the second embodiment when it is unfolded;
Fig. 12 is a perspective view showing the collapsible baby buggy shown in Fig. 11 when it is folded up;
Fig.13 is a side elevation showing the structure of the collapsible baby buggy shown in Fig. 11 when it is unfolded;
Fig. 14 is a side elevation showing the structure of the collapsible baby buggy shown in Fig. 11 when it is folded up;
Fig. 15 is a front view showing the collapsible baby buggy shown in Fig. 11 when it is unfolded;
Fig. 16 is a front view showing the collapsible baby buggy shown in Fig. 11 when it is folded up;
Fig. 17 is a rear view showing the collapsible baby buggy shown in Fig. 11 when it is unfolded;
Fig. 18 is a rear view showing the collapsible baby buggy shown in Fig. 11 when it is folded up;
Figs. 19A and 19B are side elevations showing the structure of a case and a collapsible joint member disposed on an upper part of a press bar;
Fig. 19C is a plan view showing the collapsible joint member disposed on the upper part of the press bar when it is folded;
Figs. 19D and 19E are side elevations showing the structure of wire drawing means housed in the case provided at the upper part of the press bar;
Fig. 20A is a top view of a slider (without an indication plate);
Fig. 20B is a side elevation of the slider;
Fig. 20C is a front view of the slider;
Fig. 20D is a longitudinal cross-sectional view taken along line C-C shown with an arrow on Fig. 20A;
Fig. 20E is a perspective view of the slider;
Fig. 21A is a perspective view of one rear leg having a pedal frame;
Fig. 21B is a side elevation of the pedal frame as viewed in the direction of line D-D shown in Fig. 21A;
Fig. 22A is a longitudinal central cross-sectional view of the rear leg having the pedal frame;
Fig. 22B is a cross-sectional view of two rotating plates in the slider which is taken along line E-E shown in Fig. 22A, Fig. 22C is a perspective view of a leaf spring with an upper or lower knock pin;
Fig. 22D is a partial perspective view of one rear leg, wherein the upper or lower knock pin projects out of a hole drilled in the surface of the rear leg;
Fig. 23 is a plan view showing an elongated guide hole formed in the front surface of the rear leg having the pedal frame;
Fig. 24 is a longitudinal cross-sectional view showing the structure of the rear leg when the slider and the pedal frame are moved to an upper stop position;
Fig. 25 is a rear view showing a slider joint link and a rear leg lateral bar when the slider and the pedal frame are moved to the upper stop position as they are shown in Fig. 24;
Fig. 26 is a longitudinal cross-sectional view showing the structure of the rear leg when the pedal frame is moved to a lower stop position while the slider is left in the upper stop position;
Fig. 27 is a rear view showing the slider joint link and the rear leg lateral bar when the slider is positioned at the upper stop position whereas the pedal frame is positioned at the lower stop position as they are shown in Fig. 26;
Fig. 28 is a longitudinal cross-sectional view showing the structure of the rear leg when the slider and the pedal frame are moved to the lower stop position;
Fig. 29 is a rear view showing the slider joint link and the rear leg lateral bar when the slider and the pedal frame are positioned at the lower stop position;
Fig. 30 is a perspective view showing a collapsible baby buggy of the third embodiment when it is unfolded;
Fig. 31 is a side view showing one side of the structure of the collapsible baby buggy shown in Fig. 30 when it is unfolded;
Fig. 32 is a side view showing one side of the collapsible baby buggy shown in Fig. 30 when it is folded up;
Fig. 33 is a front view showing the collapsible baby buggy shown in Fig. 30 when it is unfolded;
Fig. 34 is a rear view showing the collapsible baby buggy shown in Fig. 30 when it is unfolded;
Fig. 35A is a perspective view of a slider;
Fig. 35B is a side elevation of the slider;
Fig. 35C is a top view of the slider;
Fig. 35D is a longitudinal cross-sectional view taken along line C-C shown in Fig. 35C which shows the internal construction of the rear leg;
Fig. 36 is a longitudinal cross-sectional view showing the construction of the rear leg when the slider is moved to an upper stop position;
Fig. 37 is a partial rear view showing the sliders situated at the upper stop position;
Fig. 38 is a longitudinal cross-sectional view showing the structure of the rear leg when the slider is moved to a lower stop position;
Fig. 39 is a partial rear view showing the slider situated at the lower stop position;
Fig. 40 is a schematic representation of another embodiment which uses a tension spring instead of the compression spring, and the drawing shows the construction of the rear leg when the slider is situated at the upper stop position;
Fig. 41 is a schematic representation showing still another embodiment which uses a tension spring instead of the compression spring, and the drawing shows the construction of the rear leg when the slider is situated at the lower stop position;
Fig. 42 is a perspective view showing a collapsible baby buggy of the fourth embodiment when it is unfolded;
Fig. 43 is a perspective view showing the baby buggy shown in Fig. 42 when it is folded up;
Fig. 44 is a side view showing the structure of the collapsible baby buggy shown in Fig. 42 when it is unfolded;
Fig. 45 is a side view showing the structure of the collapsible baby buggy shown in Fig. 42 when it is folded up;
Fig. 46 is a front view of the collapsible baby buggy shown in Fig. 42 when it is unfolded;
Fig. 47 is a front view showing the collapsible baby buggy shown in Fig. 42 when it is folded up;
Fig. 48 is a rear view of the collapsible baby buggy shown in Fig. 42 when it is unfolded;
Fig. 49 is a rear view of the collapsible baby buggy shown in Fig. 42 when it is folded up;
Figs. 50A and 50B are side elevations showing a case provided at an upper part of a press bar and the structure of the case;
Fig. 51A is a perspective view of the slider;
Fig. 51B is a side elevation of the slider;
Fig. 51C is a top view of the slider;
Fig. 51D is a longitudinal cross-sectional view taken along line C-C shown in Fig. 51C which diagrammatically shows the internal construction of the rear leg;
Fig. 52 is a longitudinal cross-sectional view showing the construction of the rear leg when the slider is moved to an upper stop position;
Fig. 53 a partial rear view showing the rear leg shown in Fig. 52;
Fig. 54 is a longitudinal cross-sectional view showing the structure of the rear leg when the slider is moved to a lower stop position;
Fig. 55 is a partial rear view showing the rear leg shown in Fig. 54;
Fig. 56 is a schematic representation of another embodiment which uses a tension spring instead of the compression spring, and the drawing shows the construction of the rear leg when the slider is situated at the upper stop position;
Fig. 57 is a schematic representation showing still another embodiment which uses a tension spring instead of the compression spring, and the drawing shows the construction of the rear leg when the slider is situated at the lower stop position;
Fig. 58 is a perspective view showing a collapsible baby buggy of the fifth embodiment when it is unfolded;
Fig. 59 is a side view showing the structure of the collapsible baby buggy shown in Fig. 58 when it is unfolded;
Fig. 60 is a side view showing the structure of the collapsible baby buggy shown in Fig. 58 when it is folded up;
Fig. 61 is a front view of the collapsible baby buggy shown in Fig. 58 when it is unfolded;
Fig. 62A is a longitudinal cross sectional view of a rear leg when a slider is situated an upper stop position, and Fig. 62B is a longitudinal cross sectional view of a rear leg when a slider is situated a lower stop position;
Fig. 63A is a partially enlarged view of the rear leg and the slider when the slider is situated at the upper stop position;
Fig. 63B is a partially enlarged view of the rear leg when the slider is situated at the lower stop position (from which the slider is omitted);
Fig. 63C is a transverse cross-sectional view of the rear leg which is taken along line C-C shown in Fig. 63A;
Fig. 64 is a perspective view showing a collapsible baby buggy of the sixth embodiment when it is unfolded;
Fig. 65 is a perspective view showing the collapsible baby buggy shown in Fig. 64 when it is folded up;
Fig. 66 is a side view showing the structure of the collapsible baby buggy shown in Fig. 64 when it is unfolded;
Fig. 67 is a side view showing the structure of the collapsible baby buggy shown in Fig. 64 when it is folded up;
Fig. 68 is a front view of the collapsible baby buggy shown in Fig. 64 when it is unfolded;
Fig. 69 is a front view showing the collapsible baby buggy shown in Fig. 64 when it is folded up;
Fig. 70 is a rear view of the collapsible baby buggy shown in Fig. 64 when it is unfolded;
Fig. 71 is a rear view of the collapsible baby buggy shown in Fig. 64 when it is folded up;
Figs. 72A and 72B are side elevations showing the structure of a case and a collapsible joint member provided at an upper part of a press bar;
Fig. 73A is a longitudinal cross sectional view showing the structure of a rear leg and a slider when the slider is situated at an upper stop position;
Fig. 73B is a longitudinal cross sectional view showing the structure of the rear leg and the slider when the slider is situated at a lower stop position;
Fig. 74A is a partially enlarged view of the rear leg and the slider when the slider is situated at the upper stop position;
Fig. 74B is a partially enlarged view of the rear leg when the slider is situated at the lower stop position (from which the slider is omitted);
Fig. 74C is a transverse cross-sectional view of the rear leg which is taken along line C-C shown in Fig. 74A;
Fig. 75 is a perspective view showing a folding-in-four type collapsible baby buggy of the seventh embodiment when it is unfolded;
Fig. 76 is a perspective view showing the folding-in-four type collapsible baby buggy shown in Fig. 75 when it is folded up;
Fig. 77 is a side elevation showing the folding-in-four type collapsible baby buggy shown in Fig. 75 when it is unfolded;
Fig. 78 is a side elevation showing the folding-in-four type collapsible baby buggy shown in Fig. 75 when it is folded up;
Fig. 79 is a front view showing the folding-in-four type collapsible baby buggy shown in Fig. 75 when it is unfolded;
Fig. 80 is a front view showing the collapsible baby buggy shown in Fig. 75 when it is folded up;
Fig. 81 is a rear view showing the folding-in-four type collapsible baby buggy shown in Fig. 75 when it is unfolded;
Fig. 82 is a rear view showing the folding-in-four type collapsible baby buggy shown in Fig. 75 when it is folded up;
Figs. 83A and 83B are side elevations showing the structure of a case and a collapsible joint member disposed on an upper part of a press bar;
Fig. 83C is a plan view showing the collapsible joint member disposed on the upper part of the press bar when it is folded;
Figs. 83D and 83E are side elevations showing the structure of wire drawing means housed in the case provided at the upper part of the press bar;
Fig. 84A is a perspective view showing a rear leg provided with a slider and a pedal frame;
Fig. 84B is a transverse cross sectional view of the rear leg taken along line D-D shown with an arrow on Fig. 84A;
Fig. 85A is a top view of the slider (without an indication plate);
Fig. 85B is a side elevation of the slider;
Fig. 85C is a front view of the slider, Fig. 85D is a cross-sectional view taken along line C-C shown with an arrow on Fig. 85A;
Fig. 85E is a perspective view of the slider;
Fig. 86 is a partial perspective view of one rear leg having the slider and the pedal frame;
Fig. 87A is a cross-sectional view of two rotating plates in the slider which is taken along line E-E shown in Fig. 86; Fig. 87B is a perspective view of a leaf spring with an upper or lower knock pin, and Fig. 87C is a partial perspective view of one rear leg, wherein the upper or lower knock pin projects out of a hole drilled in the surface of the rear leg;
Fig. 88 is a plan view showing an elongated guide hole formed in the front surface of the rear leg having the pedal frame;
Fig. 89 is a longitudinal cross-sectional view showing the structure of the rear leg when the slider and the pedal frame are moved to an upper stop position;
Fig. 90 is a rear view corresponds to Fig. 89 wherein it shows the connection of a slider joint link with a rear leg joint bar and the state of a rear leg lateral bar;
Fig. 91 is a longitudinal cross-sectional view showing the structure of the rear leg when the pedal frame is moved to a lower stop position while the slider is left in the upper stop position;
Fig. 92 is a rear view corresponding to Fig. 91, and it shows connection between the slider joint link and the rear leg joint link and the state of the rear leg lateral bar;
Fig. 93 is a longitudinal cross-sectional view showing the structure of the rear leg when the slider and the pedal frame are moved to the lower stop position;
Fig. 94 is a rear view corresponding to Fig. 93, and it shows the connection between the slider joint link and the rear leg joint link and the state of the rear leg lateral bar;
Fig. 95 is a perspective view showing a folding-in-two type baby buggy of this embodiment when it is unfolded;
Fig. 96 is a side elevation showing the folding-in-two type baby buggy shown in Fig. 95 when it is unfolded;
Fig. 97 is a side elevation showing the folding-in-two type baby buggy shown in Fig. 95 when it is folded up;
Fig. 98 is a side elevation showing the structure of the collapsible baby buggy of the eighth embodiment when it is unfolded;
Fig. 99 is a side elevation showing the structure of the collapsible baby buggy shown in Fig. 98 when it is folded up;
Fig. 100 is an enlarged view showing the principal elements of the baby buggy shown in Fig. 98;
Fig. 101 is an enlarged view showing the principal elements shown in Fig. 99;
Fig. 102A is a diagram showing the seating apparatus when it is unfolded;
Fig. 102B is a diagram showing the seating apparatus when it is folded up;
Fig. 103A is a diagram showing the seating apparatus when it is unfolded;
Fig. 103B is a diagram showing the seating apparatus when it is folded up;
Fig. 104A is a diagram showing the seating apparatus when it is unfolded;
Fig. 104B is a diagram showing the seating apparatus when it is folded up;
105A is a diagram showing the seating apparatus when it is unfolded;
Fig. 105B is a diagram showing the seating apparatus when it is folded up;
Fig. 106 is a perspective view of a push chair for the aged according to the ninth embodiment of the present invention;
Fig. 107A shows the push chair when it is unfolded, Fig. 107B shows the course of the folding up action of the push chair;
Fig. 107C shows the push chair when it is folded up;
Fig. 108 is a side elevation showing a conventional collapsible baby buggy when it is unfolded; and
Fig. 109 is a side elevation showing a conventional collapsible baby buggy when it is folded up.

### DETAILED DESCRIPTION OF THE PREFERRED EMBODIMENTS

A plurality embodiments of the present invention, namely, first to ninth embodiments [(Embodiment 1) to (Embodiment 9)] of the present invention will first be briefly described, and their detailed descriptions will be provided subsequently.

### Movement System for Slider

The first to eighth embodiments (Embodiment 1 to Embodiment 8) have different systems for moving a slider so as to fold up or unfold a seating apparatus. In other words, the first and second embodiments (Embodiment 1 and Embodiment 2) employ two springs, i.e., a compression spring and a tension spring. If the slider is pushed down while the seating apparatus is unfolded, forces are stored in these two springs. The folding and unfolding of the seating apparatus are carried out by releasing these forces as required. The first embodiment (Embodiment 1) relates to a " folding-in-two type" seating apparatus in which a framework is folded and unfolded longitudinally. On the other hand, the second embodiment (Embodiment 2) relates to a "folding-in-four type" seating apparatus in which the framework is folded and unfolded both laterally and longitudinally.

The third embodiment (Embodiment 3) and the fourth embodiment (Embodiment 4) employ one compression spring. The seating apparatus is folded up by depressing the slider, as a result of which a force is stored in the compression spring. The seating apparatus is unfolded by releasing this force. The third embodiment (Embodiment 3) relates to the "folding-in-two type" seating apparatus, whereas the fourth embodiment (Embodiment 4) relates to the "folding-in-four type" seating apparatus.

The fifth embodiment (Embodiment 5) and the sixth embodiment (Embodiment 6) employ an electric motor to move the sliders so as to fold up the seating apparatus. The fifth embodiment (Embodiment 5) relates to the "folding-in-two type" seating apparatus, whilst the sixth embodiment (Embodiment 6) relates to "folding-in-four type" seating apparatus.

Moreover, the seventh embodiment (Embodiment 7) employs two tension springs, and forces are stored in these two springs by depressing a slider while the seating apparatus is unfolded. The folding and unfolding of the seating apparatus are carried out by releasing the forces as required. The seating apparatus of this embodiment includes two types of seating; namely, a folding-in-two type and a folding-in-four type.

The eighth embodiment (Embodiment 8) is characterized in that the seating apparatus is folded and unfolded by manually moving the slider.

### First Embodiment

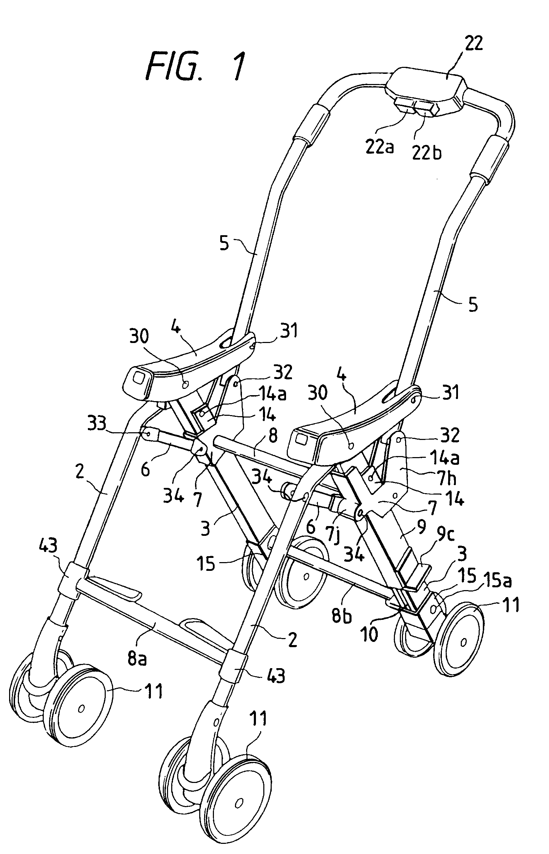

With reference to Figs. 1 through 10, the first embodiment will be described.

To make the concept of the invention clearer in drawings, a seating and associated accessories have been omitted.

As shown in Fig. 1, this collapsible baby buggy is provided with front legs 2, rear legs 3, arm rest members 4, press bars 5, and side bars 6, all of these components being common to the right half and the left half of this baby buggy. Because these components exist on both sides, the construction of the side member on only one side will be explained first.

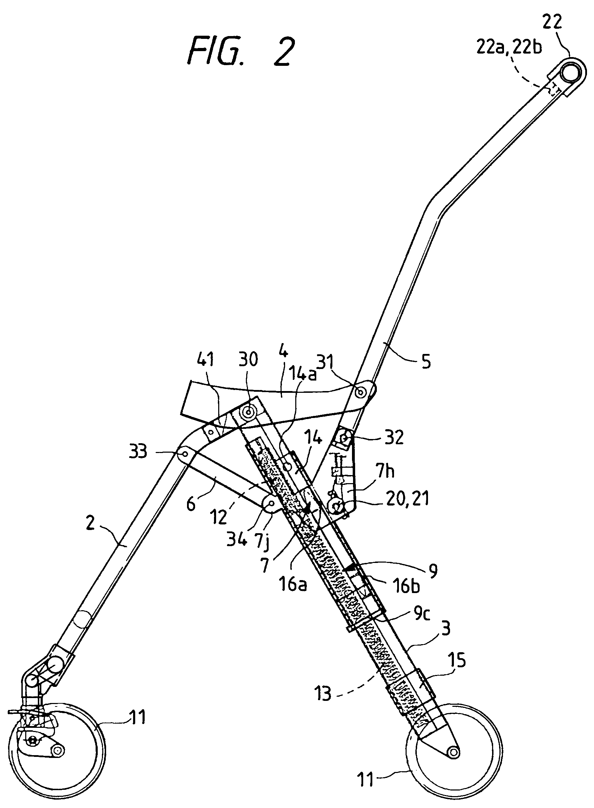

In Fig. 2, the upper ends of a front leg 2 and a rear leg 3 are pivotally hinged to a pivot pin 30. This pivot pin 30 is supported on both sides of an arm rest member 4 which has a rectangular U-shaped cross section and is oriented in the longitudinal direction of the baby buggy. The front leg 2 and the rear leg 3 are pivotally moved around the pivot pin 30 in the longitudinal direction of the baby buggy. The front leg 2 and the rear leg 3 are both provided with wheels 11.

A joint member 41 having a rectangular U-shaped cross section is attached to the upper end of the front leg 2. The upper end of the rear leg 3 is sandwiched between both sides of this joint member 41, and the joint member 41 and the upper end of the rear leg 3 are hinged to each other by the pivot pin 30. Unless the joint member 41 is used, the upper ends of the front leg 2 and the rear leg 3 are directly hinged to each other by the pivot pin 30.

In this embodiment, the front leg 2 is made of a round pipe, and the rear leg 3 is made of a pipe member having a rectangular parallelepiped cross section. The rear leg 3 is arranged in such a way that the axis along the pivot 30 is normal to the wide side surfaces of the rear leg 3. The shapes of the pipes are not particularly limited in this embodiment, and members having another shape are also usable.

A press bar 5 is pivotally hinged to the rear end of the arm rest member 4 by a pivot pin 31. This press bar 5 is made of a round pipe or the like. As shown in Fig. 1, the press bar 5 extends from the rear end of each of the right and left arm rest members 4, 4, and an upper portion of the press bar 5 is curved into a substantially U shape. The curved portions of the press bars 5 are connected together via a case 22 provided at the upper center of the baby buggy. This case 22 is provided with two operation buttons 22a, 22b. The press bar 5 can be inclined in a rearward direction at a desired angle by adjusting an interval between the pivot pin 30 and the pivot pin 31 of the arm rest member 4.

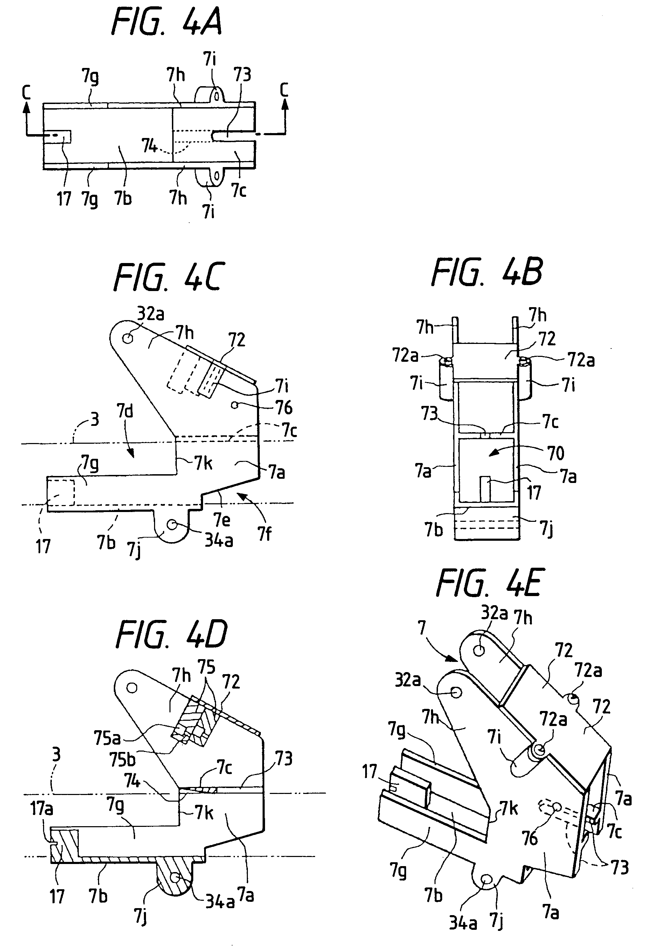

A slider 7 is fitted around the outer periphery of an upper part of the rear leg 3 in a slidable manner as shown in Figs. 4A through 4E.

To begin with, the construction common to the right and left sliders 7, 7 will be explained. As shown in the perspective view of Fig. 4E, the slider 7 is provided with a side plates 7a, 7a which are arranged parallel to each other in a symmetrical manner. As shown in Fig. 4B, the side plates 7a, 7a are connected to each other by a bottom plate 7b and a top plate 7c which are parallel to each other, thereby forming a rectangular parallelepiped internal cavity 70 through which the rear leg 3 passes in a slidable manner.

Unless the rear leg 3 is made of a rectangular pipe having a rectangular parallelepiped cross section, the cross section of the internal cavity 70 defined by the side plates 7a, 7a, the bottom plate 7b, and the top plate 7c of the slider 7 may be changed corresponding to the shape of the cross section of the rear leg 3.

As shown in Fig. 4C, the side plate 7a has a rectangular parallelepiped notch 7d and a notch 7f including a tapered portion 7e, and these notches 7d and 7f are positioned close to the side edge of the bottom plate 7b. The remaining portion around the notch 7d forms an extended piece 7g. An angularly projecting piece 7h, which is tapered and projects in an upward direction, is formed on the opposite upper side of the side plate 7a with respect to the tapered notch 7f. The projecting pieces 7h of the side plates 7a are spaced apart from each other by the top plate 7c. A recessed side edge 7k is formed between the projecting piece 7h and the extend piece 7g.

A through hole 32a is formed in an upper part of the projecting piece 7h, and a pivot pin 32 for connecting the press bar 5 with the slider 7 is supported by this through hole 32a.

As shown in Fig. 4E, the upper sides of the projecting pieces 7h, 7h are connected together by the indication plate 72. This indication plate 72 is screwed to support sections 7i, 7i formed outside the projecting pieces 7h, 7h with screws 72a, 72a.

Wire lock pieces 75 are mounted on the inner surface of the indication plate 72, as shown in Fig. 4D. These wire lock pieces 75 are provided for retaining the ends of two wires 23a, 23b which will be described later. A lock hole 75a is formed in each of the wire lock pieces 75 for locking the outer tube of each of the wires 23a, 23b, and a through hole 75b is further formed in this lock hole 75a so as to permit a metal wire in each of the wires 23a, 23b to pass through.

A protuberance 7j is formed at the bottom of the side plate 7a so as to project downward beyond the bottom plate 7b, and a through hole 34a for supporting a pivot pin 34 is drilled in this protuberance 7j. As shown in Fig. 2, the side bar 6 is hinged to an upper part of the front leg 2 by a pivot pin 33, and the rear end of this side bar 6 is connected to the pivot pin 34 of the protuberance 7j. As a result of this, the side bar 6 holds the front leg 2 and the rear leg 3 so that they are spaced apart from each other. Further, as will be described later, if the slider 7 moves along the rear leg 3 in the longitudinal direction thereof, the side bar 6 causes the front leg 2 to fold up.

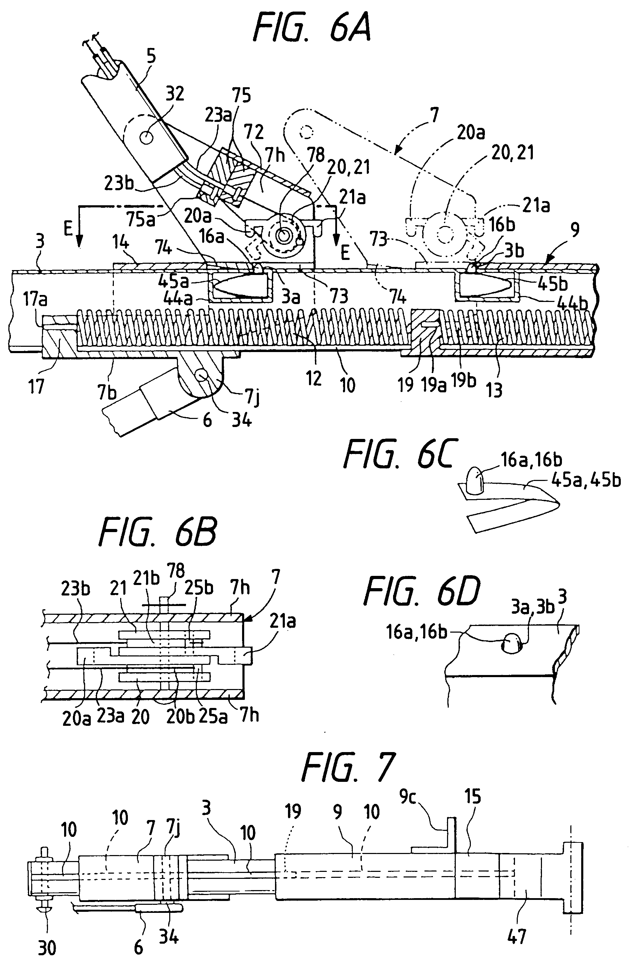

As shown in Fig. 4A or 4E, in the case of the slider 7 provided with a pedal frame 9, a lock piece 17 is mounted longitudinally in the center of the edge of the bottom plate 7b, and an elongated hole 73 is formed longitudinally at center of the edge of the top plate 7c in the direction in which the rear leg 3 is inserted into the slider 7. As shown in Fig. 4D, a slot 74 is tapered, in line with the hole 73, from the innermost end of the elongated hole 73 toward the opposite end of the top plate 7c so that the deepest part is the edge of the top plate opposite to the elongated hole 73, and the shallowest part is just next to the elongated hole 73. This guarantees that there is space, which is at least as large as the maximum projection of an upper knock pin 16a, between the outermost end of the tapered slot 74 of the top plate 7c and the surface of the rear leg 3. An upper knock pin 16a, which will be described later, first passes through the tapered slot 74 during the course of the upward movement of the slider 7 along the rear leg 3, and the upper knock pin 16a is then pressed to such an extent that the knock pin comes to a point below the rear leg 3. The moment the upper knock pin 16a reaches the elongated hole 73, the upper knock pin 16a projects away from the surface of the rear leg 3. This upper knock pin 16a is locked by the innermost end of the elongated hole 73, whereby the slider 7 is prevented from moving downward (see Fig. 6A).

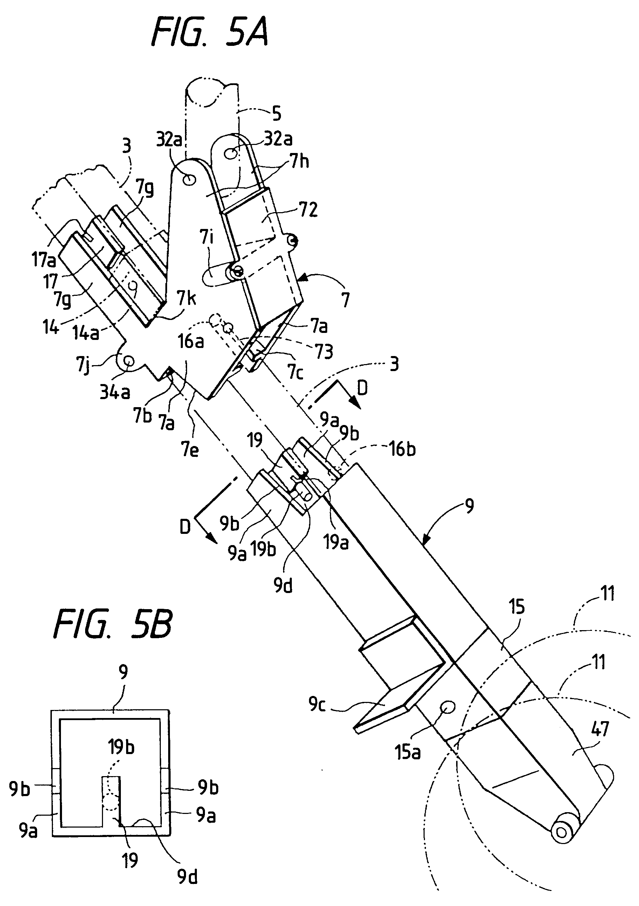

An upper stopper 14 having a rectangular cross section is fitted on one side of each of the upper portions of the right and left rear legs 3, 3, as shown in Fig. 1 or 2. This upper stopper 14 is attached to the rear leg 3 with a screw or a pin 14a or the like. It is attached to the rear leg 3 so as to make slidable contact with the longer side of the extended piece 7g of the slider 7, as shown in Fig. 5A. When the slider 7 is moved upward along the rear leg 3, the extended piece 7g of the slider 7 is guided while remaining in slidable contact with the upper stopper 14. The upward movement of the slider 7 is stopped the moment the recessed side edge 7k of the slider 7 comes into contact with the upper stopper 14.

A shaft bearing 47 is attached to the lower end of each of the right and left rear legs 3, 3 for supporting the shaft of the wheel 11, as shown in Fig. 5A. A lower stopper 15 is attached to the rear leg 3, at the position where the lower end is in contact with the upper end of the shaft bearing 47, by means of a screw or a pin 15a.

In Fig. 1, both ends of the lateral bar 8a are attached to front leg sleeve 43, 43 that are attached to the lower portions of the right and left front legs 2, 2. Similarly, a lateral bar 8 is connected between the right and left sliders 7, 7, and a lateral bar 8b is connected between the lower stoppers 15, 15 attached to lower portions of the right and left rear legs 3, 3. These lateral bars 8, 8a, and 8b are arranged in parallel with each other. As a result of this, the symmetry and rigidity of the right and left side members are ensured.

A folding mechanism of this embodiment will be described in detail with particular attention being focused on the left rear leg 3 (hereinafter referred to as the rear leg) when the baby buggy is viewed from its rear to front. The main power source for the folding mechanism is provided on the left rear leg 3, which allows for convenience of operation. As a matter of course, the main power source can be provided on the right rear leg 3.

As shown in Fig. 5A, the slider 7 is provided on top of the rear leg 3, and the pedal frame 9 is fitted around the rear leg 3 in such a way as to be slidable in the longitudinal direction of the rear leg 3.

Projections 9a, 9a including tapered portions 9b, 9b are formed at the upper side of the pedal frame 9, and the tapered portions 9b, 9b correspond to the tapered portions 7e, 7e of the slider 7. When the pedal frame 9 is moved upwards, the tapered portions 9b, 9b of the pedal frame 9 and the tapered portions 7e, 7e of the slider 7 come into slidable contact with each other. As a result, these tapered portions interlock with each other, and the pedal frame 9 is stopped.

On the other hand, when the pedal frame 9 moves downward along the rear leg 3, the lower end of the pedal frame 9 comes into contact with the upper end of the lower stopper 15 attached to the lower portion of the rear leg 3. A pedal 9c is mounted to the outer side surface of the pedal frame 9 so as to project outwardly. When the overall pedal frame 9 is moved downwardly, the user depresses the pedal frame 9 with their foot on this pedal 9c.

A lock piece 19 is fixed longitudinally at the center of the edge of an inner bottom surface 9d sandwiched between the projections 9a, 9a of the pedal frame 9, as shown in Fig. 5B. A locking rod 19b projects from the lower end of this lock piece 19 for locking the upper end of a compression spring 13 which will be described later.

Fig. 6A is a center longitudinal cross sectional view showing the rear leg 3 having the pedal frame 9. In the drawing, the slider 7 is brought into contact with the upper stopper 14 at the upper stop position, and the pedal frame 9 is brought into contact with the lower stopper 15 at the lower stop position.

Fig. 7 is a plan view showing the front surface of the rear leg 3 provided with the pedal frame 9. An elongated guide hole 10 is formed in the front surface of the rear leg 3 along the substantial center from the upper end to the lower end of the rear leg 3.

In Fig. 6A, the lock piece 17 of the slider 7 and the lock piece 19 of the pedal frame 9 project into the inside of the rear leg 3 through the elongated guide hole 10. The lock piece 17 of the slider 7 is attached to an upper end 12a of a tension spring 12, whereas the lock piece 19 of the pedal frame 9 is attached to a lower end 12b of the same. This tension spring 12 is fixed in such an ordinary manner that the ends of the tension spring 12 are respectively hooked to a notch 17a (Fig. 4d) formed in the lock piece 17 and a notch 19a formed in the lock piece 19.

With the previously mentioned configuration, the slider 7 and the pedal frame 9 are connected together by the tension spring 12.

The upper end of the compression spring 13 is fitted to the locking rod 19b (see Fig. 5A) projecting from the lower end of the lock piece 19 of the pedal frame 9. The lower end of the compression spring 13 is brought into contact with a bottom 3c of the rear leg 3. In this way, the compression spring 13 is sandwiched between the pedal frame 9 and the bottom 3c of the rear leg 3. It may be possible to fit the lower end of the compression spring 13 to a locking rod in the same manner as its upper end fits to the lock rod by further providing a locking rod (not shown) so as to stand upright on the bottom 3c of the rear leg 3.

Although a coil spring is used for the tension spring 12 and the compression spring 13 in the above construction, another elastic member, for example, a gas spring can be used for the compression spring 13. With the gas spring, a piston rod moves back and forth under the pressure of gas compressed within a gas-filled piston body.

The tension spring 12 and the compression spring 13 are housed within the rear leg 3 in the above configuration. However, both springs 12, 13 may be provided outside the rear leg 3. In this case, though not being shown in the drawings, the lock piece 17 of the slider 7 and the lock piece 19 of the pedal frame 9 may be provided so as to project outside the rear leg 3. A projection piece is further provided on the outside of the lower end of the rear leg 3, and the tension spring 12 is provided between the lock pieces of the slider 7 and the pedal frame 9. The compression spring 13 or a gas spring may be provided between the lock piece of the pedal frame 9 and the projection piece of the rear leg 3.

A hole 3a (see Fig. 6D) is formed in the side surface of the rear leg 3 so as to be in alignment with the innermost end of the elongated hole 73 (see Fig. 4A) of the top plate 7c of the slider 7 when the slider is located at the upper stop position and remains in contact with the upper stopper 14, as shown in Fig. 6A. A spring chamber 44a is formed inside the rear leg 3 corresponding to the hole 3a, and a folded leaf spring 45a is housed in this spring chamber 44a. As shown in Fig. 6C, the upper knock pin 16a is mounted on the leaf spring 45a, and this upper knock pin 16a projects out of the hole 3a while being resiliently supported by the leaf spring 45a.

On the other hand, a hole 3b (see Fig. 6D) is formed in the side surface of the rear leg 3 so as to be in alignment with the upper edge of the pedal frame 9 when the pedal frame is located at the lower stop position and remains in contact with the lower stopper 15, as shown in Fig. 6A. As with the spring chamber 44a, a spring chamber 44b is formed inside the rear leg 3 corresponding to the hole 3b, and a folded leaf spring 45b is provided in the spring chamber 44b. A lower knock pin 16b is attached to the leaf spring 45b, as shown in Fig. 6C. Moreover, the knock pin 16b projects out of the hole 3b while being resiliently supported by the leaf spring 45b, as shown in Fig. 6D.

The projections 7h, 7h of the slider 7 are respectively provided with two rotating plates 20 and 21 supported by a support shaft 78, as shown in Fig. 6B. These rotating plates 20 and 21 independently rotate and return to their original positions by means of torsion springs (not shown). The rotating plates 20 and 21 are provided with outer peripheral slots 20b and 21b, respectively. The wires 23a and 23b are provided around the outer peripheral slots 20b and 21b in a direction of reverse of rotation, and pins 25a and 25b attached to the leading ends of the wires 23a and 23b engage with the peripheries of the rotating plates 20 and 21. Furthermore, the rotating plates 20 and 21 have protuberances 20a and 21a, respectively, as shown in Fig. 6A.

The wires 23a and 23b are respectively connected to the two operation buttons 22a and 22b provided at an upper part of the press bar 5 through the inner cavity of the press bar 5, as shown in Fig. 6A. The internal structure of these operation buttons 22a and 22b is omitted from the drawings. However, the ends of the wires 23a and 23b may be locked to the outer peripheries of pulleys (not shown), and these pulleys may then be rotated in conjunction with the pressing action of each of the operation buttons 22a and 22b, whereby the wires 23a and 23b are drawn. As a result of the drawing action of the wires 23a and 23b, either the rotating plate 20 or the rotating plate 21 rotates around the support shaft 78. One of the protuberances 20a and 21a of the rotating plates 20 and 21 rotates, and the corresponding upper knock pin 16a or lower knock pin 16b is pressed to such an extent that the knock pin comes into a point below the surface of the rear leg 3.

When the slider 7 moves upward again from the lower position (designated by a phantom line shown in Fig. 6A) to an upper position, the tapered slot 74 formed on the inner surface of the top plate 7c of the slider 7 presses down the upper knock pin 16a to such an extent that the knock pin 16a comes to the point below the surface of the rear leg 3, as shown in Fig. 6A. Hence, the upward movement of the slider 7 is not hindered by the upper knock pin 16a.

The operation of the collapsible baby buggy having the above mentioned construction according to this embodiment will now be described.

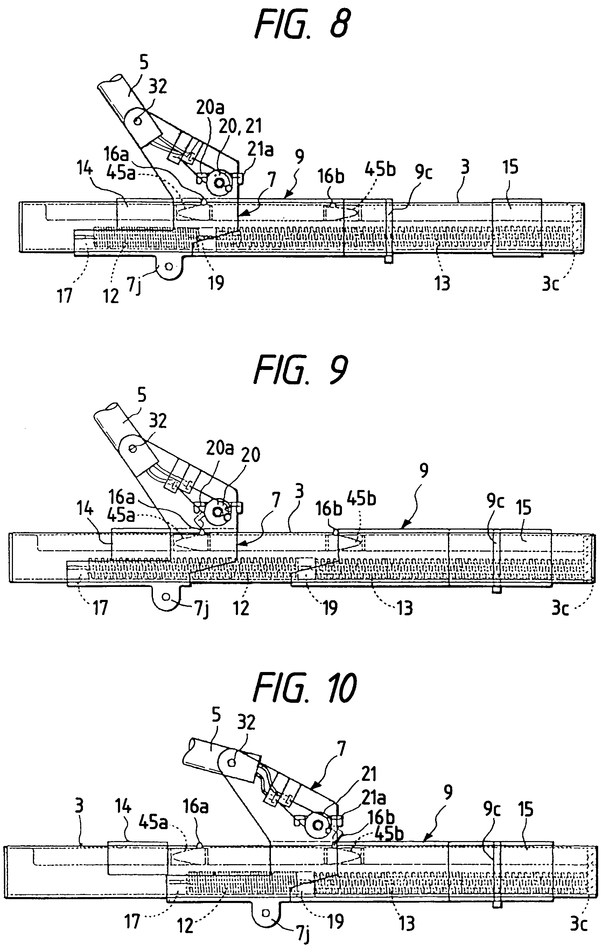

Fig. 8 shows the slider 7 and the pedal frame 9 when they are located at the upper stop position. The state of the slider and the pedal frame shown in this drawing corresponds to the state of the seatinging apparatus shown in Fig. 2. The side bar 6 pushes the front leg 2 in a forward direction, so that the legs are opened. Simultaneously, the press bar 5 is tilted in a rearward direction around the pivot pin 31 attached to the rear end of the arm rest member 4, whereby the baby buggy is unfolded.

With the baby buggy in the unfolded state as shown in Fig. 8, the upper stopper 14 hinders the upward movement of the slider 7, and the upper knock pin 16a projects to the outside so as to engage with the elongated hole 73 of the slider 7 (see Fig. 6A). The upper knock pin 16a comes into contact with the innermost end of the elongated hole 73, whereby the slider 7 can move neither upward nor downward.

Though the pedal frame 9 is urged upwards by means of the resilient forces of the tension spring 12 and the compression spring 13, it is held stop while remaining in contact with the lower end of the slider 7.

In Fig. 8, when the pedal frame 9 is located at the upper stop position, the lower knock pin 16b is kept pressed down by the inner wall surface of the pedal frame 9. Hence, the downward movement of the pedal frame 9 is not hindered by the lower knock pin 16b.

If the pedal frame 9 is pushed down along the rear leg 3 until it comes into contact with the lower stopper 15, as shown in Fig. 9, the upper edge of the pedal frame 9 is engaged with the lower knock pin 16b projecting outside by the resilient force of the leaf spring 45b having been released from the compressed state. At this time, the pedal frame 9 is prevented from moving upwards and is held in a locked state.

In this state, the tension spring 12 is downwardly stretched, whilst the compression spring 13 is compressed downwardly. At this time, resilient energy is stored in both the tension spring 12 and the compression spring 13. Specifically, the tension spring 12 possesses a drawing force for urging the slider 7 downwardly, whereas the compression spring 13 possesses a restoring force for urging the pedal frame 9 upwardly. The upward movement of the pedal frame 9 is prevented by the lower knock pin 16b, whereas the lower movement of the slider 7 is prevented by the upper knock pin 16a. In this way, the pedal frame 9 and the slider 7 are held in a locked state.

When the rotating plate 20 rotates as a result of the pressing of either the operation button 22a or 22b, the protuberance 20a of the rotating plate 20 presses the upper knock pin 16a, whereby the slider 7 is released from its locked state. At this time, the drawing force of the tension spring 12 is released, and the slider 7 is moved downward along the rear leg 3. As shown in Fig. 10, the slider 7 comes to a stop when the lower end of the slider 7 comes into contact with the upper edge of the pedal frame 9. throughout this operation, the right and left sliders 7, 7 are connected together by the lateral bar 8, and hence the slider 7 without the pedal frame 9 is also moved downwards.

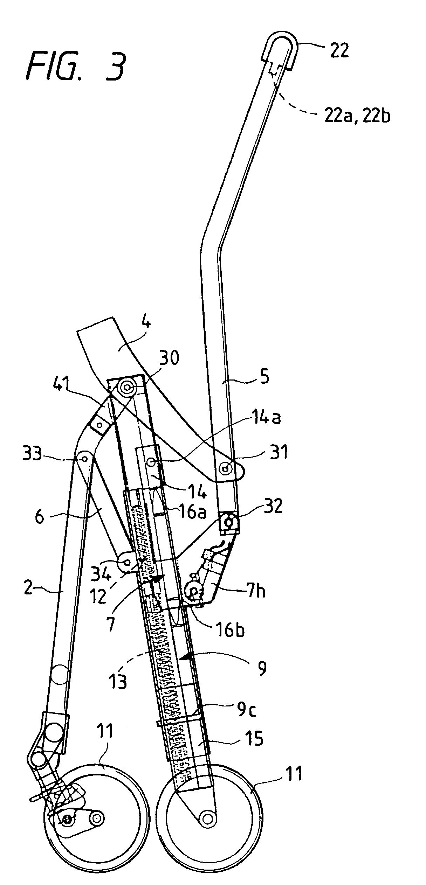

In conjunction with the downward movement of the right and left sliders 7, 7, the right and left front legs 2, 2 are folded toward the rear legs 3, 3 via the side bars 6, 6, as shown in Fig. 3. Concurrently, the hinged portions (the pivot pins 32, 32) between the sliders 7, 7 and the press bars 5, 5 move downward, so that the hinged portions (the pivot pins 31, 31) between the press bars 5, 5 and the right and left arm rest members 4, 4 also move downward. As a result of this, the arm rest members 4, 4 rotate around the hinged portions (the pivot pins 30, 30) between the arm rest members 4, 4 and the upper ends of the rear legs 3, 3. The rear portions of the arm rest members 4, 4 are then tilted downwardly. In this way, the overall framework of the baby buggy is folded up only in the longitudinal direction thereof, as shown in Fig. 3.

When the rotating plate 21 rotates as a result of the pressing action of the other button of the operation buttons 22a and 22b, as shown in Fig. 10, the protuberance 21a of the rotating plate 21 presses down the lower knock pint 16b, so that the pedal frame 9 is released from its locked state. At this time, the restoring force of the compression spring 13 is released, so that the pedal frame 9 is moved upwardly. Simultaneously, the pedal frame 9 pushes up the slider 7, as a result of which the slider 7 again comes into contact with the upper stopper 14 and is held in the stopped state. At this time, the upper knock pin 16a prevents the downward movement of the slider 7 again.

Associated with the upward movement of this slider 7, the right and left arm rest members 4, 4 and the right and left press bars 5, 5 operate in reverse when compared with their folding movement. As a result, the right and left front legs 2, 2, the right and left arm rest members 4, 4, and the right and left press bars 5, 5 return to their unfolded states as shown in Fig. 2.

In the above construction, in the even that the tension spring 12 is removed from the rear leg 3, a downward drawing force will not act on the slider 7 even when the pedal frame 9 has been moved down to the lower stop position, and hence the framework will not be folded up. However, if the framework is designed so as to be manually folded up, the baby buggy does not require the tension spring 12.

Further in the above construction, if the compression spring 13 is removed from the rear leg 3, the upward restoring force will not act on the pedal frame 9 even when the pedal frame 9 is released from its locked state after having been moved to the lower stop position. For this reason, the slider 7 is not moved upward, and therefore the framework is not unfolded. However, if the framework is designed so as to be manually unfolded, the baby buggy does not require the compression spring 13.

### Second Embodiment

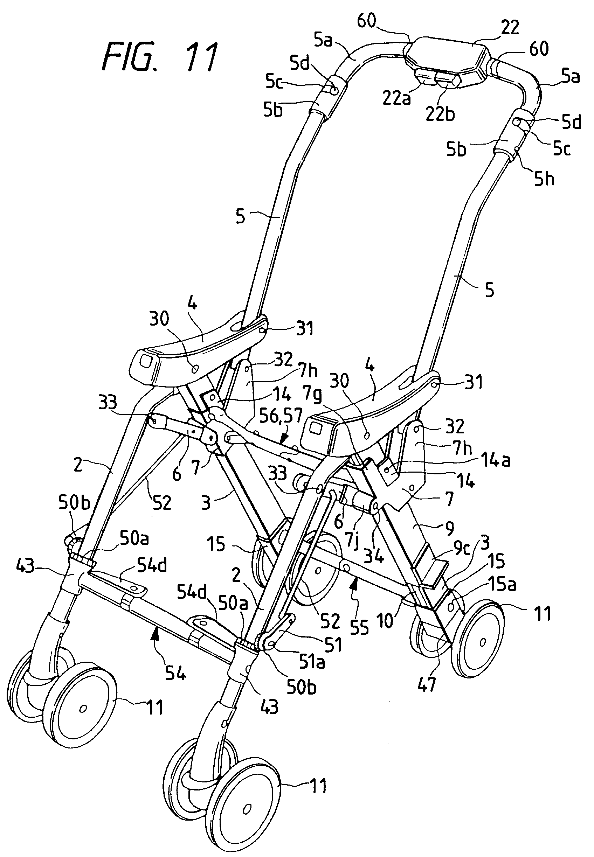

With reference to Figs. 11 through 29, the second embodiment will be described.

To make the concept of the invention clearer in the drawings, a seat and associated accessories have been omitted.

As shown in Fig. 11, this collapsible baby buggy is provided with front legs 2, rear legs 3, arm rest members 4, press bars 5, and side bars 6, all of these components being common to the right half and the left half of the baby buggy. Because these components exist on both sides, the construction of the side member on only one side will be explained first.

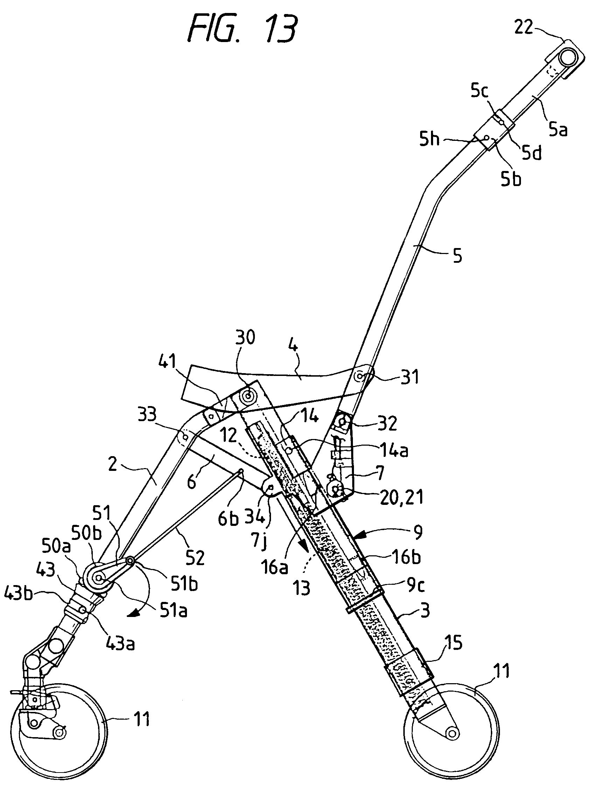

In Fig. 13, the upper ends of a front leg 2 and a rear leg 3 are pivotally hinged to a pivot pin 30. This pivot pin 30 is supported on both sides of an arm rest member 4 which has a rectangular U-shaped cross section and is oriented in the longitudinal direction of the baby buggy. The front leg 2 and the rear leg 3 are pivotally moved around the pivot pin 30 in the longitudinal direction of the baby buggy. The front leg 2 and the rear leg 3 are both provided with wheels 11.

A joint member 41 having a rectangular U-shaped cross section is attached to the upper end of the front leg 2. The upper end of the rear leg 3 is sandwiched between both sides of this joint member 41, and the joint member 41 and the upper end of the rear leg 3 are hinged to each other by the pivot pin 30. Unless the joint member 41 is used, the upper ends of the front leg 2 and the rear leg 3 are directly hinged to each other by the pivot pin 30.

In this embodiment, the front leg 2 is made of a round pipe, and the rear leg 3 is made of a pipe member having a rectangular parallelepiped cross section. The rear leg 3 is arranged in such a way that the axis along the pivot 30 is normal to the wide side surfaces of the rear leg 3. The shapes of the pipes are not particularly limited in this embodiment, and members having another shape are also usable.

A press bar 5 is pivotally hinged to the rear end of the arm rest member 4 by a pivot pin 31. This press bar 5 is made of a round pipe or the like. The press bar 5 can be inclined in a rearward direction at a desired angle by adjusting an interval between the pivot pin 30 and the pivot 31 of the arm rest member 4. As shown in Fig. 13, a sleeve 5b is attached to the upper end of the press bar 5 by a screw or a pin 5h, and an elongated guide hole 5c is formed in the outer periphery of the sleeve 5b. The head of a screw or a pin 5d attached to a collapsible bar 5a disposed above the sleeve 5b is engaged with the elongated guide hole 5c, as a result of which the collapsible bar 5a becomes circumferentiall rotatable in relation to the press bar 5.

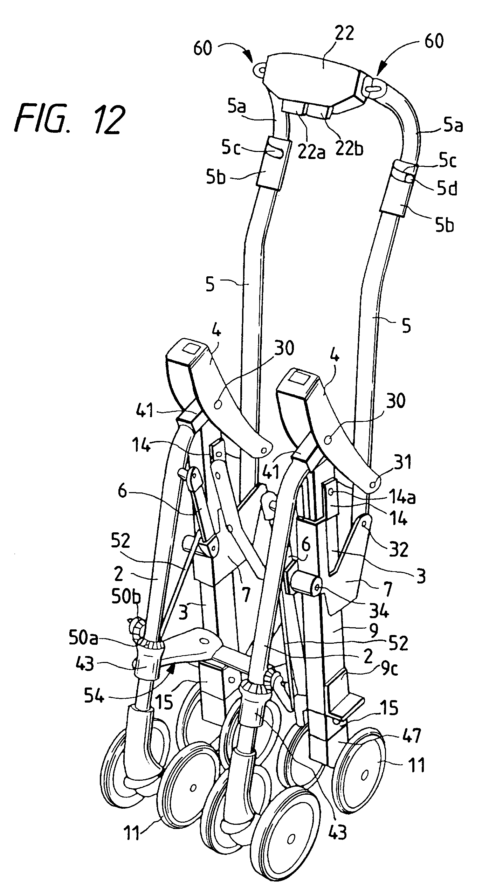

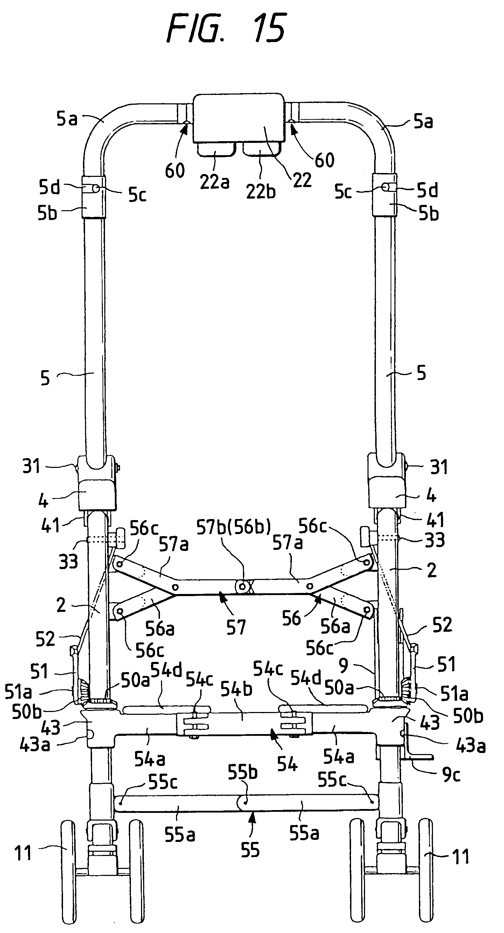

As shown in Fig. 15, the combination of the press bar 5 and the collapsible bar 5a are provided on both sides with respect to the longitudinal center of the framework of the baby buggy. The right and left collapsible bars 5a, 5a are respectively hinged to joint members 60, 60 on both sides of a button case 22 provided at the upper longitudinal center of the framework by means of pivot pins 60c. As a result, it becomes possible to fold the framework in a rearward direction by turning the right and left collapsible bars 5a, 5a around the respective press bars 5, 5, as shown in Fig. 12.

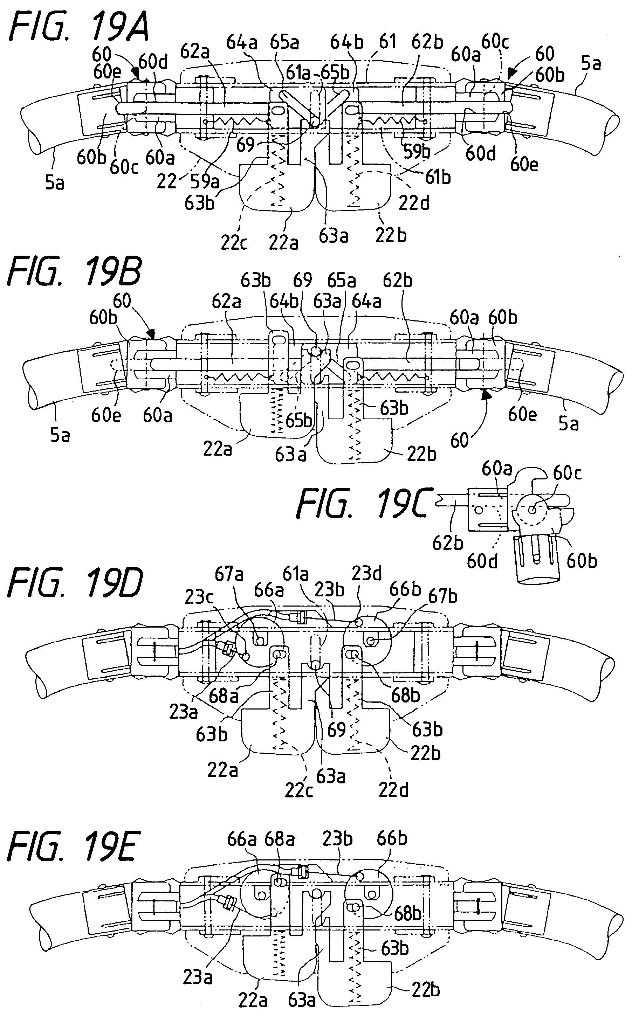

With reference to Figs. 19A through 19C, the folding structure of the joint member 60 will be described. A case body 61 (designated by a phantom line) is housed in the button case 22. Each of the joint members 60, 60 is made up of an inner member 60a and an outer member 60b which are fitted together in a collapsible manner. The inner member 60a is attached to the case body 61 and the outer member 60b is attached to the collapsible bar 5a. The inner member 60a and the outer member 60b are jointed together by a pivot pin 60c in such a way as to be collapsible in a substantially horizontal direction.

A through hole 60d is formed through the inner member 60a, whereas an insertion hole 60e is formed in the outer member 60b. Right and left rods 62a and 62b, which will be described later, are simultaneously insertable into the through holes 60d and 60e. As a result of the insertion of the right and left rods 62a and 62b into the through holes 60d and 60e, the inner members 60a and the outer members 60b are locked, whereby it the becomes impossible to fold the inner and outer members.

When the right and left rods 62a and 62b are moved to the center of the case body 61, the inner member 60a and the outer member 60b on both sides of the button case are released from the locked state, whereby the collapsible bars 5a, 5a become freely collapsible in a substantially horizontal direction in relation to the button case 22.

The button case 22 is made up of a horizontal movement mechanism including right and left rods 62a and 62b shown in Figs. 19A and 19B, and a drawing mechanism including wires 23a and 23b shown in Figs. 19D and 19E. To make the drawings clear, Figs. 19A through 19E respectively illustrate each of the mechanisms. However, these mechanisms are all housed within the case body 61.

An elongated hole 61a (designated by a phantom line) is formed at the substantial center of the case body 61, as shown in Figs. 19A and 19B. Two operation buttons 22a and 22b are provided at a lower portion of the case body 61, and they are vertically movable by downward restoring forces of compression springs 22c and 22d incorporated in the respective operation buttons 22a and 22b. A pin lock member 63a and a pin pivot member 63b are arranged side by side and project upwardly from each of the operation buttons 22a and 22b.

Upper and lower horizontal channels 61b are formed in the case body 61, and guide sliders 64a and 64b are respectively disposed in the horizontal channels 61b in such a way as to be horizontally slidable along the channels. The previously mentioned rods 62a and 62b are horizontally attached to the outer edges of the guide sliders 64a and 64b, respectively. As mentioned before, the rods 62a and 62b pass through the through holes 60d of the right and left inner members 60a and enter the insertion holes 60e of the right and left outer members 60b.

A diagonally elongated hole 65a is formed so as to extend from the corner of the guide slider 64a close to the pin lock member 63a of the operation button 22a, and a diagonally elongated hole 65b is formed so as to extend from the corner of the guide slider 64b close to the pin lock member 63a of the operation button 22b. A guide pin 69 is engaged with the elongated hole 61a of the case body 61, as well as being engaged with the longitudinally elongated holes 65a and 65b. The guide pin 69 is further received by recesses formed in upper portions of the pin lock members 63a. The guide sliders 64a and 64b are respectively pulled by springs 59a and 59b which possess drawing forces in the direction opposite to the leading ends of the rods 62a and 62b. As described above, the horizontal moving mechanisms of the right and left operation buttons 22a and 22b are symmetrically provided about the longitudinal center of the framework of the baby buggy. As can be seen from Fig. 19B, if, for example, the left operation button 22a is pressed, the guide pin 69 engaged with the pin lock member 63a moves upward along the elongated hole 61a of the case body 61, and simultaneously the guide pin 69 simultaneously follows the diagonally elongated hole 65 of the left guide slider 64a. As a result, the guide slider 64a moves in a rightward direction along the horizontal channel 61b. Associated with the rightward movement of the guide slider, the left rod 62a attached to the left guide slider 64a also moves in the rightward direction, and hence the leading end of the left rod 62a is removed from the insertion hole 60e of the left outer member 60b, whereby the left joint member 60 becomes collapsible.

This series of operation also affects the right slider 64b and the right rod 62b in the same manner the instant the left operation button 22a is pressed up. Therefore, both rods 62a and 62b move inwardly by simply pressing the left operation button 22a, which affect the right and left joint members 60, 60. As a result, it becomes possible to simultaneously fold the right and left collapsible bars 5a, 5a in a substantially horizontal direction (see Fig. 19C).

The right operation button 22b, the right guide slider 64b, the right rod 62b are the same in configuration as their left side counterparts. The right operation button 22b operates in the same manner as the left operation button 22a. Therefore, even if either the left operation button 22a or the right operation button 22b is pressed up, both the right and left rods 62b and 62a move inwardly.

The operation buttons 22a and 22b are individually provided so as to separately draw the two wires 23a and 23b.

Pulleys 66a and 66b are provided side by side in the case body 61 so as to be rotatable around respective center shafts 67a and 67b, as shown in Figs. 19D and 19E. Wire lock pins 23c and 23d, to which the leading ends of the wires 23a and 23b are respectively fixed, are attached to the outer peripheries of the pulleys 66a and 66b, respectively. Further, lock pins 68a and 68b are attached to the outer peripheries of the pulleys 66a and 66b. These lock pins 68a and 68b are rotatively engaged with the pin pivot members 63a and 63b projecting from the operation buttons 22a and 22b. As a result of this, the respective pulleys 66a and 66b rotate around the center shafts 67a and 67b in conjunction with the upward movement of the operation buttons 22a and 22b, whereby the wires 23a and 23b can be drawn.

These wires 23a and 23b pass through the inside of the collapsible rods 5a and the press bars 5, and they are guided by sliders 7 which will be described later. The thus guided wires individually rotate two rotating plates 20 and 21 respectively provided in the sliders 7. The corresponding wire 23a or 23b is drawn as a result of the pressing action of the operation button 22a or 22b. As previously mentioned, either the operation button 22a or the operation button 22b is pressed up, and the right and left rods 62a and 62b move inwardly at the same time, whereby it becomes possible to fold the right and left collapsible rods 5a, 5a in the manner as shown in Fig. 12.

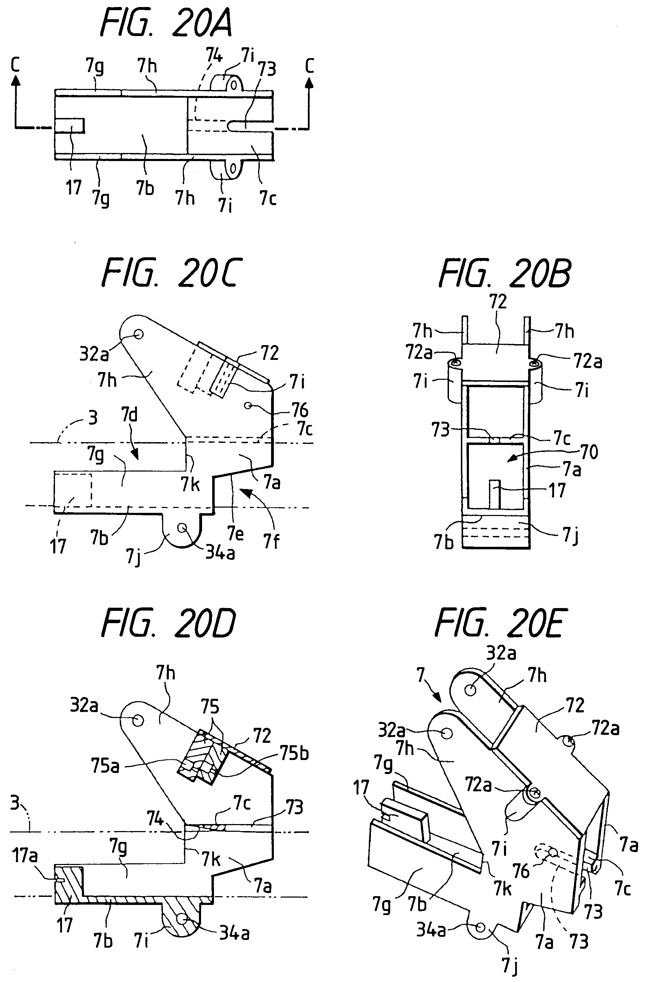

The slider 7 is fitted around the outer periphery of an upper part of the rear leg 3 in a slidable manner as shown in Figs. 20A through 20E. To begin with, the construction common to the right and left sliders 7, 7 will be explained. As shown in the perspective view of Fig. 20E, the slider 7 is provided with a side plates 7a, 7a which are arranged parallel to each other in a symmetrical manner. As shown in Fig. 20B, the side plates 7a, 7a are connected to each other by a bottom plate 7b and a top plate 7c which are parallel to each other, thereby forming a rectangular parallelepiped internal cavity 70 through which the rear leg 3 passes in a slidable manner.

Unless the rear leg 3 is made of a rectangular pipe having a rectangular parallelepiped cross section, the cross section of the internal cavity 70 defined by the side plates 7a, 7a, the bottom plate 7b, and the top plate 7c of the slider 7 may be changed corresponding to the shape of the cross section of the rear leg 3.

As shown in Fig. 20C, the side plate 7a has a rectangular parallelepiped notch 7d and a notch 7f including a tapered portion 7e, and these notches 7d and 7f are positioned close to the side edge of the bottom plate 7b. The remaining portion around the notch 7d forms an extended piece 7g. An angularly projecting piece 7h, which is tapered and projects in an upward direction, is formed on the opposite upper side of the side plate 7a in relation to the tapered notch 7f. The projecting pieces 7h of the side plates 7a are spaced apart from each other by the top plate 7c. A recessed side edge 7k is made between the projecting piece 7h and the extend piece 7g. A through hole 32a is formed in an upper part of the projecting piece 7h, and a pivot pin 32 for connecting the press bar 5 with the slider 7 is supported by this through hole 32a.

As shown in Fig. 20E, the upper sides of the projecting pieces 7h, 7h are connected together by the indication plate 72. This indication plate 72 is screwed to support sections 7i, 7i formed outside the projecting pieces 7h, 7h with screws 72a, 72a.

Wire lock pieces 75 are mounted on the inner surface of the indication plate 72, as shown in Fig. 20D. These wire lock pieces 75 are provided for retaining the ends of the previously described two wires 23a and 23b. A lock hole 75a is formed in each of the wire lock pieces 75 for locking the outer tube of each of the wires 23a, 23b, and a through hole 75b is further formed in this lock hole 75a so as to permit a metal wire in each of the wires 23a, 23b to pass through.

A protuberance 7j is formed at the bottom of the side plate 7a so as to project downward beyond the bottom plate 7b, and a through hole 34a for supporting a pivot pin 34 is drilled in this protuberance 7j. As shown in Fig. 13, the side bar 6 is hinged to an upper part of the front leg 2 by a pivot pin 33, and the rear end of this side bar 6 is connected to the pivot pin 34 of the protuberance 7j. As a result of this, the side bar 6 holds the front leg 2 and the rear leg 3 so that they are spaced apart from each other. Further, as will be described later, if the slider 7 moves along the rear leg 3 in the longitudinal direction thereof, the side bar 6 causes the front leg 2 to fold up.

The characteristic structure of the slider 7 of the one rear leg 3 (hereinafter referred to as the rear leg 3) having the pedal frame 9 which will be described later. In addition to the previously mentioned structure, as shown in Fig. 20A or 20E, a lock piece 17 is mounted at the longitudinal center around the edge of the bottom plate 7b, and an elongated hole 73 is formed at the longitudinal center around the edge of the top plate 7c in the direction in which the rear leg 3 is inserted into the slider 7. As shown in Fig. 20D, a tapered slot 74 is formed in the inner surface of the top plate 7c in line with the elongated hole 73.

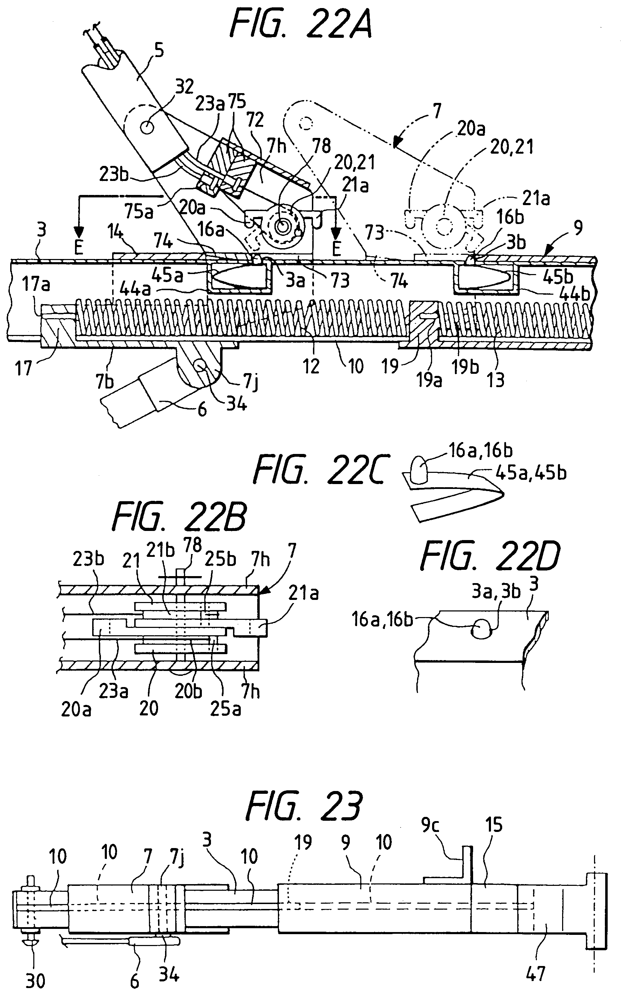

This slot 74 is tapered from the innermost end of the elongated hole 73 toward the opposite end of the top plate 7c so that the deepest part is the edge of the top plate opposite to the elongated hole 73, and the shallowest part is just next to the elongated hole 73. This guarantees that there is space, which is at least as large as the maximum projection of an upper knock pin 16a, between the outermost end of the tapered slot 74 of the top plate 7c and the surface of the rear leg 3. An upper knock pin 16a, which will be described later, first passes through the tapered slot 74 during the course of the upward movement of the slider 7 along the rear leg 3, and the upper knock pin 16a is then pressed to such an extent that it comes to a position below the surface of the rear leg 3. The moment the upper knock pin 16a comes to the elongated hole 73, the upper knock pin 16a projects away from the surface of the rear leg 3. This upper knock pin 16a is locked by the innermost end of the elongated hole 73, whereby the slider 7 is prevented from moving downward (see Fig. 22A).

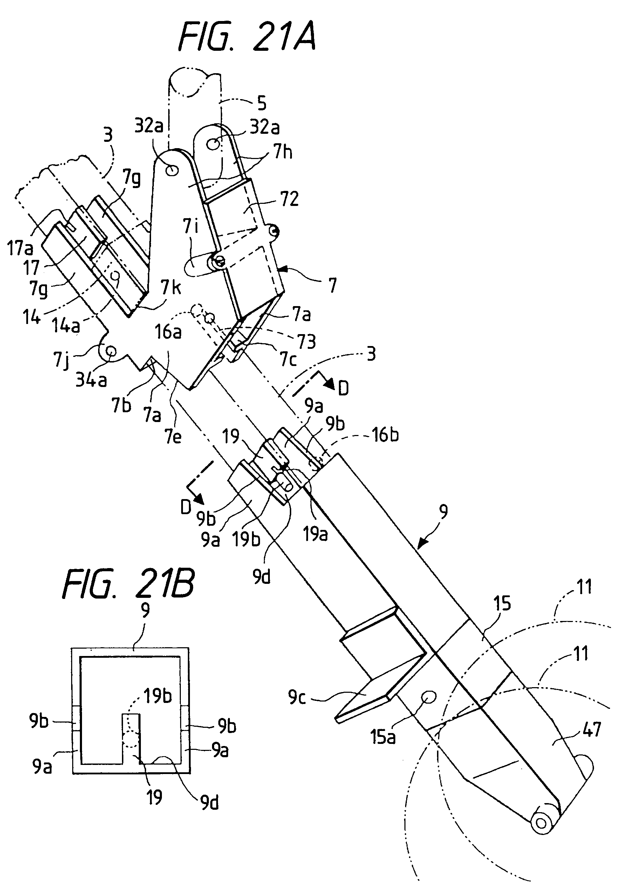

An upper stopper 14 having a rectangular cross section is fitted on one side of each of the upper portions of the right and left rear legs 3, 3, as shown in Fig. 11 or 12. It is attached to the rear leg 3 with a screw or a pin 14a or the like. This upper stopper 14 is attached to the rear leg 3 so as to make slidable contact with the longer side of the extended piece 7g of the slider 7, as shown in Fig. 21A. When the slider 7 is moved upward along the rear leg 3, the extended piece 7g of the slider 7 is guided while remaining in slidable contact with the upper stopper 14. The upward movement of the slider 7 is stopped the moment the recessed side edge 7k of the slider 7 comes into contact with the upper stopper 14.

A shaft bearing 47 is attached to the lower end of each of the right and left rear legs 3, 3 for supporting the shaft of the wheel 11, as shown in Fig. 21A. A lower stopper 15 is attached the rear leg 3, at the position where the lower end is in contact with the upper end of the shaft bearing 47, by means of a screw or a pin 15a.

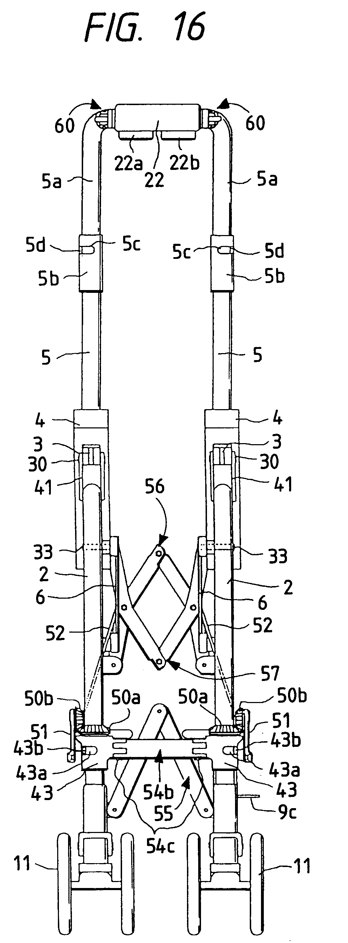

As shown in Fig. 15 or 16, front leg sleeve 43, 43 are rotatively attached to predetermined lower portions of the right and left front legs 2, 2. Specifically, a pin or a screw 43b (see Fig. 16) is attached to the predetermined lower position of the front leg 2 with its head projecting outside. The elongated guide hole 43a circumferentially formed in the front leg sleeve 43, and the head of the screw 43b is located on this. The front leg sleeve 43 is rotatable within the range of the length of the elongated guide hole 43a.

Further, as shown in Fig. 15, the right and left front leg sleeves 43, 43 are connected together by a front leg lateral bar 54. The front leg lateral bar 54 is made up of right and left lateral bar members 54a, 54a with a center lateral bar member 54b sandwiched between them. The lateral bar members 54a, 54a and the center lateral bar member 54 are hinged to each other by two pivot pins 54c, 54c. The right and left front leg sleeves 43, 43 rotate rearwardly in opposite directions, whereby the lateral bar 54 can be folded into a U-shaped form in a substantially rearward direction around the right and left pivot pins 54c, 54c (see Fig. 12).

In Fig. 15, first bevel gears 50a, 50a are respectively fitted around the outer peripheries of the front leg sleeves 43, 43. One of the first bevel gears 50a, 50a will now be explained. A second bevel gear 50b which meshes with the first bevel gear 50a is attached to the outside of the front leg 2 so as to be rotatable around a pivot pin 51a (see Fig. 13). A rocking piece 51 projects from this second bevel gear 50b.

Further, as shown in Fig. 13, a joint bar 52 with both ends thereof being bent into a L-shaped form is rotatively hooked between a through hole 51b formed in the vicinity of the leading end of the rocking piece 51 and the through hole 6b formed at some point in the side bar 6.

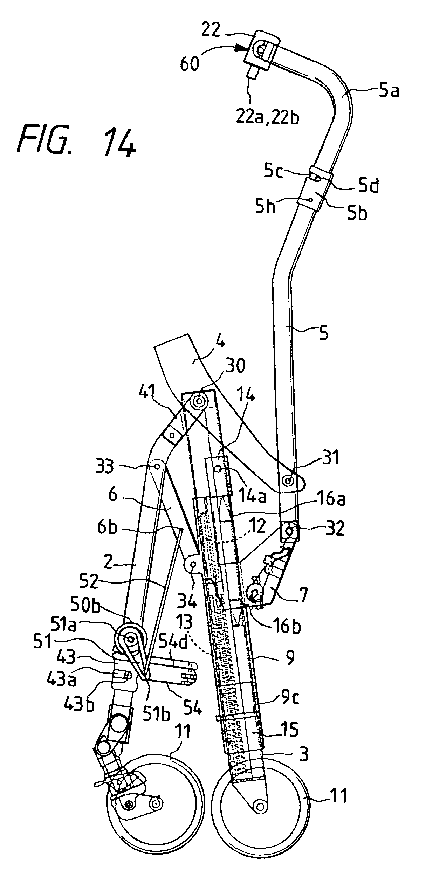

With this configuration, as shown in Fig. 14, when the right and left sliders 7, 7, which will be described later, move downward along the rear legs 3, 3 in the longitudinal direction thereof, the rocking pieces 51 rotate clockwise (in the direction designated by the arrow shown in Fig. 13) via the joint bars 52 as viewed from the side of the baby buggy. As a result, the second bevel gears 50b rotate the first bevel gears 50a in a inner rearward direction of the framework, so that the right and left front leg sleeves 43, 43 rotate in a rearward direction with respect to each other. The rearward rotation of the front leg sleeves 43 results in the front leg lateral bar 54 being folded into a U-shaped form, as a result of which the baby buggy can be laterally folded up.

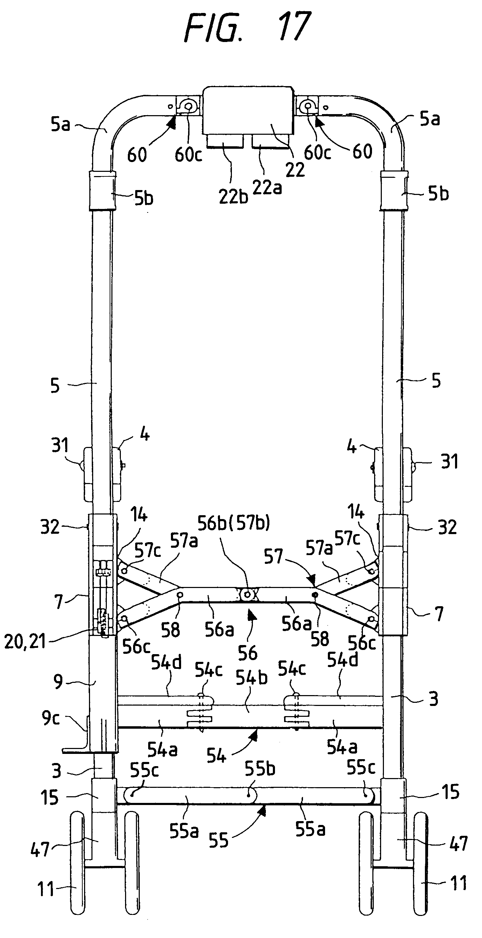

Further, as shown in Fig. 17 (Fig. 17 is a rear view), the right and left rear legs 3, 3 are connected together by a rear leg lateral bar 55. This rear lateral bar 55 is made up of right and left lateral bar members 55a, 55a, and these lateral bar members 55a, 55a are hinged to each other at one ends thereof by a pivot pin 55b in such a way as to be collapsible in an upward direction along the longitudinal center axis of the baby buggy. The opposite ends of the thus hinged lateral bar members 55a, 55a are rotatively hinged to right and left lower stoppers 15, 15, which are attached to lower portions of the rear legs 3, 3, by pivot pins 55c, 55c.

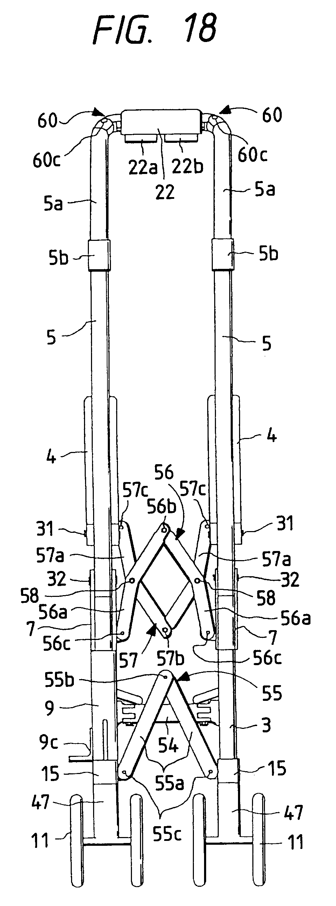

Furthermore, as shown in Fig. 17, the right and left sliders 7, 7 are connected together by a slider joint link 56. This slider joint link 56 is made up of two V-shaped collapsible bars 56a, 56a. These collapsible bars 56a, 56a are arranged with their hinged portions directed upward. These collapsible bars 56a, 56a are rotatively hinged to each other by a pivot pin 56b at the longitudinal center between the rear legs 3, 3. The opposite ends of the thus hinged collapsible bars 56a, 56a are respectively connected to the right and left sliders 7, 7 so as to be respectively rotatable around pivot pins 56c in such a way that the slider joint link 56 is pivotally collapsible with its center hinged portion moving upward in the longitudinal center of the baby buggy as it is shown in Fig. 18.

The right and left rear legs 3, 3 are connected together by a rear leg joint link 57 at upper portions of the sliders 7, 7. Like the slider joint link 56, this rear leg joint link 57 is made up of right and left V-shaped collapsible bars 57a, 57a. These collapsible bars 57a, 57a are rotatively connected together by a pivot pin 57b, and the opposite ends of the thus connected collapsible bars 57a, 57a are respectively hinged to the right and left upper stoppers 14, 14 attached to the right and left rear legs 3, 3 by pivot pins 57c, 57c in such a way that the rear leg joint link 57 becomes collapsible within the plane in line with the longitudinal direction of the baby buggy. To fold the rear leg joint link 57 in the direction opposite to the folding direction of the slider joint link 56, the right and left collapsible bars 57a, 57a are arranged with their hinged portions directed downwards.

The slider link 56 and the rear leg joint link 57 are connected together at two hinged portions thereof by pivot pins 58, 58 in such a way as to be folded with their center hinged portions moving apart from each other.

By virtue of this configuration, the sliders 7 which will be described later are positioned at the upper stop position while the baby buggy is laterally unfolded as it is shown in Fig. 17. For this reason, the slider join link 56 and the rear leg join link 57 are stretched so as to be brought in line with each other. On the other hand, the right and left sliders 17, 17 which will be described later move downward to the lower stop positions when the baby buggy is laterally folded up as it is shown in Fig. 18. The slider joint link 56 and the rear leg joint link 57 are folded up by way of the pivot pins 58, 58 in such a way that the center hinged portions 56b and 57b move apart from each other in the longitudinal direction of the baby buggy.

A folding mechanism of this embodiment will be described in detail with particular attention being focused on the left rear leg 3 provided with the pedal frame 9 which will be described later. The main power source for the folding mechanism is provided on the left rear leg 3, which allows for convenience of operation. As a matter of course, the main power source can be provided on the right rear leg 3.

As shown in Fig. 21A, the slider 7 is provided on top of the rear leg 3, and the pedal frame 9 is fitted around the rear leg 3 in such a way as to be slidable in the longitudinal direction of the rear leg 3. Projections 9a, 9a including tapered portions 9b, 9b are formed at the upper side of the pedal frame 9, and the tapered portions 9b, 9b correspond to the tapered portions 7e, 7e of the slider 7. When the pedal frame 9 is moved upwards, the tapered portions 9b, 9b of the pedal frame 9 and the tapered portions 7e, 7e of the slider 7 come into slidable contact with each other. As a result, these tapered portions interlock with each other, and the pedal frame 9 is stopped.

On the other hand, when the pedal frame 9 moves downward along the rear leg 3, the lower end of the pedal frame 9 comes into contact with the upper end of the lower stopper 15 attached to the lower portion of the rear leg 3. A pedal 9c is mounted to the outer side surface of the pedal frame 9 so as to project outwardly. When the overall pedal frame 9 is moved downwardly, the user pushes down the pedal frame 9 with their foot on this pedal 9c.

A lock piece 19 is fixed longitudinally at the center of the edge of an inner bottom surface 9d sandwiched between the projections 9a, 9a of the pedal frame 9, as shown in Fig. 21B. A locking rod 19b projects from the lower end of this lock piece 19 for locking the upper end of a compression spring 13 which will be described later.

Fig. 22A is a center longitudinal cross sectional view showing the rear leg 3 having the pedal frame 9. In the drawing, the slider 7 is brought into contact with the upper stopper 14 at the upper stop position, and the pedal frame 9 is brought into contact with the lower stopper 15 at the lower stop position.

Fig. 23 is a plan view showing the front surface of the rear leg 3 provided with the pedal frame 9. An elongated guide hole 10 is formed in the front surface of the rear leg 3 along the substantial center from the upper end to the lower end of the rear leg.

In Fig. 22A, the lock piece 17 of the slider 7 and the lock piece 19 of the pedal frame 9 project into the inside of the rear leg 3 through the elongated guide hole 10. The lock piece 17 of the slider 7 is attached to an upper end 12a of a tension spring 12, whereas the lock piece 19 of the pedal frame 9 is attached to a lower end 12b of the same. This tension spring 12 is fixed in such an ordinary manner that the ends of the tension spring 12 are respectively hooked to a notch 17a formed in the lock piece 17 and a notch 19a formed in the lock piece 19 (see Fig. 21A).

With the previously mentioned configuration, the slider 7 and the pedal frame 9 are connected together by the tension spring 12.

The upper end of the compression spring 13 is fitted to the locking rod 19b (see Fig. 21A) projecting from the lower end of the lock piece 19 of the pedal frame 9. The lower end of the compression spring 13 is brought into contact with a bottom 3c of the rear leg 3. In this way, the compression spring 13 is sandwiched between the pedal frame 9 and the bottom 3c of the rear leg 3. It may be possible to fit the lower end of the compression spring 13 to a locking rod in the same manner as its upper end fits to the lock rod by further providing a locking rod (not shown) so as to stand upright on the bottom 3c of the rear leg 3.

Although a coil spring is used for the tension spring 12 and the compression spring 13 in the above construction, another elastic member, for example, a gas spring can be used for the compression spring 13. With a gas spring, a piston rod moves back and forth under the pressure of gas compressed within a gas-filled piston body.

The tension spring 12 and the compression spring 13 are housed within the rear leg 3 in the above configuration. However, both springs 12, 13 may be provided outside the rear leg 3. In this case, though not being shown in the drawings, the lock piece 17 of the slider 7 and the lock piece 19 of the pedal frame 9 may be provided so as to project outside the rear leg 3. A projection piece is further provided on the outside of the lower end of the rear leg 3, and the tension spring 12 is provided between the lock pieces of the slider 7 and the pedal frame 9. The compression spring 13 or a gas spring may be provided between the lock piece of the pedal frame 9 and the projection piece of the rear leg 3.

A hole 3a (see Fig. 22D) is formed in the side surface of the rear leg 3 so as to be in alignment with the innermost end of the elongated hole 73 (see Fig. 20A) of the top plate 7c of the slider 7 when the slider is located at the upper stop position and remains in contact with the upper stopper 14, as shown in Fig. 22A. A spring chamber 44a is formed inside the rear leg 3 corresponding to the hole 3a, and a folded leaf spring 45a is housed in this spring chamber 44a. As shown in Fig. 22C, the upper knock pin 16a is mounted on the leaf spring 45a, and this upper knock pin 16a projects out of the hole 3a while being resiliently supported by the leaf spring 45a.

On the other hand, a hole 3b, shown in Fig. 21D, is formed in the side surface of the rear leg 3 so as to be in alignment with the upper edge of the pedal frame 9 when the pedal frame is located at the lower stop position and remains in contact with the lower stopper 15, as shown in Fig. 21A. As with the spring chamber 44a, a spring chamber 44b is formed inside the rear leg 3 corresponding to the hole 3b, and a folded leaf spring 45b is provided in the spring chamber 44b. A lower knock pin 16b is attached to the leaf spring 45b, as shown in Fig. 22C. Moreover, the knock pin 16b projects out of the hole 3b while being resiliently supported by the leaf spring 45b, as shown in Fig. 22D. The projections 7h, 7h of the slider 7 are respectively provided with two rotating plates 20 and 21 supported by a support shaft 78, as shown in Fig. 22B. These rotating plates 20 and 21 independently rotate and return to their original positions by means of torsion springs (not shown). The rotating plates 20 and 21 are provided with outer peripheral slots 20b and 21b, respectively. The wires 23a and 23b are provided around the outer peripheral slots 20b and 21b in a direction of reverse of rotation, and pins 25a and 25b attached to the leading ends of the wires 23a and 23b engage with the peripheries of the rotating plates 20 and 21. Furthermore, the rotating plates 20 and 21 have protuberances 20a and 21a, respectively, as shown in Fig. 22A.

The wires 23a and 23b are respectively connected to the two operation buttons 22a and 22b provided at an upper part of the press bar 5 through the inner cavity of the press bar 5, as shown in Fig. 22A. The internal structure of these operation buttons 22a and 22b is omitted from the drawings. However, the ends of the wires 23a and 23b may be locked to the outer peripheries of pulleys (not shown), and these pulleys may then be rotated in conjunction with the pressing action of each of the operation buttons 22a and 22b, whereby the wires 23a and 23b are drawn. As a result of the drawing action of the wires 23a and 23b, either the rotating plate 20 or the rotating plate 21 rotates around the support shaft 78. One of the protuberances 20a and 21a of the rotating plates 20 and 21 rotates, and the corresponding upper knock pin 16a or lower knock pin 16b is pressed to such an extent that the knock pin comes to the point below the surface of the rear leg 3. When the slider 7 moves upward again from the lower position (designated by a phantom line shown in Fig. 22A) to an upper position, the tapered slot 74 formed on the inner surface of the top plate 7c of the slider 7 presses down the upper knock pin 16a to such an extent that the knock pin 16a comes to a point below the surface of the rear leg 3, as shown in Fig. 22A. Hence, the upward movement of the slider 7 is not hindered by the upper knock pin 16a.

The operation of the collapsible baby buggy having the above mentioned construction according to this embodiment will now be described.

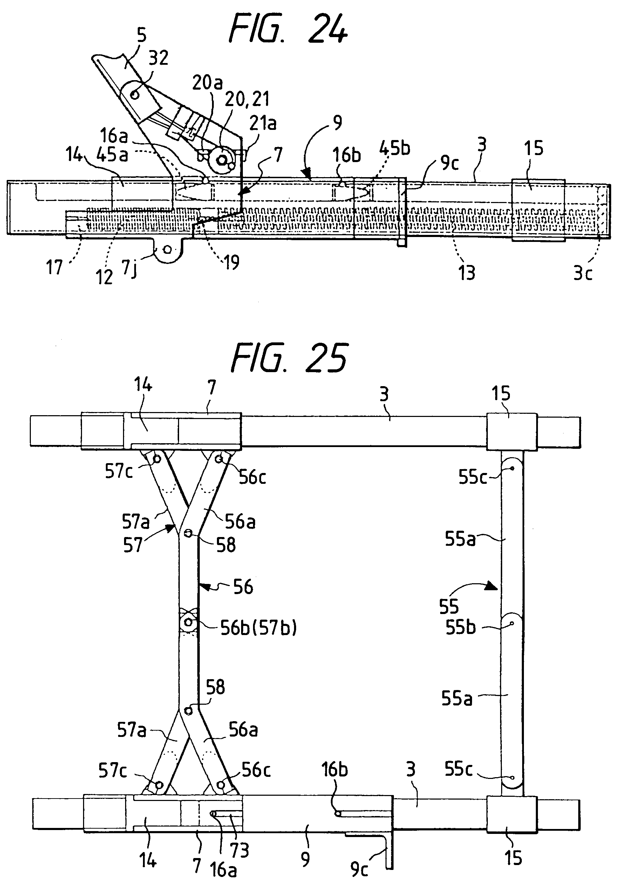

Fig. 24 shows the slider 7 and the pedal frame 9 when they are located at the upper stop position. The state of the slider and the pedal frame shown in this drawing corresponds to the state of the seating apparatus shown in Fig. 11. The side bar 6 pushes the front leg 2 in a forward direction, so that the legs are opened. Simultaneously, the press bar 5 is tilted in a rearward direction around the pivot pin 31 attached to the rear end of the arm rest member 4, whereby the baby buggy is unfolded.

With the baby buggy in the unfolded state, the front leg lateral bar 54 is stretched as it is shown in Fig. 15. Similarly, the rear leg lateral bar 55, the slider joint link 56, and the right and left pivot pins 58, 58 of the rear leg joint link 57 are also stretched as they are shown in Fig. 25.

In the unfolded state of the baby buggy, as shown in Fig. 24, the upper stopper 14 hinders the upward movement of the slider 7, and the upper knock pin 16a projects to the outside so as to engage with the elongated hole 73 of the slider 7 (see Fig. 22A). The upper knock pin 16a comes into contact with the innermost end of the elongated hole 73, whereby the slider 7 is prevented from moving downward.

Though the pedal frame 9 is urged upwards by means of the resilient forces of the tension spring 12 and the compression spring 13, it is held stop while remaining in contact with the lower end of the slider 7.

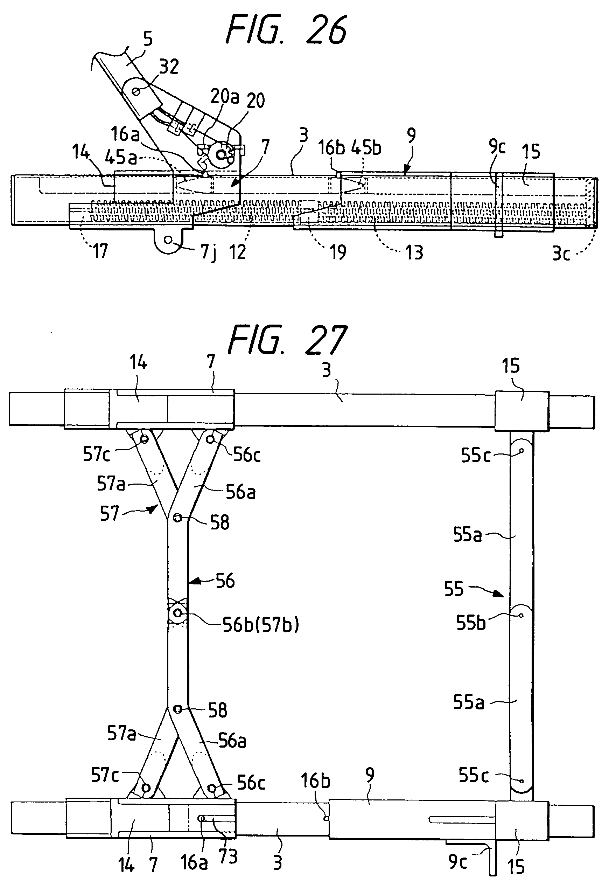

In Fig. 24, when the pedal frame 9 is located at the upper stop position, the lower knock pin 16b is kept pressed down by the inner wall surface of the pedal frame 9. Hence, the downward movement of the pedal frame 9 is not hindered by the lower knock pin 16b. If the pedal frame 9 is pushed down along the rear leg 3 until it comes into contact with the lower stopper 15, as shown in Fig. 26, the upper edge of the pedal frame 9 is engaged with the lower knock pin 16b projecting outside by the resilient force of the leaf spring 45b released from the compressed state. At this time, the pedal frame 9 is prevented from moving upwards and is held in a locked state.

In this state, the tension spring 12 is downwardly stretched, whilst the compression spring 13 is compressed downwardly. At this time, resilient energy is stored in both the tension spring 12 and the compression spring 13. Specifically, the tension spring 12 possesses a drawing force for urging the slider 7 downwardly, whereas the compression spring 13 possesses a restoring force for urging the pedal frame 9 upwardly. The upward movement of the pedal frame 9 is prevented by the lower knock pin 16b, whereas the lower movement of the slider 7 is prevented by the upper knock pin 16a. In this way, the pedal frame 9 and the slider 7 are held in a locked state.

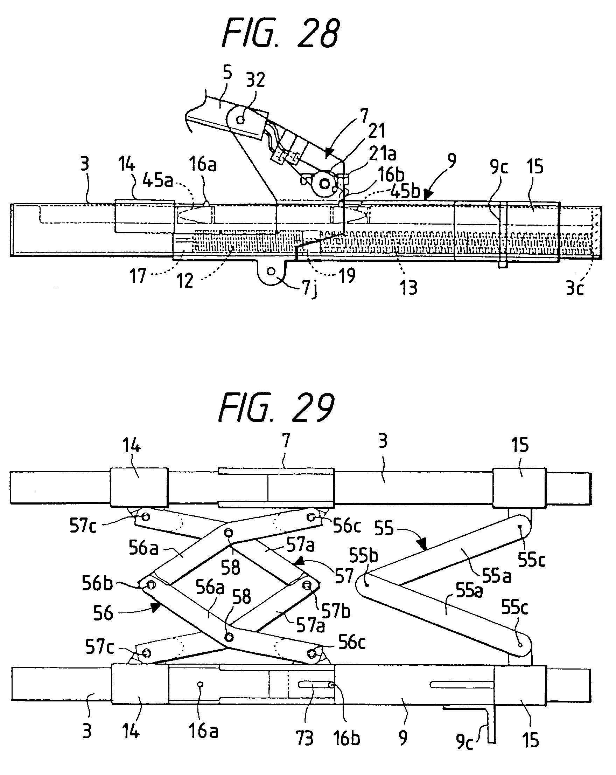

Further, in this state, the sliders 7 stay unmoved, and hence the rear leg lateral bar 55, the slider joint link 56, and the rear leg joint link 57 are also still in a stretched state, as shown in Fig. 27.

When the rotating plate 20 rotates as a result of the pressing of either the operation button 22a or 22b, the protuberance 20a of the rotating plate 20 presses the upper knock pin 16a, whereby the slider 7 is released from its locked state. At this time, the drawing force of the tension spring 12 is released at one time, and the slider 7 is moved downward along the rear leg 3. As shown in Fig. 28, the slider 7 comes to a standstill when the lower end of the slider 7 comes into contact with the upper edge of the pedal frame 9.

Associated with the downward movement of the right and left sliders 7, 7, the slider joint link 56 and the rear leg joint link 57 rotate around the right and left pivot pins 58, 58. As a result, the center hinged portions 56b and 57b of the joint links 56 and 57 move away from each other in the longitudinal direction of the baby buggy. Together with this movement, the remaining slider 7 on the opposite side is also moved downward, which results in the rear legs being folded laterally. In conjunction with the folding movement of the rear legs, the rear leg lateral bar 55 is folded up at its hinged portion 55b, whereby the rear legs 3, 3 of the baby buggy are laterally folded up.

On the other hand, in conjunction with the downward movement of the right and left sliders 7, 7, the right and left front legs 2, 2 are folded toward the rear legs 3, 3 via the side bars 6, 6. Concurrently, the leading end of the rocking piece 51 is rotated downwardly around the rotating axis of the rocking piece via the joint bar 52, as shown in Fig. 14. The second bevel gear 50b attached to the rocking piece 51 rotates clockwise as viewed from the outside. Associated with the rotation of the right and left second bevel gears 50b, 50b, the right and left first bevel gears 50a, 50a rotate as being shown in Fig. 16. The right and left front sleeves 43, 43 attached to the first bevel gears 50a, 50a rearwardly rotate in opposite directions. As a result, the front leg lateral bar 54 fixed with both ends thereof attached to the sleeves 43, 43 is folded up around the right and left pivot pins 54c, 54c, so that the right and left front legs 2, 2 are laterally folded up.

Further, together with the downward movement of the right and left sliders 7, 7, the right and left front legs 2, 2 are respectively folded toward the rear legs 3, 3 via the side bars 6, 6, as shown in Fig. 12. As a result, the baby buggy is longitudinally folded up.

In this way, the right and left front legs 2, 2 and the right and left rear legs 3, 3 of the baby buggy are laterally folded up in association with the downward movement of the right and left sliders 7, 7, and, at the same time, the baby buggy is longitudinally folded up. The overall framework of the baby buggy is folded up as shown in Fig. 12, that is, the framework is folded up in both the longitudinal and lateral directions thereof.

When the rotating plate 21 rotates as a result of the pressing action of the other button of the operation buttons 22a and 22b, as shown in Fig. 28, the protuberance 21a of the rotating plate 21 presses the lower knock pint 16b down, so that the pedal frame 9 is released from its locked state. At this time, the restoring force of the compression spring 13 is released, so that the pedal frame 9 is moved upwardly. Simultaneously, the pedal frame 9 pushes up the slider 7, as a result of which the slider 7 returns to come into contact with the upper stopper 14 and is held stopped. At this time, the upper knock pin 16a prevents the slider 7 from moving downward again.

In association with the upward movement of the pedal frame, the slider joint link 56 and the rear leg joint link 57 return to their original stretched states, and the rear leg lateral bar 55 is also stretched. Simultaneously, the right and left side bars 6, 6 rotate around the portions thereof (pivot pins 33, 33) hinged to the front legs 3, 3, so that the front legs 2, 2 are pushed forward. Concurrently, the right and left arm rest members 5, 5 and the right and left press bars 5, 5 carry out the operation opposite to the folding operation as previously mentioned. As a result, the right and left front legs 2, 2, the arm rest members 4, 4, and the press bars 5, 5 return to their stretched states as shown in Fig. 11.

At the same time, the right and left rocking pieces 51, 51 rotate in the opposite direction via the right and left joint bars 52, 52 hinged to the right and left side bars 6, 6. As a result, the right and left second bevel gears 50b, 50b rotate in the direction in which they return to their original positions. Simultaneously, the right and left first bevel gears 50a, 50a are rotated, which again brings the front leg lateral bar 54 to its original stretched state.

Thus, the baby buggy is laterally and longitudinally unfolded at the same time, as shown in Fig. 11.

In the above construction, in the even that the tension spring 12 is removed from the rear leg 3, a downward drawing force will not act on the slider 7 even when the pedal frame 9 has been moved down to the lower stop position, and hence the framework will not be folded up. However, if the framework is designed so as to be manually folded up, the baby buggy does not need the tension spring 12.

Further in the above construction, if the compression spring 13 is removed from the rear leg 3, the upward restoring force will not act on the pedal frame 9 even when the pedal frame 9 is released from its locked state after having been moved to the lower stop position. For this reason, the slider 7 is not moved upward, and therefore the framework is not unfolded. However, if the framework is designed so as to be manually unfolded, the baby buggy does not need the compression spring 13.

### Third Embodiment

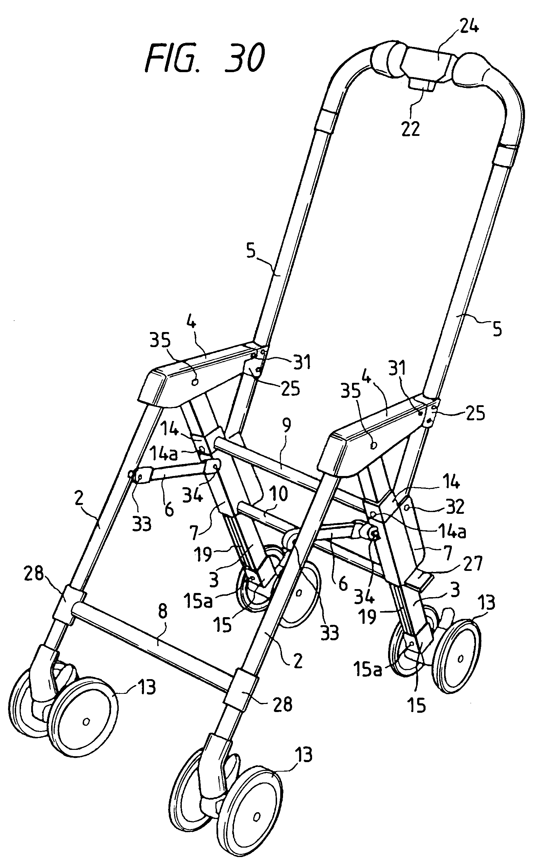

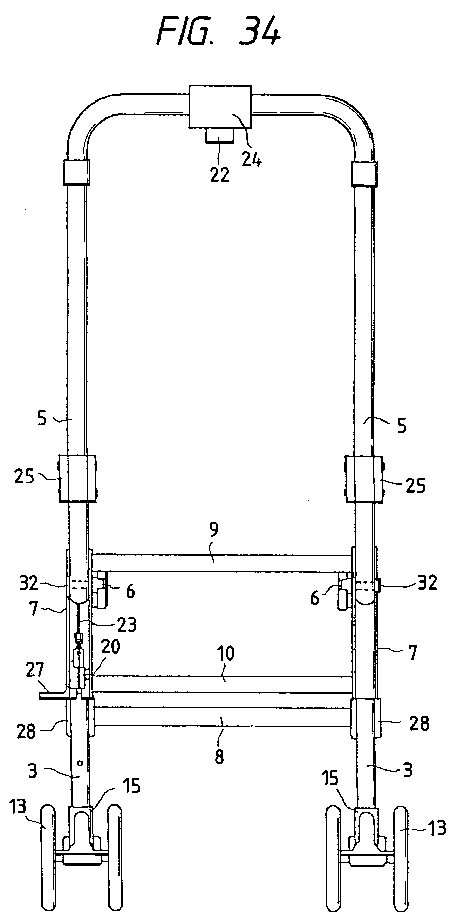

With reference to Figs. 30 through 41, the third embodiment will be described.

To make the concept of the invention clearer in the drawings, a seat and associated accessories have been omitted.

As shown in Fig. 30, this collapsible baby buggy is provided with front legs 2, rear legs 3, arm rest members 4, press bars 5, and side bars 6, all of these components being common to the right half and the left half of this baby buggy. Because, these components exist on both sides, the construction of the side members on only one side will be explained first.

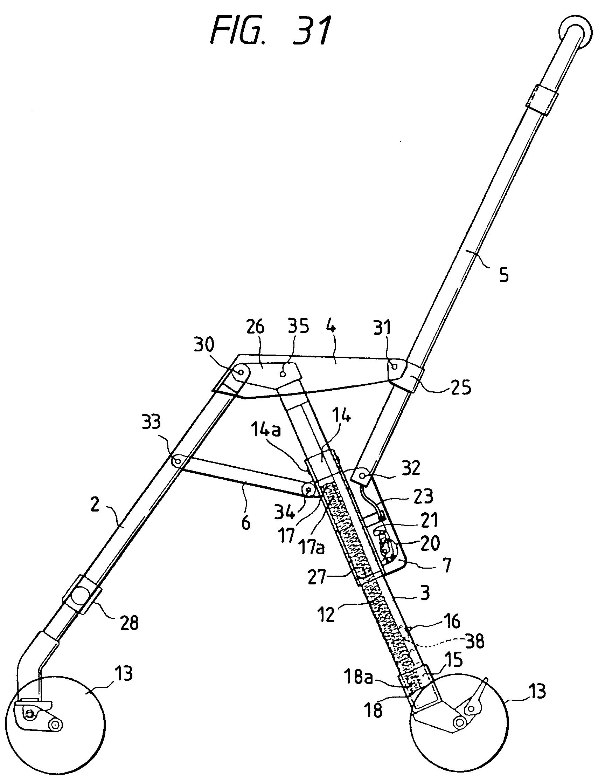

In Fig. 31, a joint member 26 is attached to the upper end of the rear leg 3 by a pivot pin 35 which is rotatively supported by the arm rest member 4. This joint member 26 is rotatively hinged to the upper end of the front leg 2 by a pivot pin 30. The front leg 2 and the rear leg 3 are both provided with wheels 13.

In this embodiment, the front leg 2 is made of a round pipe, and the rear leg 3 is made of a pipe member having a rectangular parallelepiped cross section. The rear leg 3 is arranged in such a way that the axis along the pivot 35 is normal to the wide side surfaces of the rear leg 3. The shapes of the pipes are not particularly limited in this embodiment, and members having another shape are also usable.

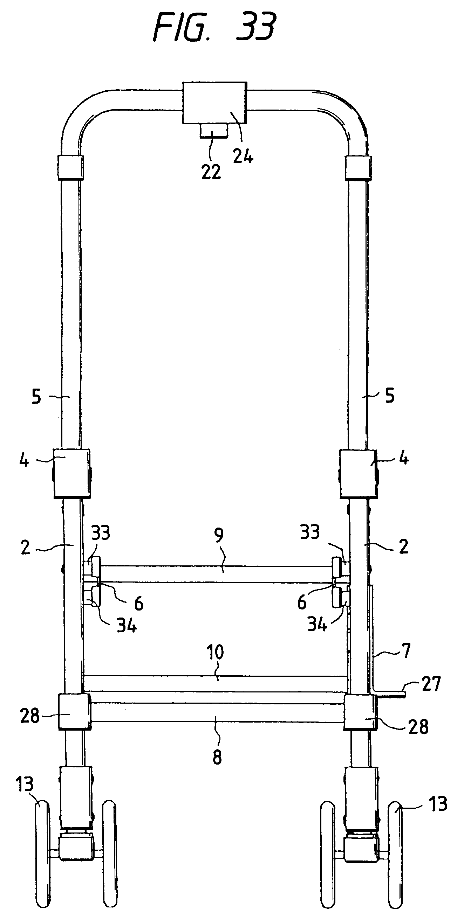

The rear end of the arm rest member 4 is rotatively hinged to a press bar sleeve 25 attached to the press bar 5 by a pivot pin 31. This press bar 5 is made of a round pipe or the like. As shown in Fig. 33, the press bar 5 extends from the rear end of each of the right and left arm rest members 4, 4, and an upper portion of the press bar 5 is curved into a substantially U shape. The curved portions of the press bars 5 are connected together via a case 24 provided at the upper center of the baby buggy. This case 24 is provided with an operation button 22 which will be described later. The press bar 5 can be inclined in a rearward direction at a desired angle by adjusting an interval between the pivot pin 35 and the pivot pin 31 of the arm rest member 4.

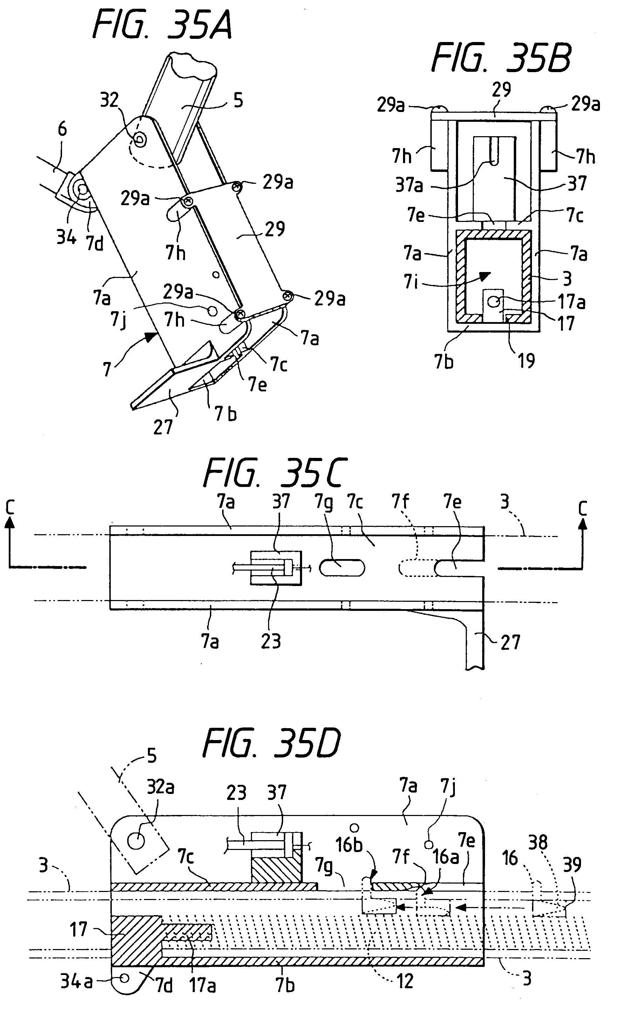

A slider 7 shown in Figs. 35A through 35D is fitted around the outer periphery of each of the right and left rear legs 3. The construction common to the right and left sliders 7, 7 will be explained first. As shown in the perspective view of Fig. 35A, the slider 7 is provided with rectangular parallelepiped side plates 7a, 7a which are arranged parallel to each other in a symmetrical manner. As shown in Fig. 35B, the side plates 7a, 7a are connected to each other by a bottom plate 7b and a top plate 7c which are parallel to each other, thereby forming a rectangular parallelepiped internal cavity 7i through which the rear leg 3 passes in a slidable manner.

Unless the rear leg 3 is made of a rectangular pipe having a rectangular parallelepiped cross section, the cross section of the internal cavity 7i may be changed corresponding to the shape of the cross section of the rear leg 3.

As shown in Fig. 35D, a through hole 32a is formed in an upper part in the vicinity of one side edge of the side plate 7a, and a pivot pin 32 for connecting the press bar 5 with the slider 7 is supported by this through hole 32a (see Fig. 35A).

Further, as shown in Fig. 35D, a protuberance 7d projects from the lower surface of the bottom plate 7b, and a pivot pin 34 hinged to one end of the side bar 6 is supported by a through hole 34a formed in the protuberance 7d (see Fig. 35A).

The slider 7 that is provided with a compression spring 12 which will be described later has the following additional elements. To being with, as shown in Fig. 35A, a pedal 27 projects outwardly from one of the side plates 7a, 7a. The user can depresses the slider 7 with their foot on this pedal 27.

A lock piece 17 is attached to the upper end of the bottom plate 7d (i.e., the left end of the bottom plate 7d in Fig. 35D), as shown in Fig. 35D. A projection 17a projects from the lower end of the lock piece 17 (i.e., the right end of the lock piece 17 in Fig. 35D), and the upper end of the compression spring 12, which will be described later, is fitted to this projection 17a.

An elongated notch 7e is formed along the longitudinal center of the top plate 7c to permit a knock pin 16, which will be described later, to pass through in a downward direction of the rear leg 3, as shown in Fig. 35C. A tapered channel 7f is continuously formed in the bottom surface of the top plate 7c in line with the elongated notch 7e.

As shown in Fig. 35D, during the course of the passage of the knock pin 16 along this tapered channel 7f, the knock pin 16 is pressed against the elastic force of a leaf spring 38, which will be described later, so as to arrive at a point below the surface of the rear leg. An elongated cutout 7g is formed substantially at the longitudinal center of the top plate 7c in line with the elongated notch 7e (see Fig. 35C). When the knock pin 16 comes to this elongated cutout 7g after the passage of the tapered channel 7f while remaining depressed to the point below the surface level, the knock pin 16 projects upward as a result of the elastic force of the leaf spring 38.

A wire lock piece 37 is formed substantially at the center of the upper surface of the top plate 7c, as shown in Fig. 35D. A through hole 37a is formed in this wire lock piece 37 to lock the end of the outer tube of a wire 23 which will be described later (see Fig. 35B).

Holes 7j, 7j are respectively formed at corresponding positions in the side plates 7a, 7a for supporting the support shaft 20a of a rotating plate 20 which will be described later.

Further, as shown in Fig. 35A, the upper sides of the side plates 7a, 7a are connected together by an indication plate 29. This indication plate 29 is attached to supporting sections 7h, 7h formed outside the side plates 7a, 7a with screws 29a, 29a.

As shown in Fig. 35B, in the rear leg 3 incorporating the compression spring 12, an elongated guide hole 19 is formed along the longitudinal center of the rear leg 3 from the upper end to the rear end thereof so that the lock piece 17 provided on the bottom plate 7b of the slider 7 can travel inside the rear leg while it's projection is held straight inwardly when the slider 7 moves along the outer periphery of the rear leg 3 in a slidable manner.

As shown in Fig. 30, an upper stopper 14 is fixedly fitted on one side of each of the upper portions of the right and left rear legs 3, 3 with a screw or a pin 14a. An upper stop position of the slider 7 is the position where the slider 7 comes into contact with this upper stopper 14, as shown in Fig. 31.

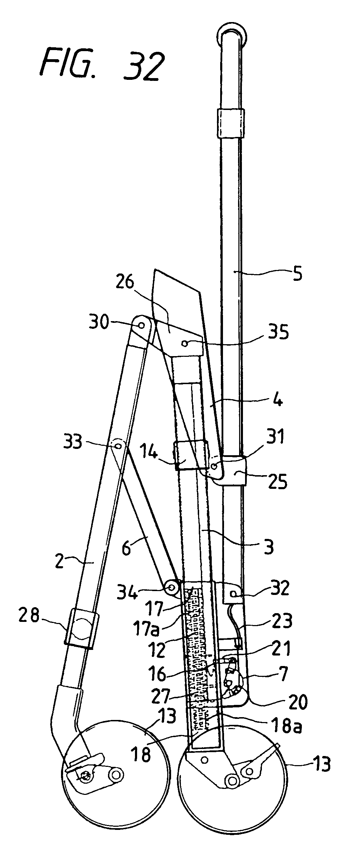

Further, a lower stopper 15 is attached to the outer periphery of the lower end of each of the right and left rear legs 3, 3 with a screw or a pin 15a, as shown in Fig. 30. A lower stop position of the slider 7 is the position where the slider 7 comes into contact with this lower stopper 15, as shown in Fig. 32.

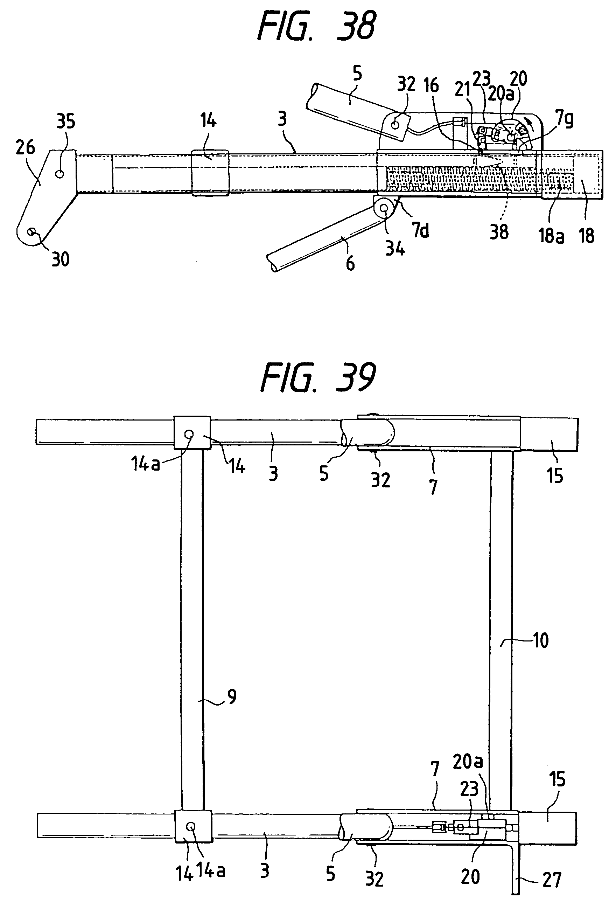

As shown in Fig. 30, both ends of a lateral bar 8a are attached to front leg sleeve 28, 28 that are attached to the lower portions of the right and left front legs 2, 2 in order to connect the right and left side members together (see Fig. 33). Similarly, a lateral bar 9 is connected between the right and left upper stoppers 14, 14 (see Fig. 39), and a lateral bar 10 is connected between the right and left sliders 7, 7. These lateral bars 8, 9 and 10 are arranged in parallel with each other. As a result of this, the symmetry and rigidity of the right and left side members are ensured.

A folding mechanism of this embodiment will be described in detail with particular attention being focused on the left rear leg 3 (hereinafter referred to as the rear leg) when the baby buggy is viewed from its rear looking towards the front. The main power source for the folding mechanism is provided on the left rear leg 3, which allows for convenience of operation. As a matter of course, the main power source can be provided on the right rear leg 3.

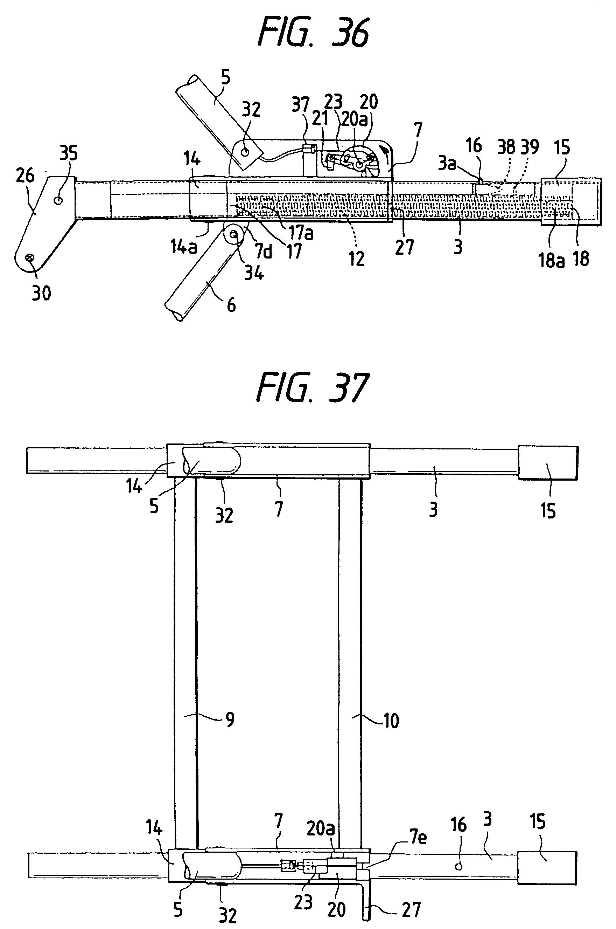

In Fig. 36, the slider 7 is fitted around the outer periphery of the rear leg 3 in a slidable manner, and the lock piece 17 attached to the slider 7 projects to the inside of the rear leg 3 along the elongated guide hole 19. This lock piece 17 has a projection 17a that projects in the downward direction. On the other hand, a lock piece 18 attached to the bottom of the rear leg 3 has a projection 18a that projects in the upward direction. The compression spring 12 is sandwiched between the lock pieces 17 and 18 in such a way as to be fitted to the projections 17a and 18a.

Although a coil spring is used for the compression spring 12 in the above construction, another elastic member, for example, a gas spring is also usable. With a gas spring, a piston rod moves back and forth under the pressure of gas compressed within a gas-filled piston body.

The compression spring 12 is housed within the rear leg 3 in the above configuration. However, this compression spring 12 may be provided outside the rear leg 3. In this case, though not being shown in the drawings, the lock piece 17 of the slider 7 may be provided so as to project outside the rear leg 3. The lower lock piece 18 is further provided on the outside of the lower end of the rear leg 3, and the compression spring 12 or the gas spring may be provided between them.

Fig. 38 shows the slider 7 that is brought in contact with the lower stopper 15. In this state, the knock pin 16 is brought into alignment with the elongated cutout hole 7g of the slider 7, and therefore the knock pin 16 projects from the side surface of the rear leg 3 into the elongated cutout hole 7g. A spring chamber 39 is formed inside the rear leg 3 corresponding to the elongated cutout hole 7g, and the folded leaf spring 38 is housed in this spring chamber 39. The knock pin 16 is mounted on this leaf spring 38, and this knock pin 16 projects out of the side surface of the hole 3a while being resiliently supported by the leaf spring 38.

Accordingly, when the slider 7 is located at the lower stop position and remains in contact with the lower stopper 15, as shown in Fig. 38, the knock pin 16 projects to the outside as a result of the resilient force of the leaf spring 38 while it is brought in alignment with the elongated cutout hole 7g of the slider 7. As a result, the knock pin 16 locks the inner end of the elongated cutout hole 7g, and hence the slider 7 is locked at the lower stop position against the restoring force of the compression spring 12.

The rotating plate 20 is supported by the support shaft 20a that is provided between the side plates 7a, 7a of the slider 7, as shown in Fig. 38. This rotating plate 20 is disposed so as to rotate and return to its original position by means of a torsion spring (not shown). The end of the wire 23 is connected to this rotating plate 20, and the wire 23 is connected to an operation button 22 provided at an upper part of the press bar 5 through the internal cavity of the press bar 5. The internal structure of the operation button 22 is omitted from the drawing. The end of the wire 23 is provided around the outer periphery of a pulley, or the like, and this pulley is rotated in conjunction with the pressing action of the operation button 22, so that the wire 23 is drawn. The rotating plate 20 rotates around the support shaft 20a by way of this wire 23, so that a protuberance 21 projecting from the circumference of the rotating plate 20 rotates to press down the knock pin 16. Then, the knock pin 16 is pressed to come to the point below the surface of the rear leg 3, whereby the knock pin 16 is disengaged from the elongated cutout hole 7g of the slider 7.

As a result of this disengagement of the knock pin 16 from the elongated cutout hole 7g, the slider 7 is urged upward by the restoring force of the compression spring 12 and moves upwardly towards the upper stopper 14. On coming into contact with the upper stopper 14, the slider 7 comes to a stop.

The operation of the collapsible baby buggy having the above mentioned construction according to this embodiment will now be described.

Fig. 36 shows the slider 7 which is located at the upper stop position and comes into contact with the upper stopper 14. The state of the slider shown in this drawing corresponds to the state of the seating apparatus shown in Fig. 31. The side bar 6 pushes the front leg 2 in a forward direction, so that the legs are opened. Simultaneously, the press bar 5 is tilted in a rearward direction and supported by the pivot pin 32 hinged to the slider 7 and the pivot pin 31 hinged to the rear end of the arm rest member 4, whereby the baby buggy is unfolded. With the baby buggy in the unfolded state, the upper stopper 14 hinders the upward movement of the slider 7 even if the compression spring 12 has a residual restoring force.

Fig. 37 is a partial rear view corresponding to Fig. 36. This drawing shows the positional relationship between the lateral rod 9 connecting together the right and left upper stoppers 14, 14 and the lateral bar 10 connecting together the right and left sliders 7, 7. As can be seen from the drawing, the sliders 7, 7 remain in contact with the upper stoppers 14, 14.

As shown in Fig. 38, when the slider 7 moves to come into contact with the lower stopper 15 along the rear leg 3 resulting from the user's depressing action of the pedal 27, the slider 7 is locked by the knock pin 16 at the lower stop position.

As previously described with reference to Fig. 35D, the tapered channel 7f is formed in the inner surface of the top plate 7c of the slider 7, and hence the knock pin 16 is pressed down by the tapered channel 7f to such an extent that it arrives at the point below the surface of the rear leg 3 during the course of the downward movement of the slider 7 from the upper stop position. As a result, the slider 7 can pass over the knock pin.

In association with the downward movement of the slider 7 resulting from the depression of the pedal 27, the right and left sliders 7 move downward at the same time, as shown in Fig. 39, because the sliders are connected together by the lateral bar 10.

At this time, as shown in Fig. 38, the press bar 5 and the side bar 6 are rotatively hinged to each of the right and left sliders 7 by the pivot pins 32 and 34. As a result of the downward movement of the hinged portion (the pivot pin 32) between the slider 7 and the press bar 5, the press bar 5 rotates around the hinged portions (the pivot pins 31, 32, and 35) between the slider 7, the press bar 5, and the arm rest member 4 so as to stand upright, and, at the same time, the arm rest member 4 is steeply tilted in a downward direction.

Further, as shown in Fig. 32, when the hinged portion (the pivot pin 34) between the slider 7 and the side bar 6 moves downwardly, the front leg 2 hinged to the other end of the side bar 6 by the pivot pin 33 rotates around the position (the pivot pin 30) where the front leg 2 and the rear leg 3 are hinged together, so that the front leg 2 is folded toward the rear leg 3. In this way, the baby buggy is longitudinally folded up, as shown in Fig. 32.

Subsequently, the drawing action of the wire 23 brings about the rotation of the rotating plate 20, as shown in Fig. 38, and the protuberance 21 presses down the knock pin 16. This pressing action of the knock pin 16 results in the slider 7 being released from the locked state. Eventually, the restoring force of the compression spring 12 is released at one time. As shown in Fig. 36, the slider 7 moves upward along the rear leg 3 and stops at the upper stop position where it comes into contact with the upper stopper 14.

Together with the upward movement of the slider 7, the points (the pivot pins 32 and 34) where the press bar 5 and the side 6 are hinged to the slider 7 also move upward. Contrary to the previously mentioned folding operation, the press bar 5 is tilted in a downward direction, and the arm rest member 4 returns to the horizontal state. Further, the front leg 2 is pushed in the opening direction, whereby the overall baby buggy is unfolded as shown in Fig. 31.

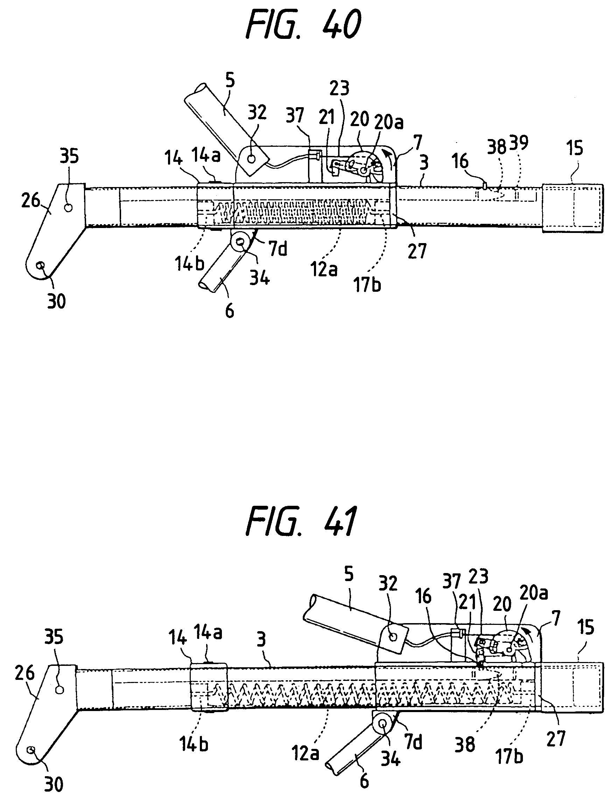

Figs. 40 and 41 show a modification of this embodiment. These drawings correspond to Figs. 36 and 38. In the above embodiment, the compression spring 12 is sandwiched between the lock piece 17 of the slider 7 and the lock piece 18 of the rear leg 3. A tension spring 12a is used in lieu of the compression spring 12, and both ends of this tension spring 12a are connected between a lock piece 17b attached to a lower portion of the slider 7 and a lock piece 14b attached to an upper portion of the rear leg 3. In this case, the same advantageous results as obtained by this embodiment will be obtained even if the remaining configuration of the baby buggy is the same as this third embodiment.

In the case of the example shown in Figs. 40 and 41, the lock piece 14b of the rear leg 3 to which the upper end of the tension spring 12a is locked is provided inside the upper stopper 14. This lock piece 14b is designed so as to project to the inside of the rear leg 3 through the elongated guide hole 19 of the rear leg 3. The tension spring 12a is connected between these lock pieces 17b and 14b. As usually practiced, both hook-shaped ends of this tension spring 12a are connected to the holes formed in the lock pieces 17b and 14b.

As a result of the use of such a tension spring 12a, the tension spring 12a is contracted when the slider 7 is situated at the upper stop position and is in contact with the upper stopper 14, as shown in Fig. 40. As a result, the baby buggy remains unfolded, as shown in Fig. 31. On the other hand, as shown in Fig. 41, the slider 7 moves down along the rear leg 3 until it comes into contact with the lower stopper 15 resulting from the depressing action of the pedal 27. The slider 7 is locked by the knock pin 16, and the baby buggy is folded up, as shown in Fig. 32. At this time, an upward drawing force is stored in the tension spring 12a. Subsequently, when the knock pin 16 is unlocked, the drawing force of the tension spring 12a acts on the slider 7, whereby the slider 7 moves upward and the baby buggy returns to the unfolded state, as shown in Fig. 31.

In still another modification of this embodiment, the tension spring 12a housed in the rear leg 3 in the embodiment may be provided outside the rear leg 3. In this case, though not being shown in the drawing, the lock piece 17b of the slider 7 is designed so as to project outside, and the lock piece 14b is provided outside the upper stopper 14. The tension spring 12a or the gas spring is hooked between these lock pieces 17b and 14b.

### Fourth embodiment

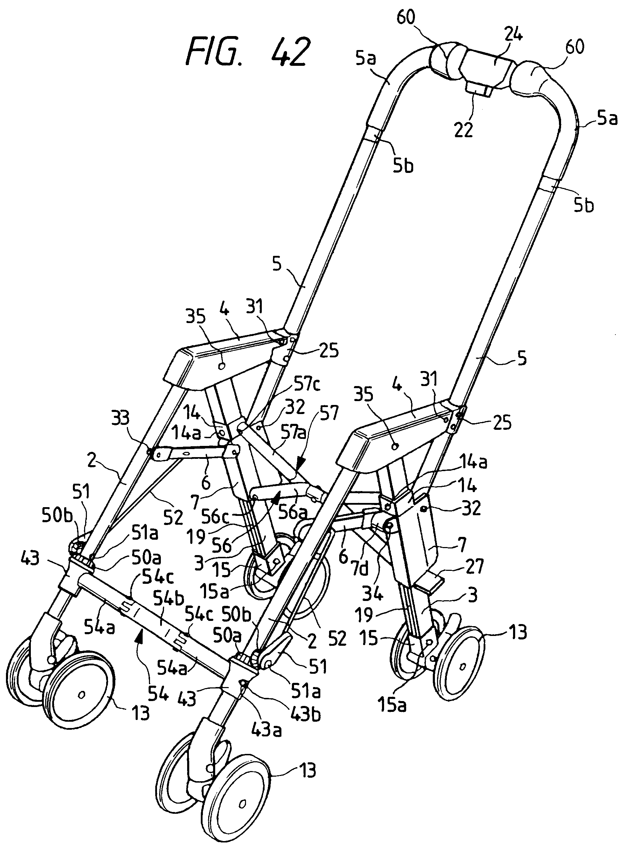

With reference to Figs. 42 through 57, the fourth embodiment will be described.

To make the concept of the invention clearer in the drawings, a seat and associated accessories have been omitted.

As shown in Fig. 42, this collapsible baby buggy is provided with front legs 2, rear legs 3, arm rest members 4, press bars 5, and side bars 6, all of these components being common to the right half and the left half of the baby buggy. Because these components exist on both sides, the construction of the side member on only one side will be explained first.

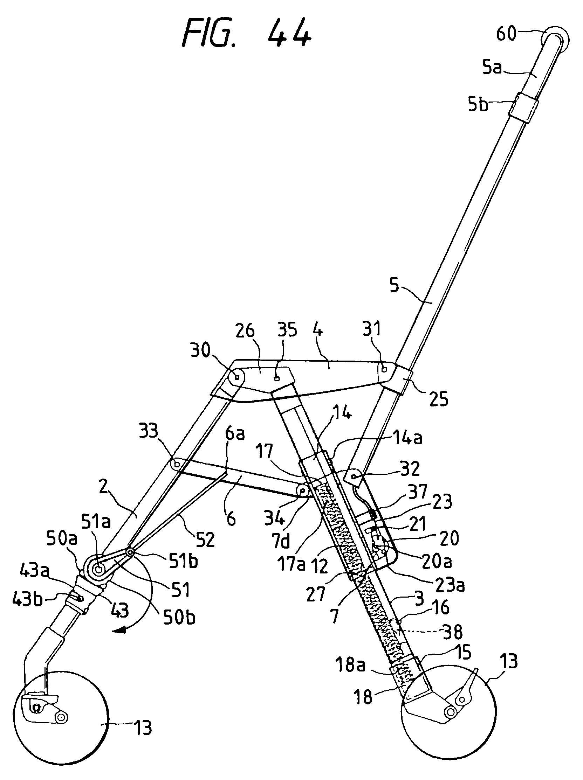

In Fig. 44, a joint member 26 is attached to the upper end of the rear leg 3 by a pivot pin 35 which is rotatively supported by an arm rest member 4. This joint member 26 is rotatively hinged to the upper end of the front leg 2 by a support pin 30. The front leg 2 and the rear leg 13 are both provided with wheels 13.

In this embodiment, the front leg 2 is made of a round pipe, and the rear leg 3 is made of a pipe member having a rectangular parallelepiped cross section. The rear leg 3 is arranged in such a way that the axis along the pivot 30 is normal to the wide side surfaces of the rear leg 3. The shapes of the pipes are not particularly limited in this embodiment, and members having another shape are also usable.

A press bar 5 is pivotally hinged to the rear end of the arm rest member 4 by a pivot pin 31. This press bar 5 is made of a round pipe or the like. The press bar 5 can be inclined in a rearward direction at a desired angle by adjusting an interval between the pivot pin 35 and the pivot pin 31 of the arm rest member 4. As shown in Fig. 13, a sleeve 5b is attached to the upper end of the press bar 5 with a screw or a pin 5h, and an elongated guide hole 5c is formed in the outer periphery of the sleeve 5b. The head of the screw or the pin 5d attached to the collapsible bar 5a is engaged with the elongated guide hole 5c, whereby the collapsible bar 5a can rotate in the circumferential direction of the press bar 5.

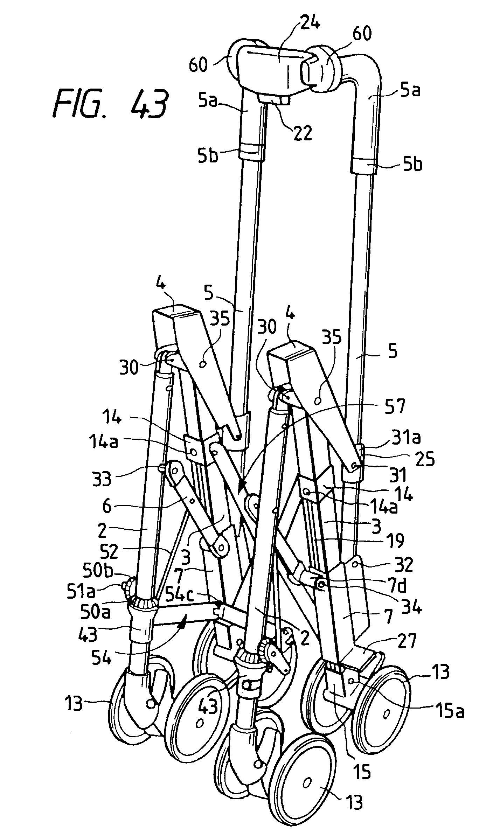

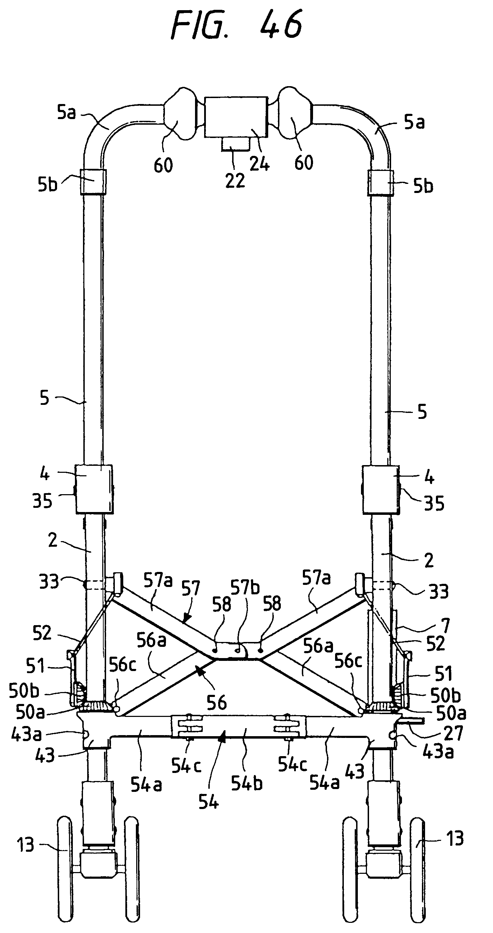

As shown in Fig. 46, the combination of the press bar 5 and a collapsible bar 5a are provided on both sides with respect to the longitudinal center of the framework of the baby buggy. The right and left collapsible bars 5a, 5a are respectively hinged to joint members 60, 60 on both sides of a button case 24 provided at the upper longitudinal center of the framework by means of pivot pins 60c. As a result, it becomes possible to fold the framework in a rearward direction by turning the right and left collapsible bars 5a, 5a around the respective press bars 5, 5, as shown in Fig. 43.

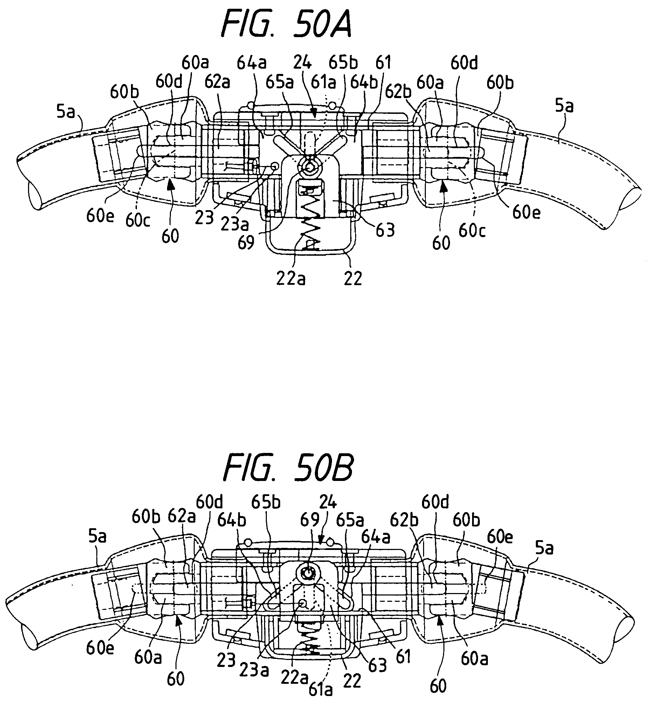

With reference to Figs. 50A and 50B, the folding structure of the joint member 60 will be described. A case body 61 is housed in the button case 24. Each of the joint members 60, 60 is made up of an inner member 60a and an outer member 60b which are fitted together in a collapsible manner. The inner member 60a is attached to the case body 61 and the outer member 60b is attached to the collapsible bar 5a. The inner member 60a and the outer member 60b are jointed together by the pivot pin 60c in such a way as to be collapsible in a substantially horizontal direction.

A through hole 60d is formed through the inner member 60a, whereas an insertion hole 60e is formed in the outer member 60b. Right and left rods 62a and 62b, which will be described later, are simultaneously insertable into the through holes 60d and 60e. As a result of the insertion of the right and left rods 62a and 62b into the through holes 60d and 60e, the inner members 60a and the outer members 60b are locked, whereby it the becomes impossible to fold the inner and outer members.

When the right and left rods 62a and 62b are moved to the center of the case body 61, the inner member 60a and the outer member 60b on both sides of the button case are released from the locked state, whereby the collapsible bars 5a, 5a become freely collapsible in a substantially horizontal direction in relation to the button case 24.

An elongated hole 61a (designated by a dotted line) is formed at the substantial center of the case body 61, as shown in Figs. 50A and 50B. An operation button 22 is provided at a lower portion of the case body 61, and it is vertically movable by downward a restoring force of a compression spring 22a incorporated in the operation button 22. A pin lock member 63 projects upwardly from the operation button 22.

A pair of guide sliders 64a and 64b are respectively disposed in the case body 61 in such a way as to be horizontally slidable along upper and lower channels provided in the case body. The previously mentioned rods 62a and 62b are horizontally attached to the outer edges of the guide sliders 64a and 64b, respectively. The rods 62a and 62b pass through a through hole 60d of the inner member 60a and enter an insertion hole 60e of the outer member 60b.

A diagonally elongated hole 65a is formed so as to extend from the corner of the guide slider 64a close to the longitudinal center of the operation button 22a, and a diagonally elongated hole 65b is formed so as to extend from the corner of the guide slider 64b close to the longitudinal center of the operation button 22b. A guide pin 69 is engaged with the elongated hole 61a of the case body 61, as well as being engaged with the pin lock member 63.

With the previously mentioned construction, as is evident from Fig. 50B, if the operation button 22 is pressed up against the restoring force of the compression spring, the guide pin 69 engaged with the pin lock member 63 moves upward along the elongated hole 61a of the case body 61, and simultaneously the guide pin 69 simultaneously follows the diagonally elongated hole 65a of the left guide slider 64a. As a result, the guide slider 64a moves in a rightward direction along the horizontal channel 61b. Further, the guide pin 69 moves along the diagonally elongated hole 65b of the right guide slider 64b, as a result of which the right guide slider 64b moves horizontally in the leftward direction. Eventually, the right and left rods 62a, 62b move in the inward direction, and then the leading ends of the right and left rods 62a, 62b are removed from the insertion hole 60e of the left outer member 60b, whereby the left joint member 60 becomes collapsible.

As shown in Figs. 50A and 50B, the leading end of a wire 23 is attached to a wire lock pin 23a, and this wire lock pin 23a is locked to the end of the right guide slider 64a. Accordingly, if the operation button 22 is pressed up, the right guide slider 64a moves in a rightward direction, whereby the wire 23 is pulled.

This wire 23 passes through the inside of the collapsible bar 5a and the press bar 5, and it is guided by the slider 7 so as to rotate a rotating plate 20 provided in the slider 7. The right and left rods 62a and 62b move inwardly the moment the operation button 22 is pressed up, which enables the right and left collapsible bars 5a, 5a to be folded as they are shown in Fig. 43.

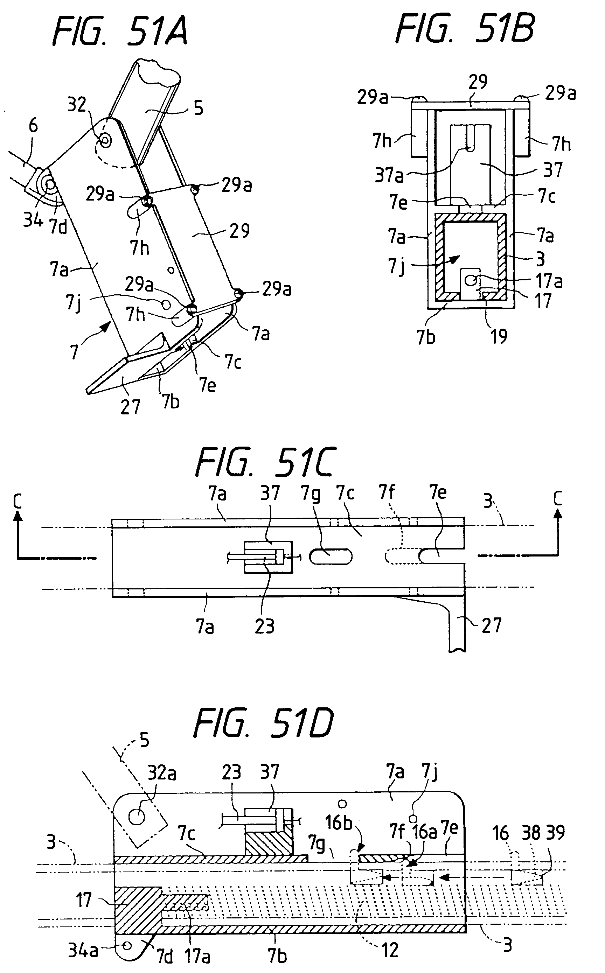

The slider 7 is fitted around the outer periphery of each upper part of the right and left rear legs 3, 3 in a slidable manner as shown in Figs. 51A through 51D. To begin with, the construction common to the right and left sliders 7, 7 will be explained. As shown in the perspective view of Fig. 51A, the slider 7 is provided with a side plates 7a, 7a which are arranged parallel to each other in a symmetrical manner. As shown in Fig. 51B, the side plates 7a, 7a are connected to each other by a bottom plate 7b and a top plate 7c which are parallel to each other, thereby forming a rectangular parallelepiped internal cavity 7i through which the rear leg 3 passes in a slidable manner.

Unless the rear leg 3 is made of a rectangular pipe having a rectangular parallelepiped cross section, the cross section of the internal cavity 7i may be changed corresponding to the shape of the cross section of the rear leg 3.

As shown in Fig. 51D, a through hole 32a is formed in an upper part in the vicinity of one side edge of the side plate 7a, and a pivot pin 32 for connecting the press bar 5 with the slider 7 is supported by this through hole 32a (see Fig. 51A).

Further, as shown in Fig. 51D, a protuberance 7d projects from the lower surface of the bottom plate 7b, and a pivot pin 34 hinged to one end of the side bar 6 is supported by a through hole 34a formed in the protuberance 7d (see Fig. 51A).

The characteristic structure of the slider 7 provided with a compression spring 12, which will be described later, will now be explained. In addition to the previously mentioned structure, as shown in Fig. 51A, a pedal 27 projects outwardly from one of the side plates 7a, 7a. The user presses down the slider 7 with their foot on this pedal 27. A lock piece 17 is attached to the upper end of the bottom plate 7d (i.e., the left end of the bottom plate 7d in Fig. 51D), as shown in Fig. 51D. A projection 17a projects from the lower end of the lock piece 17 (i.e., the right end of the lock piece 17 in Fig. 51D), and the upper end of the compression spring 12, which will be described later, is fitted to this projection 17a.

An elongated notch 7e is formed at a lower portion (a part of the rear leg on the right side in Fig. 51C) along the longitudinal center of the top plate 7c to permit a knock pin 16, which will be described later, to pass through in a downward direction of the rear leg 3, as shown in Fig. 51C. A tapered channel 7f is continuously formed in the bottom surface of the top plate 7c in line with the elongated notch 7e.

As shown in Fig. 51D, during the course of the passage of the knock pin 16 along this tapered channel 7f, the knock pin 16 is pressed against the elastic force of a leaf spring 38, which will be described later, so as to arrive at a point below the surface of the rear leg in the manner as designated by arrow 16a. An elongated cutout 7g is formed substantially at the longitudinal center of the top plate 7c in line with the elongated notch 7e (see Fig. 51C). When the knock pin 16 comes to this elongated cutout 7g after the passage of the tapered channel 7f while remaining compressed to the point below the surface level, the knock pin 16 projects upward as a result of the elastic force of the leaf spring 38.

A wire lock piece 37 is formed substantially at the center of the upper surface of the top plate 7c, as shown in Fig. 51D. A through hole 37a is formed in this wire lock piece 37 to lock the end of the outer tube of a wire 23 which will be described later (see Fig. 51B). Holes 7j, 7j are respectively formed at corresponding positions in the side plates 7a, 7a, in a symmetrical manner, for supporting the support shaft 20a of a rotating plate 20 which will be described later.

Further, as shown in Fig. 51A, the upper sides of the side plates 7a, 7a are connected together by an indication plate 29. This indication plate 29 is attached to supporting sections 7h, 7h formed outside the side plates 7a, 7a with screws 29a, 29a.

As shown in Fig. 51B, in the rear leg 3 which incorporates the compression spring 12, an elongated guide hole 19 is formed along the longitudinal center of the rear leg 3 from the upper end to the rear end thereof so that the lock piece 17 provided on the bottom plate 7b of the slider 7 can travel inside the rear leg while it's projection is held straight inwardly when the slider 7 moves along the outer periphery of the rear leg 3 in a slidable manner.

As shown in Fig. 42, an upper stopper 14 is fixedly fitted on the outer periphery of each of the upper portions of the right and left rear legs 3, 3 with a screw or a pin 14a. An upper stop position of the slider 7 is the position where the slider 7 comes into contact with this upper stopper 14, as shown in Fig. 44.

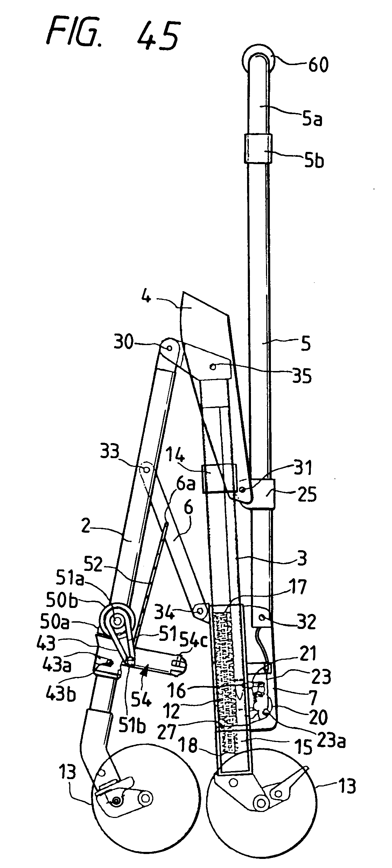

Further, a lower stopper 15 is attached to the outer periphery of the lower end of each of the right and left rear legs 3, 3 with a screw or a pin 15a, as shown in Fig. 42. A lower stop position of the slider 7 is the position where the slider 7 comes into contact with this lower stopper 15, as shown in Fig. 45.

As shown in Fig. 46, front leg sleeve 43, 43 are rotatively attached to predetermined lower portions of the right and left front legs 2, 2. Specifically, a pin or a screw 43b (see Fig. 44) is attached to the predetermined lower position of the front leg 2. The elongated guide hole 43a is circumferentially formed in the front leg sleeve 43, and the head of the screw 43b is located on this. The front leg sleeve 43 is rotatable within the range of the length of the elongated guide hole 43a.

Further, the right and left front leg sleeves 43, 43 are connected together by a front leg lateral bar 54. The front leg lateral bar 54 is made up of right and left lateral bar members 54a, 54a with a center lateral bar member 54b sandwiched between them. The lateral bar members 54a, 54a and the center lateral bar member 54 are hinged to each other by two pivot pins 54c, 54c. The right and left front leg sleeves 43, 43 rotate rearwardly in opposite directions, whereby the lateral bar 54 can be folded into a U-shaped form in a substantially rearward direction around the right and left pivot pins 54c, 54c (see Fig. 43).

First bevel gears 50a, 50a are respectively fitted around the outer peripheries of the front leg sleeves 43, 43. One of the first bevel gears 50a, 50a will now be explained. A second bevel gear 50b which meshes with the first bevel gear 50a is attached to the outside of the front leg 2 so as to be rotatable around a pivot pin 51a (see Fig. 44). An rocking piece 51 projects from this second bevel gear 50b.

Further, as shown in Fig. 44, a joint bar 52 with both ends thereof being bent into a L-shaped form is rotatively hooked between a through hole 51b formed in the vicinity of the leading end of the rocking piece 51 and the through hole 6b formed at some point in the side bar 6.

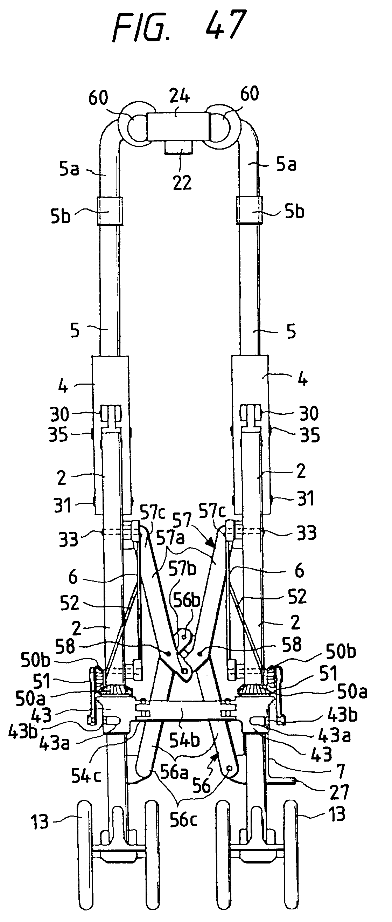

With this configuration, as shown in Fig. 45, when the right and left sliders 7, 7, which will be described later, move downward along the rear legs 3, 3 in the longitudinal direction thereof, the hinged portion (the position of the through hole 6a) between the side bar 6 and the joint rod 52 moves downward. At this time, the rocking pieces 51 rotate clockwise (in the direction designated by the arrow shown in Fig. 44) via the joint bars 52 as viewed from the side of the baby buggy. As a result, as the first bevel gear 50a fixed to the rocking piece 51 rotates, the second bevel gear 50b is rotated by the first bevel gear 50a in an inner rearward direction of the framework, as shown in Fig. 47, so that the right and left front leg sleeves 43, 43 rotate in a rearward direction with respect to each other. The rearward rotation of the front leg sleeves 43 results in the front leg lateral bar 54 being folded into a U-shaped form at the right and left pivot pins 54c, 54c, as a result of which the baby buggy can be laterally folded up.

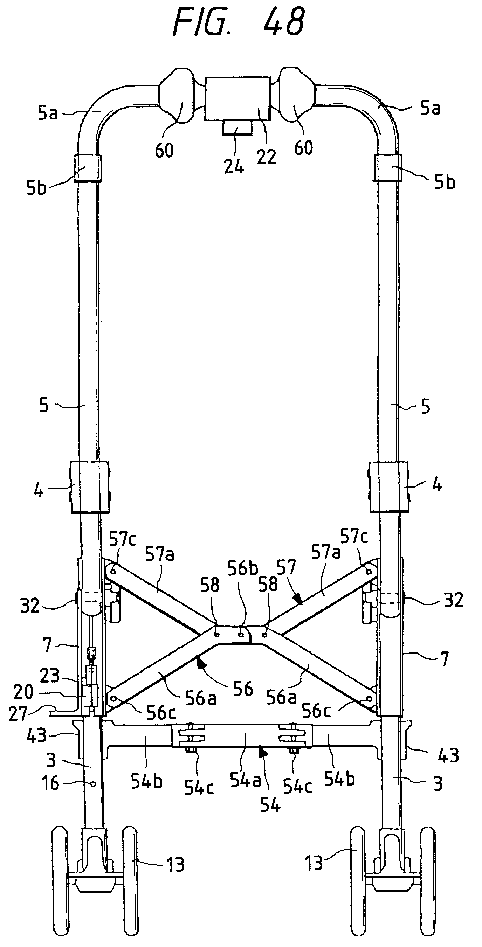

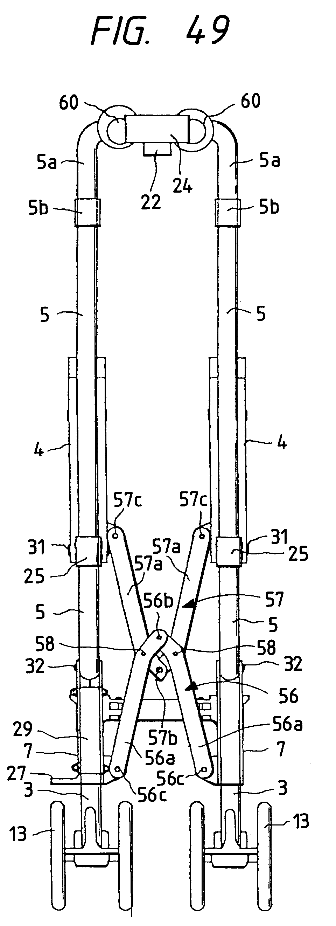

Furthermore, as can be seen from the rear view in Fig. 48, the right and left sliders 7, 7 are connected together by a slider joint link 56. This slider joint link 56 is made up of two V-shaped collapsible bars 56a, 56a. These collapsible bars 56a, 56a are arranged with their hinged portions directed upward. These collapsible bars 56a, 56a are rotatively hinged to each other by a pivot pin 56b at the longitudinal center between the rear legs 3, 3. The opposite ends of the thus hinged collapsible bars 56a, 56a are respectively connected to the right and left sliders 7, 7 so as to be respectively rotatable around pivot pins 56c in such a way that the slider joint link 56 is pivotally collapsible with its center hinged portion moving upward in the longitudinal center of the baby buggy as it is shown in Fig. 49.

The right and left rear legs 3, 3 are connected together by a rear leg joint link 57 at upper portions of the sliders 7, 7. Like the slider joint link 56, this rear leg joint link 57 is made up of right and left V-shaped collapsible bars 57a, 57a. These collapsible bars 57a, 57a are rotatively connected together by a pivot pin 57b, and the opposite ends of the thus connected collapsible bars 57a, 57a are respectively hinged to the right and left upper stoppers 14, 14 attached to the right and left rear legs 3, 3 by pivot pins 57c, 57c in such a way that the rear leg joint link 57 becomes collapsible within the plane in line with the longitudinal direction of the baby buggy. To fold the rear leg joint link 57 in the direction opposite to the folding direction of the slider joint link 56, the right and left collapsible bars 57a, 57a are arranged with their hinged portions directed downwards.

The slider link 56 and the rear leg joint link 57 are connected together at two hinged portions thereof by pivot pins 58, 58 in such a way as to be folded with their center hinged portions moving apart from each other.

By virtue of this configuration, the sliders 7 which will be described later are positioned at the upper stop position while the baby buggy is laterally unfolded as it is shown in Fig. 48. For this reason, the slider join link 56 and the rear leg join link 57 are stretched so as to be brought in line with each other. On the other hand, the right and left sliders 17, 17 which will be described later move downward to the lower stop positions when the baby buggy is laterally folded up as it is shown in Fig. 49. The slider joint link 56 and the rear leg joint link 57 are folded up by way of the pivot pins 58, 58 in such a way that the center hinged portions 56b and 57b move apart from each other in the longitudinal direction of the baby buggy.

A folding mechanism of this embodiment will be described in detail with particular attention being focused on the left rear leg 3 provided with the pedal frame 9 which will be described later. The main power source for the folding mechanism is provided on the left rear leg 3, which allows for convenience of operation. As a matter of course, the main power source can be provided on the right rear leg 3.

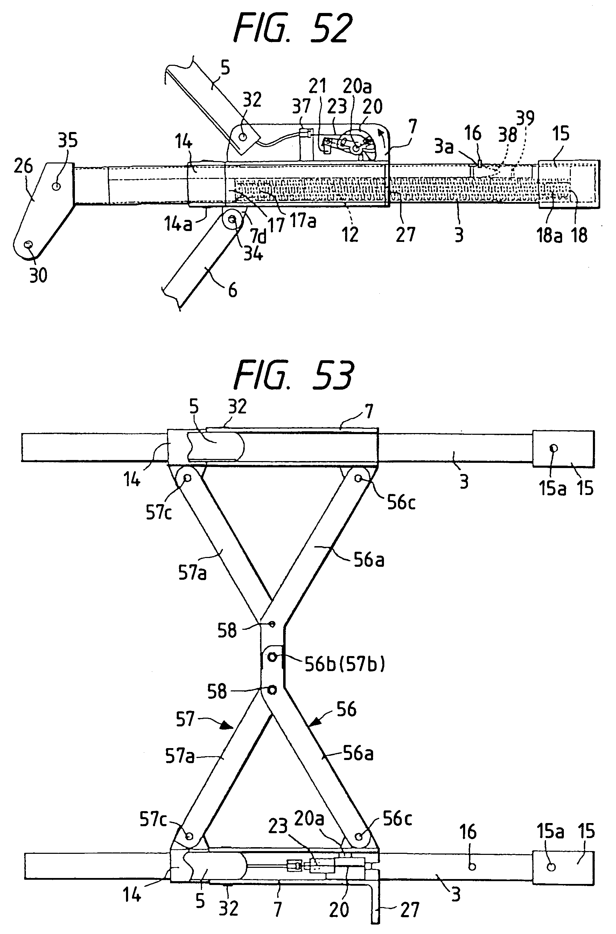

In Fig. 52, the slider 7 is fitted around the outer periphery of the rear leg 3 in a slidable manner, and the lock piece 17 attached to the slider 7 projects to the inside of the rear leg 3 along the elongated guide hole 19. This lock piece 17 has a projection 17a that projects in the downward direction. On the other hand, a lock piece 18 attached to the bottom of the rear leg 3 has a projection 18a that projects in the upward direction. The compression spring 12 is sandwiched between the lock pieces 17 and 18 in such a way as to be fitted to the projections 17a and 18a.

Although a coil spring is used for the compression spring 12 in the above construction, another elastic member, for example, a gas spring is also usable. With a gas spring, a piston rod moves back and forth under the pressure of gas compressed within a gas-filled piston body.

The compression spring 12 is housed within the rear leg 3 in the above configuration. However, this compression spring 12 may be provided outside the rear leg 3. In this case, though not being shown in the drawings, the lock piece 17 of the slider 7 may be provided so as to project outside the rear leg 3. The lower lock piece 18 is further provided on the outside of the lower end of the rear leg 3, and the compression spring 12 or the gas spring may be provided between them.

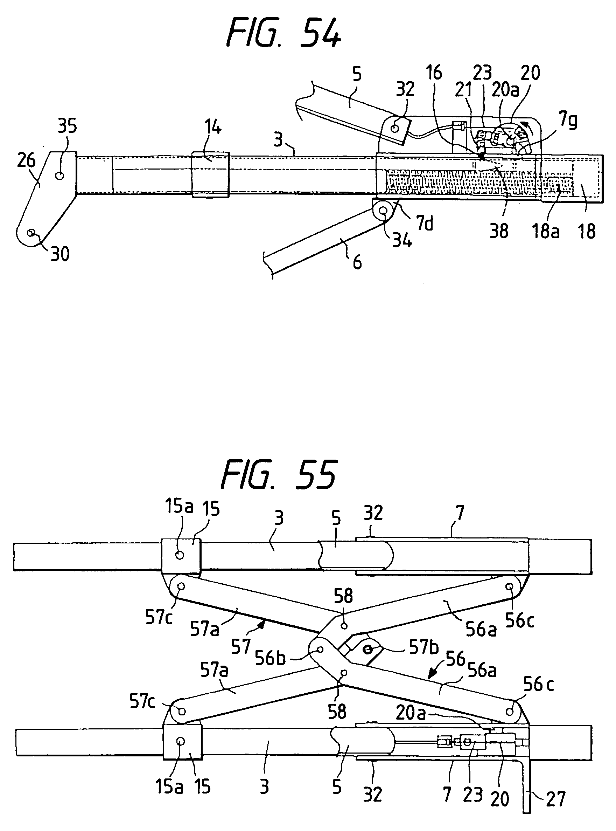

Fig. 54 shows the slider 7 that is brought in contact with the lower stopper 15. In this state, the knock pin 16 is brought into alignment with the elongated cutout hole 7g of the slider 7, and therefore the knock pin 16 projects from the side surface of the rear leg 3 into the elongated cutout hole 7g. A spring chamber 39 is formed inside the rear leg 3 corresponding to the elongated cutout hole 7g, and the folded leaf spring 38 is housed in this spring chamber 39. The knock pin 16 is mounted on this leaf spring 38, and this knock pin 16 projects out of the side surface of the hole 3a while being resiliently supported by the leaf spring 38.

Accordingly, when the slider 7 is located at the lower stop position and remains in contact with the lower stopper 15, as shown in Fig. 54, the knock pin 16 projects to the outside as a result of the resilient force of the leaf spring 38 while it is brought in alignment with the elongated cutout hole 7g of the slider 7. As a result, the knock pin 16 locks the inner end of the elongated cutout hole 7g, and hence the slider 7 is locked at the lower stop position against the restoring force of the compression spring 12.

The rotating plate 20 is supported by the support shaft 20a that is provided between the side plates 7a, 7a of the slider 7, as shown in Fig. 52 or 54. This rotating plate 20 is disposed so as to rotate and return to its original position by means of a torsion spring (not shown). The end of the wire 23 is connected to this rotating plate 20, and the wire 23 is connected to an operation button 22 provided at an upper part of the press bar 5 through the internal cavity of the press bar 5.

The internal structure of the operation button 22 is omitted from the drawing. The end of the wire 23 is provided around the outer periphery of a pulley, or the like, and this pulley is rotated in conjunction with the pressing action of the operation button 22, so that the wire 23 is drawn. The rotating plate 20 rotates around the support shaft 20a by way of this wire 23, so that a protuberance 21 projecting from the circumference of the rotating plate 20 rotates to press down the knock pin 16. Then, the knock pin 16 is pressed to come to the point below the surface of the rear leg 3, whereby the knock pin 16 is disengaged from the elongated cutout hole 7g of the slider 7.

As a result of this disengagement of the knock pin 16 from the elongated cutout hole 7g, the slider 7 is urged upward by the restoring force of the compression spring 12 and moves upwardly towards the upper stopper 14. On coming into contact with the upper stopper 14, the slider 7 comes to a stop.

The operation of the collapsible baby buggy having the above mentioned construction according to this embodiment will now be described.

Fig. 52 shows the slider 7 which is located at the upper stop position and comes into contact with the upper stopper 14. The state of the slider shown in this drawing corresponds to the state of the seating apparatus shown in Fig. 44. The side bar 6 pushes the front leg 2 in a forward direction, so that the legs are opened. Simultaneously, the press bar 5 is tilted in a rearward direction and supported by the pivot pin 32 hinged to the slider 7 and the pivot pin 31 hinged to the rear end of the arm rest member 4, whereby the baby buggy is unfolded. With the baby buggy in the unfolded state, the upper stopper 14 hinders the upward movement of the slider 7 even if the compression spring 12 has a residual restoring force.

Further, with the baby buggy unfolded, the front leg lateral bar 54 is fully stretched, as shown in Fig. 46. The right and left pivot pins 58, 58 which hinge the slider joint link 56 and the rear leg joint link 57 together are also stretched, as shown in Fig. 53.

As shown in Fig. 54, when the slider 7 moves to come into contact with the lower stopper 15 along the rear leg 3 resulting from the user's depressing action of the pedal 27, the slider 7 is locked by the knock pin 16 at the lower stop position.

As previously described with reference to Fig. 51D, the tapered channel 7f is formed in the inner surface of the top plate 7c of the slider 7, and hence the knock pin 16 is pressed down by the tapered channel 7f to such an extent that it arrives at the point below the surface of the rear leg 3 during the course of the downward movement of the slider 7 from the upper stop position. As a result, the slider 7 can pass over the knock pin.

At this time, as shown in Fig. 54, the press bar 5 and the side bar 6 are rotatively hinged to each of the right and left sliders 7, 7 by the pivot pins 32 and 34. As a result of the downward movement of the hinged portion (the pivot pin 32) between the slider 7 and the press bar 5, the press bar 5 rotates around the hinged portions (the pivot pins 31, 32, and 35) between the slider 7, the press bar 5, and the arm rest member 4 so as to project upright, and, at the same time, the arm rest member 4 is steeply tilted in a downward direction.

Further, as shown in Fig. 45, when the hinged portion (the pivot pin 34) between the slider 7 and the side bar 6 moves downwardly, the front leg 2 hinged to the other end of the side bar 6 by the pivot pin 33 rotates around the position (the pivot pin 30) where the front leg 2 and the rear leg 3 are hinged together, so that the front leg 2 is folded toward the rear leg 3. In this way, the baby buggy is folded up longitudinally, as shown in Fig. 45.

On the other hand, in conjunction with the downward movement of the right and left sliders 7, 7, the right and left front legs 2, 2 are folded toward the rear legs 3, 3 via the side bars 6, 6. Concurrently, the leading end of the rocking piece 51 is rotated downwardly around the rotating axis of the rocking piece via the joint bar 52, as shown in Fig. 45. The second bevel gear 50b attached to the rocking piece 51 rotates clockwise as viewed from the outside. Associated with the rotation of the right and left second bevel gears 50b, 50b, the right and left first bevel gears 50a, 50a rotate as being shown in Fig. 47. The right and left front sleeves 43, 43 attached to the first bevel gears 50a, 50a rearwardly rotate in opposite directions. As a result, the front leg lateral bar 54 fixed with both ends thereof attached to the sleeves 43, 43 is folded up around the right and left pivot pins 54c, 54c, so that the right and left front legs 2, 2 are laterally folded up.

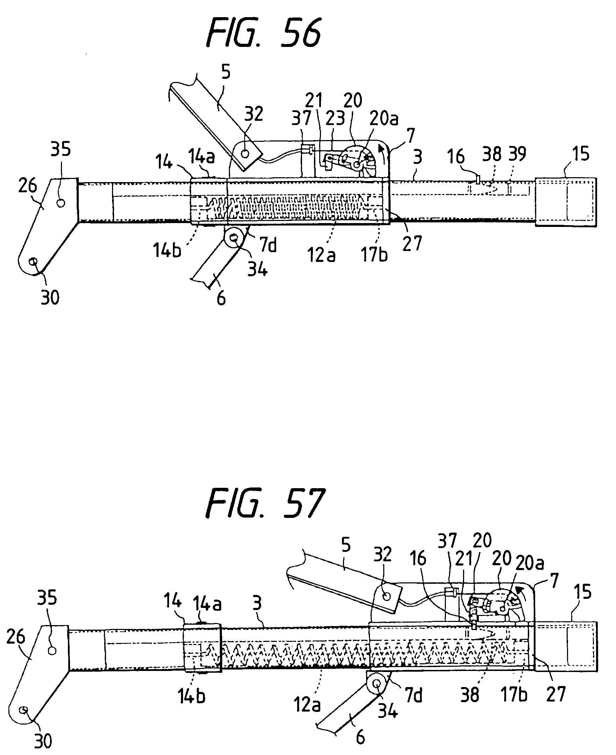

In association with the folding up motion of the baby buggy, the slider joint link 56 hinged at its both ends hinged to the sliders 7, 7 is folded up along the center pivot pins 56a and 57a around the right and left pivot pins 58, 58, which are hinged to the rear leg joint ink 57, as the sliders 7, 7 move downward as shown in Fig. 55. As a result, the right and left rear legs 3, 3 are laterally folded up.

In this way, the overall framework of the baby buggy is folded up as shown in Fig. 43, that is, the framework is folded up in both the longitudinal and lateral directions thereof.

Subsequently, the drawing action of the wire 23 brings about the rotation of the rotating plate 20, as shown in Fig. 54, and the protuberance 21 presses down the knock pin 16. This pressing action of the knock pin 16 results in the slider 7 being released from the locked state. Eventually, the restoring force of the compression spring 12 is released at one time. As shown in Fig. 52, the slider 7 moves upward along the rear leg 3 and stops at the upper stop position where it comes into contact with the upper stopper 14.

Simultaneously, the first and second bevel gears 50a, 50b are rotated in the opposite direction together with the upward movement of the sliders 7, 7 via the joint bars 52, 52, thereby causing the front leg lateral bar 54 to be forcefully unfolded again. Corresponding to this unfolding action of the front leg lateral bar 54, the rear leg lateral bar 55 is also stretched. Furthermore, at the same time, the slider joint link 56 and the rear leg joint link 57 are stretched again, as a result of which the overall framework of the baby buggy is unfolded both in both laterally and longitudinally, as shown in Fig. 42.

Figs. 56 and 57 show a modification of this embodiment. These drawings correspond to Figs. 52 and 54. In the above embodiment, the compression spring 12 is sandwiched between the lock piece 17 of the slider 7 and the lock piece 18 of the rear leg 3. A tension spring 12a is used in lieu of the compression spring 12, and both ends of this tension spring 12a are connected between a lock piece 17b attached to a lower portion of the slider 7 and a lock piece 14b attached to an upper portion of the rear leg 3. In this case, the same advantageous results as obtained by this embodiment will be obtained even if the remaining configuration of the baby buggy is the same as this fourth embodiment.

In the case of the example shown in Figs. 56 and 57, the lock piece 14b of the rear leg 3 to which the upper end of the tension spring 12a is locked is provided inside the upper stopper 14. This lock piece 14b is designed so as to project to the inside of the rear leg 3 through the elongated guide hole 19 of the rear leg 3. The tension spring 12a is connected between these lock pieces 17b and 14b. As usually practiced, both hook-shaped ends of this tension spring 12a are connected to the holes formed in the lock pieces 17b and 14b.

As a result of the use of such a tension spring 12a, the tension spring 12a is contracted when the slider 7 is situated at the upper stop position and is in contact with the upper stopper 14, as shown in Fig. 56. As a result, the baby buggy remains unfolded, as shown in Fig. 44. On the other hand, as shown in Fig. 57, the slider 7 moves down along the rear leg 3 until it comes into contact with the lower stopper 15 resulting from the pressing down action of the pedal 27. The slider 7 is locked by the knock pin 16, and the baby buggy is folded up, as shown in Fig. 45. At this time, an upward drawing force is stored in the tension spring 12a.

Subsequently, when the knock pin 16 is unlocked, the drawing force of the tension spring 12a acts on the slider 7, whereby the slider 7 moves upward and the baby buggy returns to the unfolded state, as shown in Fig. 44.

In still another modification of this embodiment, the tension spring 12a housed in the rear leg 3 in the embodiment may be provided outside the rear leg 3. In this case, though not being shown in the drawing, the lock piece 17b of the slider 7 is designed so as to project outside, and the lock piece 14b is provided outside the upper stopper 14. The tension spring 12a or the gas spring is hooked between these lock pieces 17b and 14b.

### Fifth embodiment

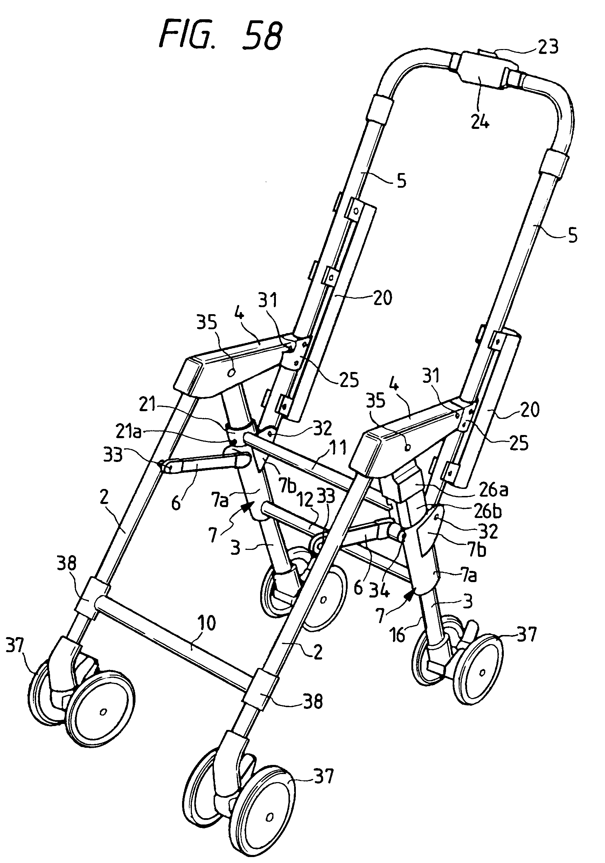

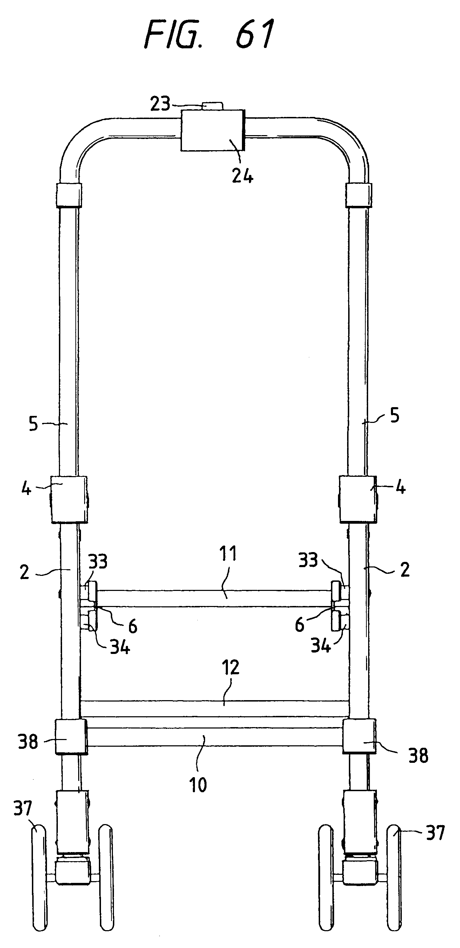

With reference to Figs. 58 through 63, the fifth embodiment will be described.

To make the concept of the invention clearer in the drawings, a seat and associated accessories have been omitted.

As shown in Fig. 58, this collapsible baby buggy is provided with front legs 2, rear legs 3, arm rest members 4, press bars 5, and side bars 6, all of these components being common to the right half and the left half of the baby buggy. Because these components exist on both sides, the construction of the side member on only one side will be explained first.

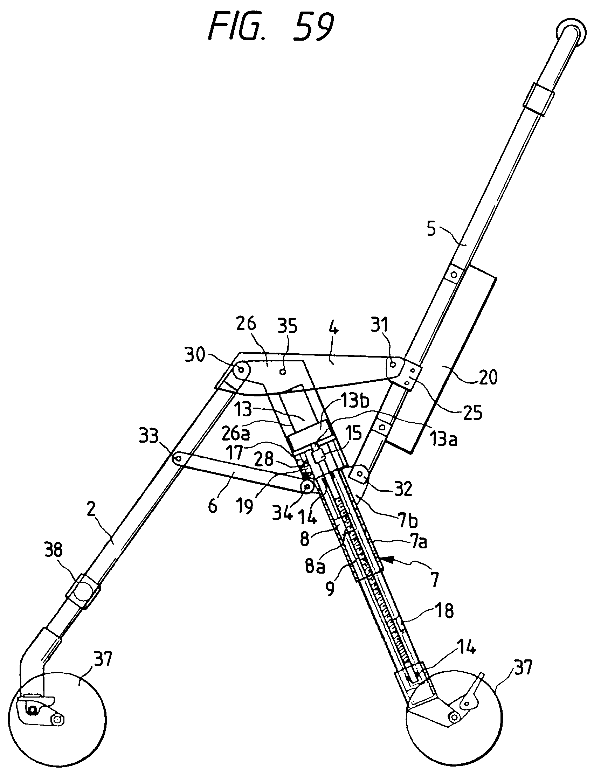

In Fig. 59, a joint member 26 is attached to the upper end of the rear leg 3 by a pivot pin 35 which is rotatively supported by an arm rest member 4. This joint member 26 is rotatively hinged to the upper end of the front leg 2 by a support pin 30. The front leg 2 and the rear leg 13 are both provided with wheels 37.

In this embodiment, the front leg 2 is made of a round pipe, and the rear leg 3 is made of a pipe member having a rectangular parallelepiped cross section. It is necessary to make the rear leg 3 hollow so that a male screw bar 9, which will be described later, can be inserted into this rear leg 3. For example, this rear leg 3 should preferably be made of a pipe having an elliptical cross section.

The rear end of the arm rest member 4 is rotatively hinged to a press bar sleeve 25 attached to the press bar 5 by a pivot pin 31. This press bar 5 is made of a round pipe or the like. As shown in Fig. 58, the press bar 5 extends from the rear end of each of the right and left arm rest members 4, 4, and an upper portion of the press bar 5 is curved into a substantially U shape. The curved portions of the press bars 5 are connected together via a case 24 provided at the upper center of the baby buggy. This case 24 is provided with an operation button 22 which will be described later. The press bar 5 can be inclined in a rearward direction at a desired angle by adjusting an interval between the pivot pin 35 and the pivot 31 of the arm rest member 4.

As shown in Fig. 58, both ends of a lateral bar 10 are attached to front leg sleeve 28, 28 that are attached to the lower portions of the right and left front legs 2, 2 in order to connect the right and left side members together. Similarly, a lateral bar 11 is connected between a stopper housing section 26b, which is fixedly provided at an upper portion of the rear leg 3 and will be described later, and an upper stopper 21 fixedly provided at an upper part of the other rear leg 3 with a pin 21a. Further, a lateral bar 12 is connected between the right and left sliders 7, 7. These lateral bars 10, 11 and 12 are fixedly arranged in parallel with each other. As a result of this, the symmetry and rigidity of the right and left side members are ensured.

The sliders 7, 7 are fitted around the outer periphery of the right and left rear legs 3, 3 in a slidable manner.

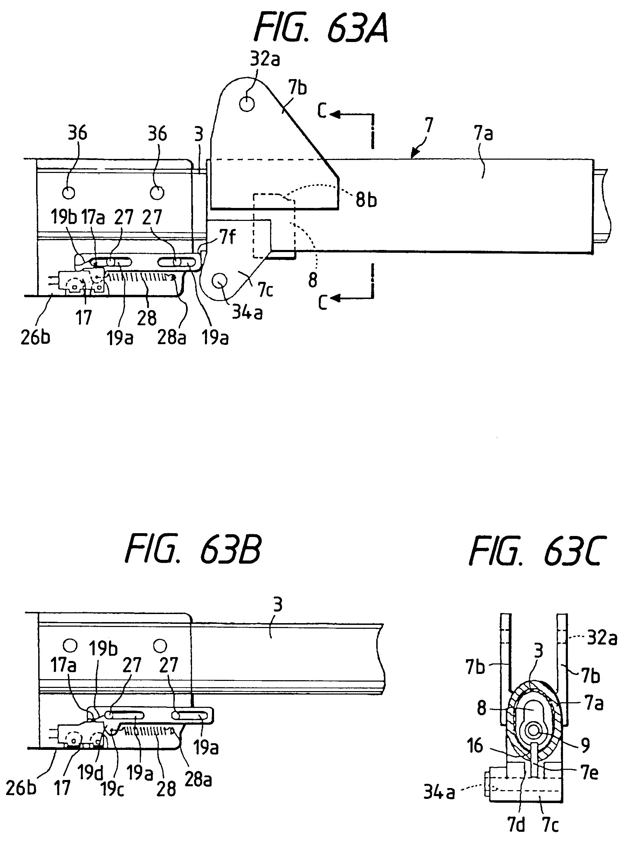

This slider 7 has a tube portion 7a whose internal shape corresponds to the outer shape of the rear leg 3 having a substantially elliptical cross section, as shown in Figs. 63A and 63C. A pair of protuberances 7b, 7b which are parallel to each other are attached to both side surfaces of this tube portion 7a along the longitudinal axis of the slider 7. Through hole 32a, 32a are formed in these protuberances 7b, 7b. The press bar 5 is hinged to the sliders 7, 7 by inserting a pivot pin 32 into each of the through holes 32a, 32a.

A support 7c is fixedly attached to the opposite longitudinal side surface in relation to the side surface from which the protuberances 7b, 7b project. A pivot pin 34 is inserted into a through hole 34a formed in the support 7c to hinge one end of the side bar 6 to the slider 7.

The above construction is common to the right and left sliders 7, 7 provided on the right and left rear legs 3, 3. One rear leg 3 having the male screw bar 9, which will be described later, will be hereinafter referred to as the rear leg 3. The slider 7 provided on the outer periphery of this rear leg 3 has an additional construction as will be described below.

As shown in Fig. 63C, a retaining piece 7d is attached along the internal longitudinal center of the support 7c of the slider 7 so as to face the tube portion 7a. A guide piece 7e is attached to this retaining piece 7d in such a way as to project into the inside of the tube portion 7a. Further, a slide member 8 is fixed to the leading end of the guide piece 7e.

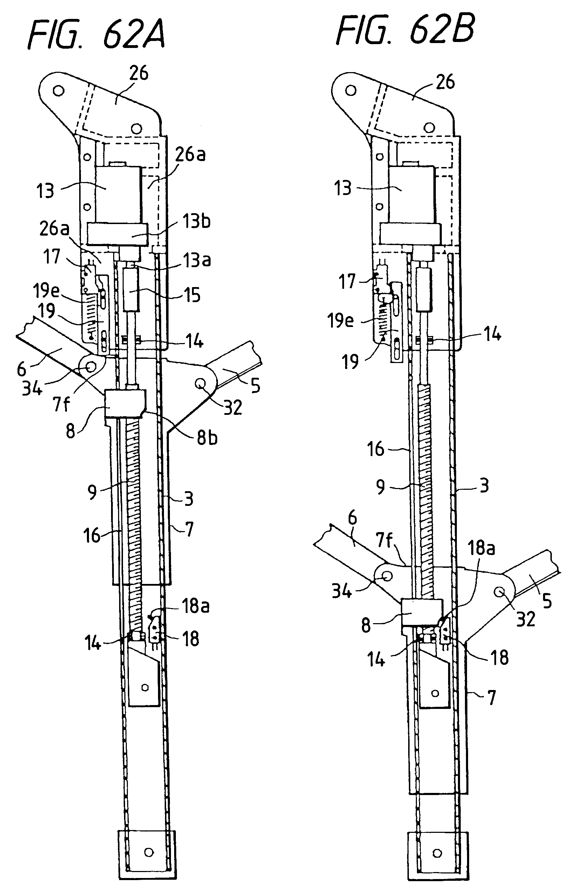

This guide piece 7e connects the slider 7 attached to the outside of the rear leg 3 with the slide member 8 provided within the slider 7. An elongated guide hole 16 is longitudinally formed in the rear leg 3 as a linear path of the guide piece 7e (Fig. 62A or 62B).

As shown in Fig. 63C, the slide member 8 is housed in the tube portion 7a of the slider 7 (see Fig. 62A or 62B). A female screw thread 8a is cut on the internal surface of the slide member 8, and the male screw bar 9 is screwed into the slide member 8 in the longitudinal direction of the rear leg 3.

The male screw bar 9 is longitudinally disposed in the rear leg 3, as shown in Fig. 62A or 62B, and it is rotatively supported at its upper and lower ends by bearings 14, 14 provided in the same rear leg 3. The upper end of the male screw bar 8 is directly jointed to a rotating shaft 13a of an electric motor 13 by means of a sleeve 15.

As previously mentioned, the joint member 26 (Fig. 59) is attached to the upper end of the rear leg 3, and this joint member 26 has a motor storage space 26a in a lower portion thereof. The electric motor 13 is fixed in this storage space 26a with a screw. The electric motor 13 is provided with a decelerating mechanism 13b, and the torque of the motor 13 is transmitted to the rotating shaft 13b after having been converted to appropriate rotating speed. A battery or a dry cell can be used as the power source of this electric motor 13. For this reason, a dry cell case 20 is attached to the side of the press bar 5. A lead wire (not shown) inserting inside the press bar 5 is connected to the electric motor 13.

A switch 23 is provided in the case 24 disposed at an upper part of the press bar 5. A lead wire (not shown) connected to the switch 23 is also inserted in the press bar 5. This switch 23 should preferably be designed so as to allow the electric motor 13 to rotate in both directions.

With the above construction, when the male screw bar 9 rotates as a result of the driving of the electric motor 13, the female screw 8a in the slide member 8 follows this rotating motion. As a result, the guide piece 7e of the slider 7 is linearly guided by the elongated guide hole 16 of the rear leg 3, and the slider 7 moves in the longitudinal direction of the rear leg 3. The electric motor 13 can rotate in both directions, and hence the slider 7 can travel either upwards or downwards in the longitudinal direction of the rear leg 3 by the switching action of the switch 23.

A stopper housing 26b is attached to a lower portion of the joint member 26 by pins 36, 36, as shown in Fig. 62A or 62B. An upper stopper means 17 is disposed in this stopper housing 26b for stopping the upward movement of the slider 7. A limit switch 17 is used as this stopper means 17, as shown in Fig. 63A or 63B. A reciprocating piece 19 is provided to ensure the actuation of the limit switch 17.

The reciprocating piece 19 has two elongated holes 19a, 19a which are spaced apart from, and in line with, each other, as shown in Fig. 63B. A projecting tapered surface 19 b is formed in the reciprocating piece 19 in line with the elongated holes 19a, 19a, and a protuberance 19d projects from the side surface of the reciprocating piece 19. A hook hole 19c is formed in this protuberance 19d. Two pins 27, 27, which are spaced apart from each other in the direction of the movement of the slider 7, are fixed inside the stopper housing 26b, as shown in Fig. 63A. These pins 27, 27 are respectively fitted in the elongated holes 19A, 19A of the reciprocating piece 19. When the reciprocating piece 19 moves toward the slider 7, the lower end of the reciprocating piece 19 projects out of the stopper housing 26b. Moreover, a pin 28a is fixed to the slider 7 within the stopper housing 26b, and a tension spring 28 is connected between the pin 28a and the hook hole 19c of the reciprocating piece 19.

By virtue of such a construction, the reciprocating piece 19 is guided by the pings 27, 27. While the drawing force of the tension spring 28 affects on the reciprocating piece 19, the lower end of the reciprocating piece 19 projects out of the stopper housing 26b. As a result, the slider 7 moves upward, and the end 7f (Fig. 63A) of the slider 7 presses up the reciprocating piece 19. Then, the reciprocating 19 moves upward against the drawing force of the tension spring 28. When the slider 7 moves downward again, the lower end of the reciprocating piece 19 projects outside toward the slider 7 again as a result of the drawing force of the tension spring 28.

The limit switch 17 is connected to the power supply circuit of the electric motor 13 in order to send a start or stop signal to the electric motor 13. For this reason, a switch piece 17a is attached at the position where it is turned on and off when coming into contact with, or being disengaged from, the projecting tapered surface 19b of the reciprocating piece 19.

When the slider 7 moves upward, as shown in Fig. 63A, the switch piece 17a of the limit switch 17 is disengaged from the projecting tapered surface 19b of the reciprocating piece 19. As a result, the reciprocating piece 19 is pushed so that the lower end of the reciprocating piece 19 projects out of the housing, and the power supply circuit is closed, which in turn turns the electric motor 13 off. This position is the upper stop position of the slider 7. Furthermore, as shown in Fig. 63B, when the slider 7 moves downward, the switch piece 17a of the limit switch 17 comes into contact with the projecting tapered surface 19b of the reciprocating piece 19, whereby the reciprocating piece 19 is pushed into the housing. This pushing action results in the power supply circuit being turned on, and the electric motor 13 starts to rotate.

Another limit switch 18 is attached to a lower position of the rear leg 3, as shown in Fig. 62A or 62B. When the slide member 8 moves downward resulting from the rotation of the male screw bar 9, a tapered side 8b provided at a lower angular end of the slide member 8 comes into contact with a switch piece 18a of the limit switch 18, whereby the limit switch 18 is opened or closed. This limit switch 18 is also connected to the power supply circuit of the electric motor 13, and it is designed so as to send a start or stop signal to the electric motor 13. When the power supply circuit is closed when the tapered side 8b of the slide member 8 comes into contact with the switch piece 18a of the limit switch 18, the slider 7 moving downward is stopped. This position is the lower stop position of the slider 7.

The operation of the collapsible baby buggy having the above mentioned construction according to this embodiment will now be described.

Fig. 62A shows the slider 7 that is stopped at the upper stop position after having moved upward in the longitudinal direction of the rear leg 3. At this time, the end 7f of the slider 7 comes into contact with the lower end of the reciprocating piece 19, which in turn pushes the reciprocating piece 19 up. As a result, the limit switch 17 is closed, and the electric motor 13 is stopped.

The state of the slider shown in this drawing corresponds to the unfolded seating apparatus shown in Fig. 59. The side bar 6 pushes the front leg 2 in a forward direction, so that the legs are opened. Simultaneously, the press bar 5 is tilted in a rearward direction and supported by the pivot pin 32 hinged to the slider 7 and the pivot pin 31 hinged to the rear end of the arm rest member 4, whereby the baby buggy is unfolded.

When the electric motor 13 is activated, the male screw bar 9 rotates, as shown in Fig. 62B. As a result, the slide member 8 moves downward, and the slider 7 moves downward in the longitudinal direction of the rear leg 3. The limit switch 18 is closed when the slider 7 arrives at the lower stop position, whereby the electric motor 13 is stopped.

At this time, as shown in Fig. 62, the right and left sliders 7, 7 are fixedly connected together by the press bar 5. Hence, the other slider 7 also moves downward in the longitudinal direction of the rear leg 3 as the slider 7 moves downward. In association with the downward movement of this, the press bar 5, the arm rest 4, and the side bar 6 rotate around the hinged portions (the pivot pins 31, 32, and 35), whereby the press bar 5 projects upright, and the arm rest member 4 is steeply tilted in a downward direction.

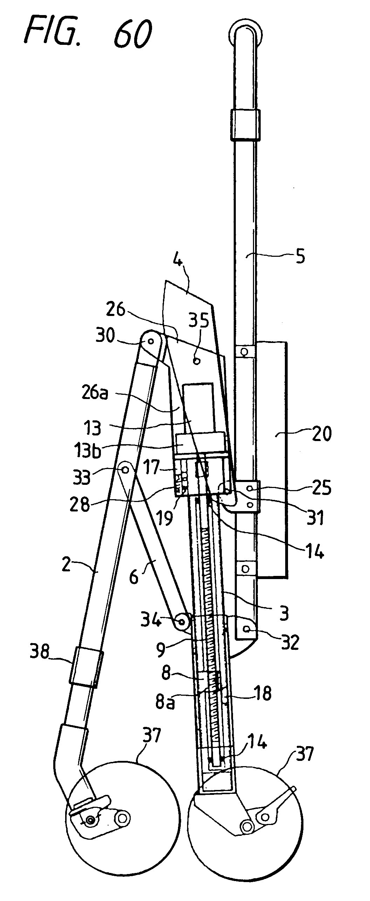

Further, as shown in Fig. 60, when the hinged portion (the pivot pin 34) between the slider 7 and the side bar 6 moves downwardly, the front leg 2 hinged to the other end of the side bar 6 by the pivot pin 33 rotates around the position (the pivot pin 30) where the front leg 2 and the rear leg 3 are hinged together, so that the front leg 2 is folded toward the rear leg 3. In this way, the baby buggy is folded up longitudinally.

When the electric motor 13 is reversely rotated, the male screw bar 9 rotates in the direction opposite to the direction in which the male screw 9 rotates resulting from the downward movement of the slider 7. The slider 7 moves upward as the slide member 8 moves upward. When the slider 7 arrives at the upper stop position shown in Fig. 62A, the reciprocating piece 19 comes into contact with the edge 7f of the slider 7 in the same manner as previously mentioned. As a result, the reciprocating piece 19 is pushed upward, and the limit switch 17 is closed, which in turn turns the electric motor 13 off.

In association with the upward movement of the slider 7, the hinged portions (the pivot pins 32 and 34) of the slider 7 attached to the press bar 5 and the side bar 6 move upward. In the manner opposite to the previously mentioned way of operation, the press bar 5 is tilted in a rearward direction, and the arm rest member 4 returns to the horizontal state. Further, the front leg 2 is pushed in a forward direction, as a result of which the legs are opened. In this way, the overall framework of the baby buggy is unfolded as it is shown in Fig. 59.

The electric motor 13, the male screw bar 9, the slide member 8, and the stop means 17, 18 are provided only on one rear leg 3 in the above embodiment. However, this embodiment is not limited to such an illustrative example. As a matter of course, the power sources for moving the slider 7 upward and downward may be provided on both rear legs 3, 3, respectively.

### Sixth embodiment

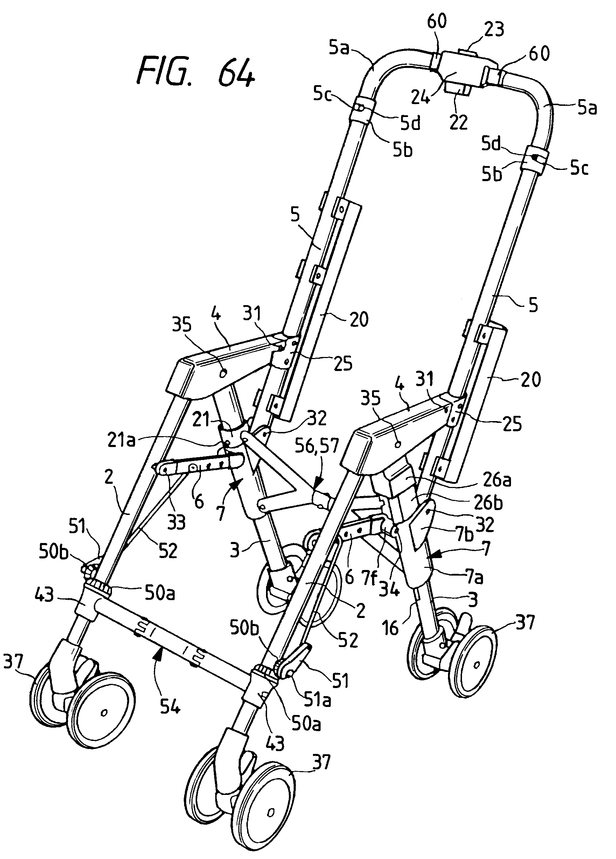

With reference to Figs. 64 through 74, the sixth embodiment will be described.

To make the concept of the invention clearer in the drawings, a seat and associated accessories have been omitted.

As shown in Fig. 64, this collapsible baby buggy is provided with front legs 2, rear legs 3, arm rest members 4, press bars 5, and side bars 6, all of these components being common to the right half and the left half of the baby buggy. Because these components exist on both sides, the construction of the side member on only one side will be explained first.

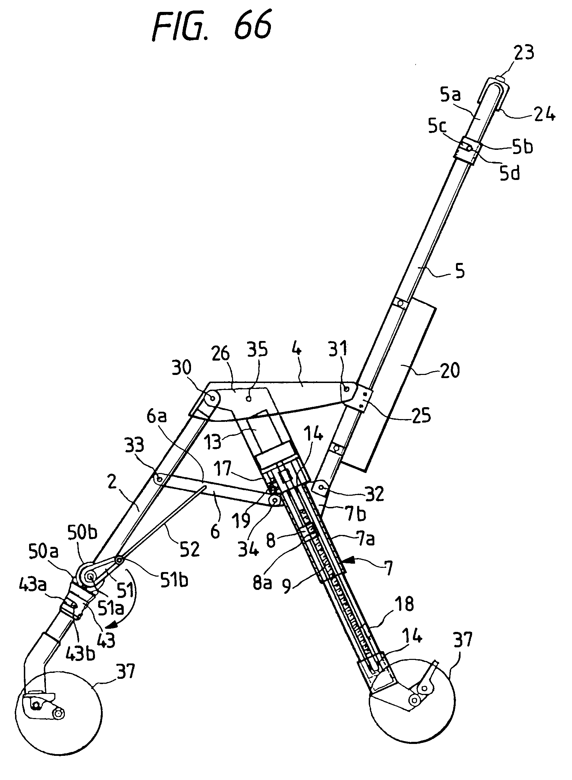

In Fig. 66, a joint member 26 is attached to the upper end of the rear leg 3 by a pivot pin 35 which is rotatively supported by an arm rest member 4. This joint member 26 is rotatively hinged to the upper end of the front leg 2 by a support pin 30. The front leg 2 and the rear leg 13 are both provided with wheels 37.

In this embodiment, the front leg 2 is made of a round pipe. Since it is necessary to make a rear leg 3 hollow so that a male screw bar 9, which will be described later, can be inserted into this rear leg 3, the rear leg 3 should preferably be made of, for example, a pipe having an elliptical cross section.

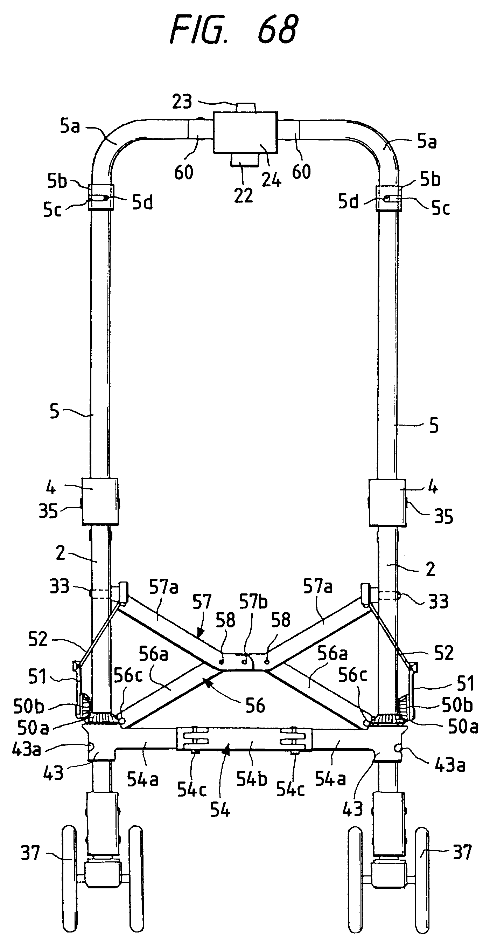

The rear end of the arm rest member 4 is rotatively hinged to a press bar sleeve 25 attached to the press bar 5 by a pivot pin 31. This press bar 5 is made of a round pipe or the like. As shown in Fig. 68, the press bar 5 extends from the rear end of each of the right and left arm rest members 4, 4, and an upper portion of the press bar 5 is curved into a substantially U shape. The curved portions of the press bars 5 are connected together via a case 24 provided at the upper center of the baby buggy. This case 24 is provided with a switch 23 which will be described later. The press bar 5 can be inclined in a rearward direction at a desired angle by adjusting an interval between the pivot pin 35 and the pivot 31 of the arm rest member 4.

A sleeve 5b is attached to the upper end of the press bar 5, whereby the collapsible bar 5a and the press bar 5 are connected together. The sleeve 5b is attached to the upper end of the press bar 5, and an elongated guide hole 5c is formed in the outer periphery of the sleeve 5b. The head of a screw or a pin 5d projecting outside from the collapsible bar 5a is engaged with the elongated guide hole 5c, whereby the collapsible bar 5a can rotate in the circumferential direction of the press bar 5.

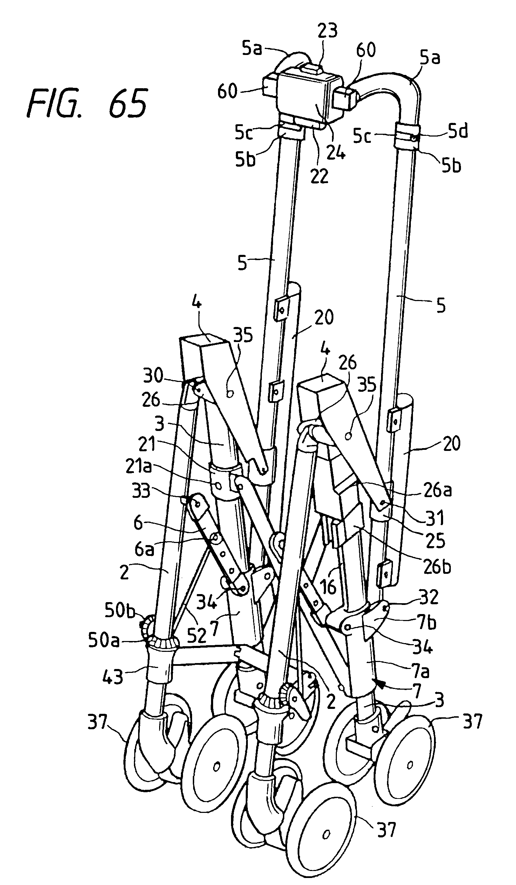

As shown in Fig. 68, the combination of the press bar 5 and a collapsible bar 5a are provided on both sides with respect to the longitudinal center of the framework of the baby buggy. The right and left collapsible bars 5a, 5a are respectively hinged to joint members 60, 60 on both sides of a button case 24 provided at the upper longitudinal center of the framework by means of pivot pins 60c. As a result, it becomes possible to fold the framework in a rearward direction by turning the right and left collapsible bars 5a, 5a around the respective press bars 5, 5, as shown in Fig. 65.

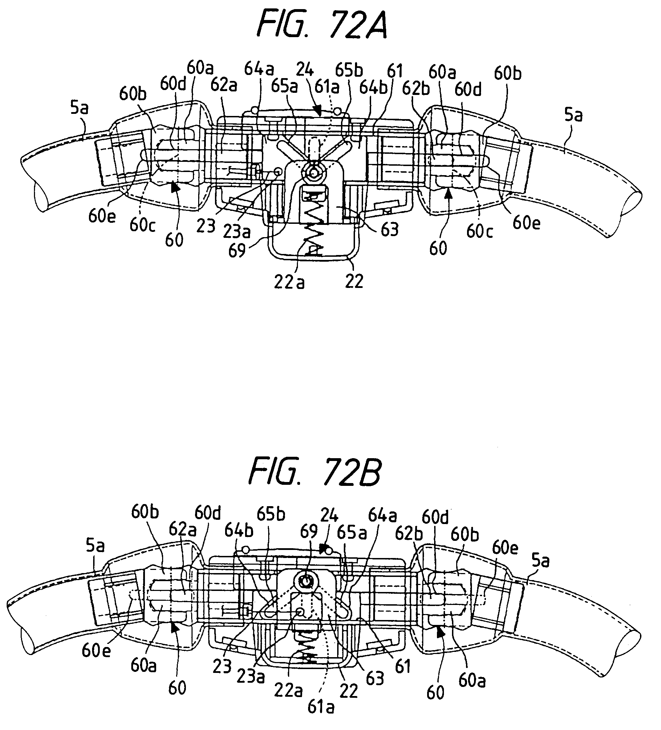

With reference to Figs. 72A and 72B, the folding structure of the joint member 60 will be described. A case body 61 is housed in the button case 24. Each of the joint members 60, 60 is made up of an inner member 60a and an outer member 60b which are fitted together in a collapsible manner. The inner member 60a is attached to the case body 61 and the outer member 60b is attached to the collapsible bar 5a. The inner member 60a and the outer member 60b are jointed together by the pivot pin 60c in such a way as to be collapsible in a substantially horizontal direction.

A through hole 60d is formed through the inner member 60a, whereas an insertion hole 60e is formed in the outer member 60b. Right and left rods 62a and 62b, which will be described later, are simultaneously insertable into the through holes 60d and 60e. As a result of the insertion of the right and left rods 62a and 62b into the through holes 60d and 60e, the inner members 60a and the outer members 60b are locked, whereby it the becomes impossible to fold the inner and outer members.

When the right and left rods 62a and 62b are moved to the center of the case body 61, the inner member 60a and the outer member 60b on both sides of the button case are released from the locked state, whereby the collapsible bars 5a, 5a become freely collapsible in a substantially horizontal direction in relation to the button case 24.

An elongated hole 61a (designated by a dotted line) is formed at the substantial center of the case body 61, as shown in Figs. 72A and 72B. An operation button 22 is provided at a lower portion of the case body 61, and it is vertically movable by downward a restoring force of a compression spring 22a incorporated in the operation button 22. A pin lock member 63 projects upwardly from the operation button 22.

A pair of guide sliders 64a and 64b are respectively disposed in the case body 61 in such a way as to be horizontally slidable along upper and lower channels provided in the case body. The previously mentioned rods 62a and 62b are horizontally attached to the outer edges of the guide sliders 64a and 64b, respectively. The rods 62a and 62b pass through a through hole 60d of the inner member 60a and enter an insertion hole 60e of the outer member 60b.

A diagonally elongated hole 65a is formed so as to extend from the corner of the guide slider 64a close to the longitudinal center of the operation button 22a, and a diagonally elongated hole 65b is formed so as to extend from the corner of the guide slider 64b close to the longitudinal center of the operation button 22b. A guide pin 69 is engaged with the elongated hole 61a of the case body 61, as well as being engaged with the pin lock member 63.

With the previously mentioned construction, as is evident from Fig. 72B, if the operation button 22 is pressed up against the restoring force of a compression spring 22a, the guide pin 69 hooked to the pin lock member 63 moves upward along the elongated hole 61a of the case body 61, and the left longitudinal guide hole 64a of the left guide slider 64a moves together with the guide pin 69, whereby the left guide slider 64a moves rightward in the horizontal direction. Simultaneously, the guide pin 69 simultaneously follows the diagonally elongated hole 65b of the right guide slider 64b. As a result, the right guide slider 64b moves leftward in the horizontal direction. Eventually, the right and left rods 62a, 62b move in the inward direction, and then the leading ends of the right and left rods 62a, 62b are removed from the insertion hole 60e of the left outer member 60b, whereby the left joint member 60 becomes collapsible.

A switch 23 is provided in the case 24 disposed at an upper part of a case body 61, as shown in Figs. 72A and 72B. A lead wire (not shown) connected to the switch 23 is inserted in the collapsible bar 5a and the press bar 5, and the wire is connected to an electric motor 13 which will be described later. The electric motor 13 can be switched so as to rotate in both directions.

As shown in Fig. 68, front leg sleeve 43, 43 are rotatively attached to predetermined lower portions of the right and left front legs 2, 2. Specifically, a pin or a screw 43b (see Fig. 66) is attached to the predetermined lower position of the front leg 2. The elongated guide hole 43a is circumferentially formed in the front leg sleeve 43, and the head of the screw 43b is located on this. The front leg sleeve 43 is rotatable within the range of the length of the elongated guide hole 43a.

Further, the right and left front leg sleeves 43, 43 are connected together by a front leg lateral bar 54. The front leg lateral bar 54 is made up of right and left lateral bar members 54a, 54a with a center lateral bar member 54b sandwiched between them. The lateral bar members 54a, 54a and the center lateral bar member 54 are hinged to each other by two pivot pins 54c, 54c. The right and left front leg sleeves 43, 43 rotate rearwardly in opposite directions, whereby the lateral bar 54 can be folded into a U-shaped form in a substantially rearward direction around the right and left pivot pins 54c, 54c (see Fig. 65).

First bevel gears 50a, 50a are respectively fitted around the outer peripheries of the front leg sleeves 43, 43. One of the first bevel gears 50a, 50a will now be explained. A second bevel gear 50b which meshes with the first bevel gear 50a is attached to the outside of the front leg 2 so as to be rotatable around a pivot pin 51a (see Fig. 66). An rocking piece 51 projects from this second bevel gear 50b. Further, as shown in Fig. 66, a joint bar 52 is rotatively hooked between a through hole 51b formed in the vicinity of the leading end of the rocking piece 51 and the through hole 6b formed in the side bar 6.

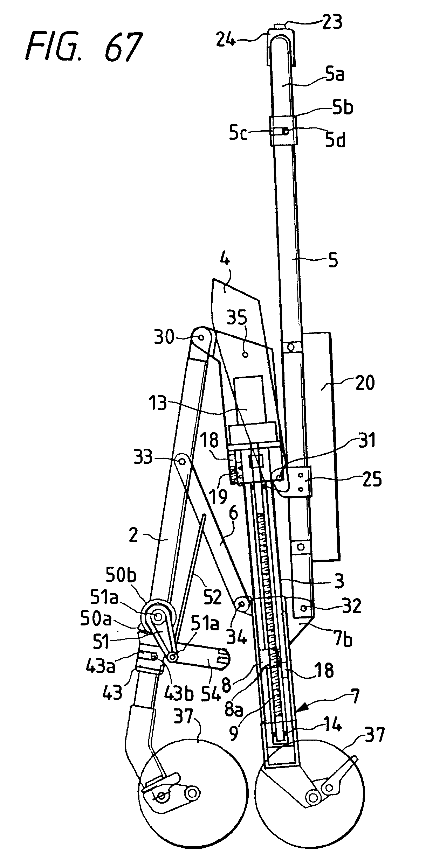

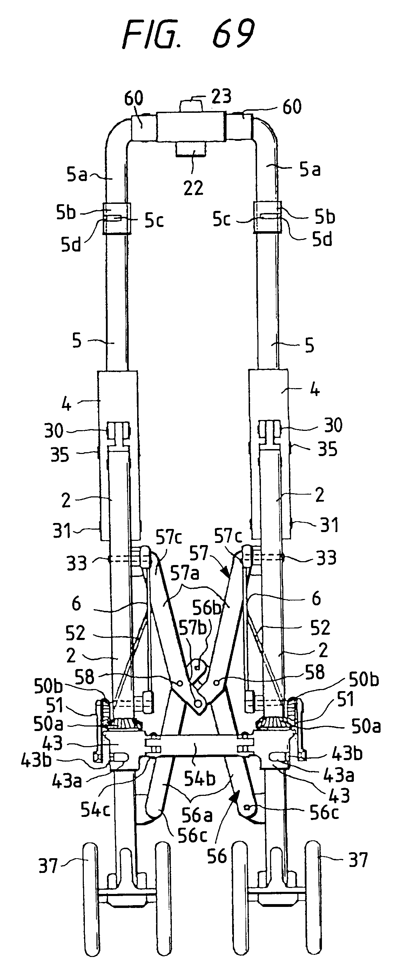

With this configuration, as shown in Fig. 67, when the right and left sliders 7, 7, which will be described later, move downward along the rear legs 3, 3 in the longitudinal direction thereof, the through hole 6a between the side bar 6 and the joint rod 52 moves downward. At this time, the rocking pieces 51 rotate clockwise (in the direction designated by the arrow shown in Fig. 66) via the joint bars 52 as viewed from the side of the baby buggy. As a result, as shown in Fig. 69, as the second bevel gear 50b fixed to the rocking piece 51 rotates, the first bevel gear 50a rotates in an inner rearward direction of the framework so that the right and left front leg sleeves 43, 43 rotate in a rearward direction with respect to each other. The rearward rotation of the front leg sleeves 43 results in the front leg lateral bar 54 being folded into a U-shaped form at the right and left pivot pins 54c, 54c, as a result of which the baby buggy can be laterally folded up.

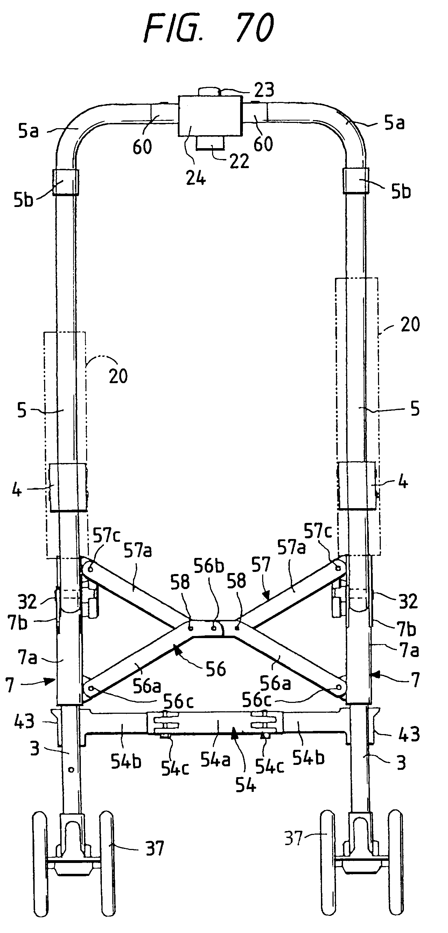

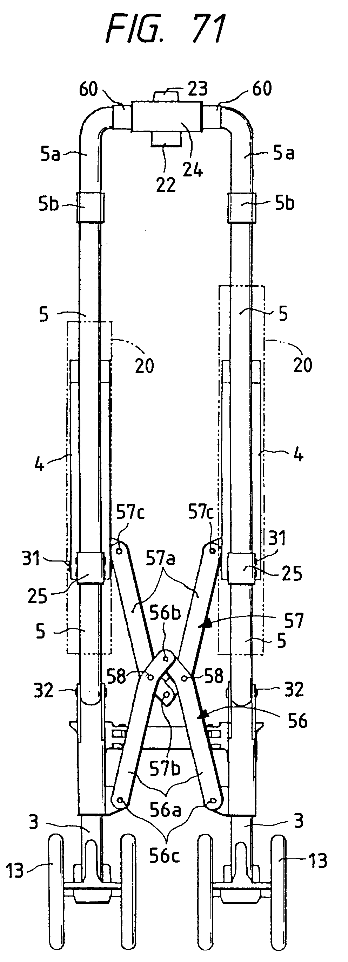

Furthermore, as can be seen from the rear view in Fig. 70, the right and left sliders 7, 7 are connected together by a slider joint link 56. This slider joint link 56 is made up of two V-shaped collapsible bars 56a, 56a. These collapsible bars 56a, 56a are arranged with their hinged portions directed upward. These collapsible bars 56a, 56a are rotatively hinged to each other by a pivot pin 56b (Fig. 71) at the longitudinal center between the rear legs 3, 3. The opposite ends of the thus hinged collapsible bars 56a, 56a are respectively connected to the right and left sliders 7, 7 so as to be respectively rotatable around pivot pins 56c in such a way that the slider joint link 56 is pivotally collapsible with its center hinged portion moving upward in the longitudinal center of the baby buggy as it is shown in Fig. 71.

The right and left rear legs 3, 3 are connected together by a rear leg joint link 57 at upper portions of the sliders 7, 7. Like the slider joint link 56, this rear leg joint link 57 is made up of right and left V-shaped collapsible bars 57a, 57a. These collapsible bars 57a, 57a are rotatively connected together by a pivot pin 57b, and the joint link 57 is hinged between a stopper housing 26b, which is fixed to the rear leg 3 and will be described later, and an upper stopper 21 (Fig. 64) attached to the other rear leg 3 by pins 21a, in such a way that the rear leg joint link 57 becomes collapsible within the plane in line with the longitudinal direction of the baby buggy. To fold the rear leg joint link 57 in the direction opposite to the folding direction of the slider joint link 56, the right and left collapsible bars 57a, 57a are arranged with their hinged portions directed downwards.

The slider link 56 and the rear leg joint link 57 are connected together at two hinged portions thereof by pivot pins 58, 58 in such a way as to be folded with their center hinged portions moving apart from each other.

By virtue of this configuration, the sliders 7 which will be described later are positioned at the upper stop position while the baby buggy is laterally unfolded as it is shown in Fig. 70. For this reason, the slider join link 56 and the rear leg join link 57 are stretched so as to be brought in line with each other. On the other hand, the right and left sliders 17, 17 which will be described later move downward to the lower stop positions when the baby buggy is laterally folded up as it is shown in Fig. 71. The slider joint link 56 and the rear leg joint link 57 are folded up by way of the pivot pins 58, 58 in such a way that the center hinged portions 56b and 57b move apart from each other in the longitudinal direction of the baby buggy.

The sliders 7, 7 are fitted around the outer periphery of the right and left rear legs 3, 3 in a slidable manner.

This slider 7 has a tube portion 7a whose internal shape corresponds to the outer shape of the rear leg 3 having a substantially elliptical cross section, as shown in Figs. 74A through 74C. A pair of protuberances 7b, 7b which are parallel to each other are attached to both side surfaces of this tube portion 7a along the longitudinal axis of the slider 7. Through hole 32a, 32a are formed in these protuberances 7b, 7b. The press bar 5 is hinged to the sliders 7, 7 by inserting a pivot pin 32 into each of the through holes 32a, 32a.

A support 7c is fixedly attached to the opposite longitudinal side surface in relation to the side surface from which the protuberances 7b, 7b project. A pivot pin 34 is inserted into a through hole 34a formed in the support 7c to hinge one end of the side bar 6 to the slider 7.

The above construction is common to the right and left sliders 7, 7 provided on the right and left rear legs 3, 3. One rear leg 3 having the male screw bar 9, which will be described later, will be hereinafter referred to as the rear leg 3. The slider 7 provided on the outer periphery of this rear leg 3 has an additional construction as will be described below. As shown in Fig. 74C, a retaining piece 7d is attached along the internal longitudinal center of the support 7c of the slider 7 so as to face the tube portion 7a. A guide piece 7e is attached to this retaining piece 7d in such a way as to project into the inside of the tube portion 7a. Further, a slide member 8 is fixed to the leading end of the guide piece 7e.

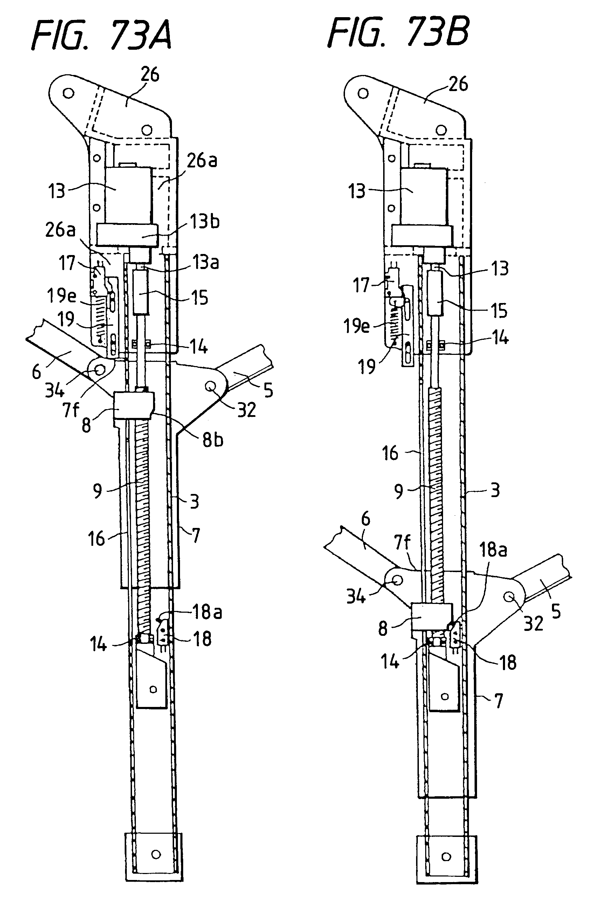

This guide piece 7e connects the slider 7 attached to the outside of the rear leg 3 with the slide member 8 provided within the slider 7. An elongated guide hole 16 is longitudinally formed in the rear leg 3 as a linear path of the guide piece 7e (Fig. 73A or 73B).

As shown in Fig. 74C, the slide member 8 is housed in the tube portion 7a of the slider 7 (see Fig. 73A or 73B). A female screw thread 8a is cut on the internal surface of the slide member 8, and the male screw bar 9 is screwed into the slide member 8 in the longitudinal direction of the rear leg 3.

The male screw bar 9 is longitudinally disposed in the rear leg 3, as shown in Fig. 73A or 73B, and it is rotatively supported at its upper and lower ends by bearings 14, 14 provided in the same rear leg 3. The upper end of the male screw bar 8 is directly jointed to a rotating shaft 13a of an electric motor 13 by means of a sleeve 15.

As previously mentioned, the joint member 26 (Fig. 65) is attached to the upper end of the rear leg 3, and this joint member 26 has a motor storage space 26a in a lower portion thereof. The electric motor 13 is fixed in this storage space 26a with a screw. The electric motor 13 is provided with a decelerating mechanism 13b, and the torque of the motor 13 is transmitted to the rotating shaft 13b after having been converted to appropriate rotating speed. A battery or a dry cell can be used as the power source of this electric motor 13. For this reason, a dry cell case 20 is attached to the side of the press bar 5. A lead wire (not shown) inserting inside the press bar 5 is connected to the electric motor 13.

A switch 23 is provided in the case 24 disposed at an upper part of the press bar 5. A lead wire (not shown) connected to the switch 23 is also inserted in the press bar 5. This switch 23 should preferably be designed so as to allow the electric motor 13 to rotate in both directions.

With the above construction, when the male screw bar 9 rotates as a result of the driving of the electric motor 13, the female screw 8a in the slide member 8 follows this rotating motion. As a result, the guide piece 7e of the slider 7 is linearly guided by the elongated guide hole 16 of the rear leg 3, and the slider 7 moves in the longitudinal direction of the rear leg 3. The electric motor 13 can rotate in both directions, and hence the slider 7 can travel either upwards or downwards in the longitudinal direction of the rear leg 3 by the switching action of the switch 23.

A stopper housing 26b is attached to a lower portion of the joint member 26 by pins 36, 36, as shown in Fig. 73A or 73B. An upper stopper means 17 is disposed in this stopper housing 26b for stopping the upward movement of the slider 7. A limit switch 17 is used as this stopper means 17, as shown in Fig. 73A or 73B. A reciprocating piece 19 is provided to ensure the actuation of the limit switch 17.

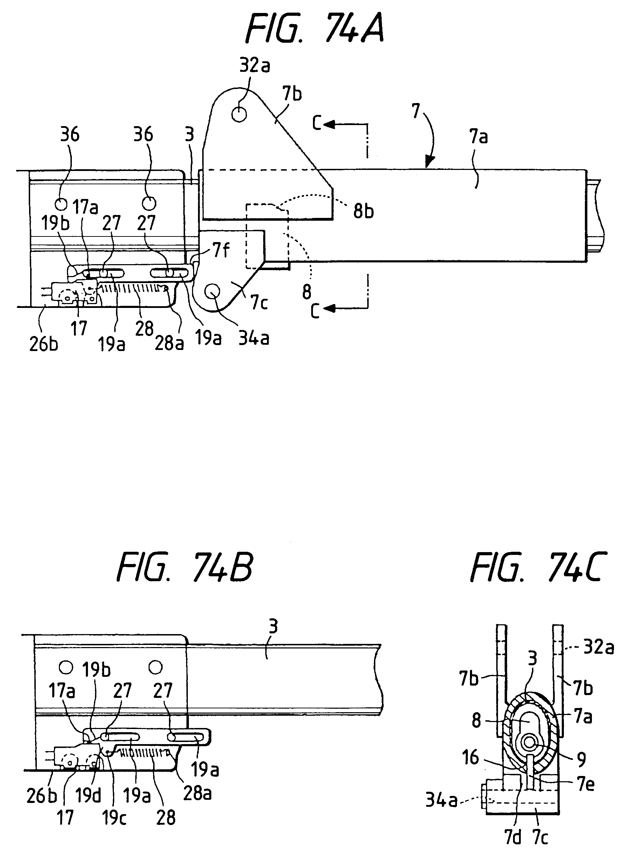

The reciprocating piece 19 has two elongated holes 19a, 19a which are spaced apart from, and in line with, each other, as shown in Fig. 74B. A projecting tapered surface 19 b is formed in the reciprocating piece 19 in line with the elongated holes 19a, 19a, and a protuberance 19d projects from the side surface of the reciprocating piece 19. A hook hole 19c is formed in this protuberance 19d. Two pins 27, 27, which are spaced apart from each other in the direction of the movement of the slider 7, are fixed inside the stopper housing 26b, as shown in Fig. 74A. These pins 27, 27 are respectively fitted in the elongated holes 19A, 19A of the reciprocating piece 19. When the reciprocating piece 19 moves toward the slider 7, the lower end of the reciprocating piece 19 projects out of the stopper housing 26b. Moreover, a pin 28a is fixed to the slider 7 within the stopper housing 26b, and a tension spring 28 is hooked between the pin 28a and the hook hole 19c of the reciprocating piece 19.

By virtue of such a construction, the reciprocating piece 19 is guided by the pings 27, 27. While the drawing force of the tension spring 28 affects on the reciprocating piece 19, the lower end of the reciprocating piece 19 projects out of the stopper housing 26b. As a result, the slider 7 moves upward, and the end 7f (Fig. 74A) of the slider 7 presses up the reciprocating piece 19. Then, the reciprocating 19 moves upward against the drawing force of the tension spring 28. When the slider 7 moves downward again, the lower end of the reciprocating piece 19 projects outside toward the slider 7 again as a result of the drawing force of the tension spring 28.

The operation of the collapsible baby buggy having the above mentioned construction according to this embodiment will now be described.

Fig. 73A shows the slider 7 that is stopped at the upper stop position after having moved upward in the longitudinal direction of the rear leg 3. At this time, the end 7f of the slider 7 comes into contact with the lower end of the reciprocating piece 19, which in turn pushes the reciprocating piece 19 up. As a result, the limit switch 17 is closed, and the electric motor 13 is stopped.

The state of the slider shown in this drawing corresponds to the unfolded seating apparatus shown in Fig. 66. The side bar 6 pushes the front leg 2 in a forward direction, so that the legs are opened. Simultaneously, the press bar 5 is tilted in a rearward direction and supported by the pivot pin 32 hinged to the slider 7 and the pivot pin 31 hinged to the rear end of the arm rest member 4, whereby the baby buggy is unfolded. At this time, the front leg lateral bar 54, the slider joint link 56, and the rear leg joint link 57 are stretched, and therefore the baby buggy is unfolded also in its lateral direction.

When the electric motor 13 is activated, the male screw bar 9 rotates, as shown in Fig. 73B. As a result, the slide member 8 moves downward, and the slider 7 moves downward in the longitudinal direction of the rear leg 3. The limit switch 18 is closed when the slider 7 arrives at the lower stop position, whereby the electric motor 13 is stopped.

The hinged portion (the pivot pin 34) between the slider 7 and the side bar 6 moves downwardly as a result of the downward movement of the slider 7. The front leg 2, hinged to the other end of the side bar 6 by the pivot pin 33, rotates around the position (the pivot pin 30) where the front leg 2 and the rear leg 3 are hinged together, so that the front leg 2 is folded toward the rear leg 3. In this way, the baby buggy is longitudinally folded up, as shown in Fig. 67.

On the other hand, in conjunction with the downward movement of the right and left sliders 7, 7, the right and left front legs 2, 2 are folded toward the rear legs 3, 3 via the side bars 6, 6. Concurrently, the leading end of the rocking piece 51 is rotated downwardly around the rotating axis of the rocking piece via the joint bar 52, as shown in Fig. 67. The second bevel gear 50b attached to the rocking piece 51 rotates clockwise as viewed from the outside. Associated with the rotation of the right and left second bevel gears 50b, 50b, the right and left first bevel gears 50a, 50a rotate. The right and left front sleeves 43, 43 attached to the first bevel gears 50a, 50a rearwardly rotate in opposite directions. As a result, the front leg lateral bar 54 fixed with both ends thereof attached to the sleeves 43, 43 is folded up around the right and left pivot pins 54c, 54c, so that the right and left front legs 2, 2 are laterally folded up.

As shown in Fig. 71, in association with the folding up motion of the baby buggy, the slider joint link 56 hinged at its both ends hinged to the sliders 7, 7 is folded up along the center pivot pins 56a and 57a around the right and left pivot pins 58, 58, which are hinged to the rear leg joint ink 57, as the sliders 7, 7 move downward. As a result, the right and left rear legs 3, 3 are laterally folded up.

In this way, the overall framework of the baby buggy is folded up as shown in Fig. 65, that is, the framework is folded up in both the longitudinal and lateral directions thereof.

When the electric motor 13 is reversely rotated, the male screw bar 9 rotates in the direction opposite to the direction in which the male screw 9 rotates resulting from the downward movement of the slider 7. The slider 7 moves upward as the slide member 8 moves upward. When the slider 7 arrives at the upper stop position shown in Fig. 73A, the reciprocating piece 19 comes into contact with the edge 7f of the slider 7 in the same manner as previously mentioned. As a result, the reciprocating piece 19 is pushed upward, and the limit switch 17 is closed, which in turn turns the electric motor 13 off.

In association with the upward movement of the slider 7, the hinged portions (the pivot pins 32 and 34) of the slider 7 attached to the press bar 5 and the side bar 6 move upward. In the manner opposite to the previously mentioned way of operation, the press bar 5 is tilted in a rearward direction, and the arm rest member 4 returns to the horizontal state. Further, the front leg 2 is pushed in a forward direction, as a result of which the legs are opened. In this way, the overall framework of the baby buggy is unfolded as it is shown in Fig. 66.

Simultaneously, the first and second bevel gears 50a, 50b are rotated in the opposite direction together with the upward movement of the sliders 7, 7 via the joint bars 52, 52, thereby causing the front leg lateral bar 54 to be forcefully unfolded again. Corresponding to this unfolding action of the front leg lateral bar 54, the rear leg lateral bar 55 is also stretched. Furthermore, at the same time, the slider joint link 56 and the rear leg joint link 57 are stretched again, as a result of which the overall framework of the baby buggy is unfolded both in both laterally and longitudinally, as shown in Fig. 64.

The electric motor 13, the male screw bar 9, the slide member 8, and the stop means 17, 18 are provided only on one rear leg 3 in the above embodiment. However, this embodiment is not limited to such an illustrative example. As a matter of course, the power sources for moving the slider 7 upward and downward may be provided on both rear legs 3, 3, respectively.

### Seventh embodiment

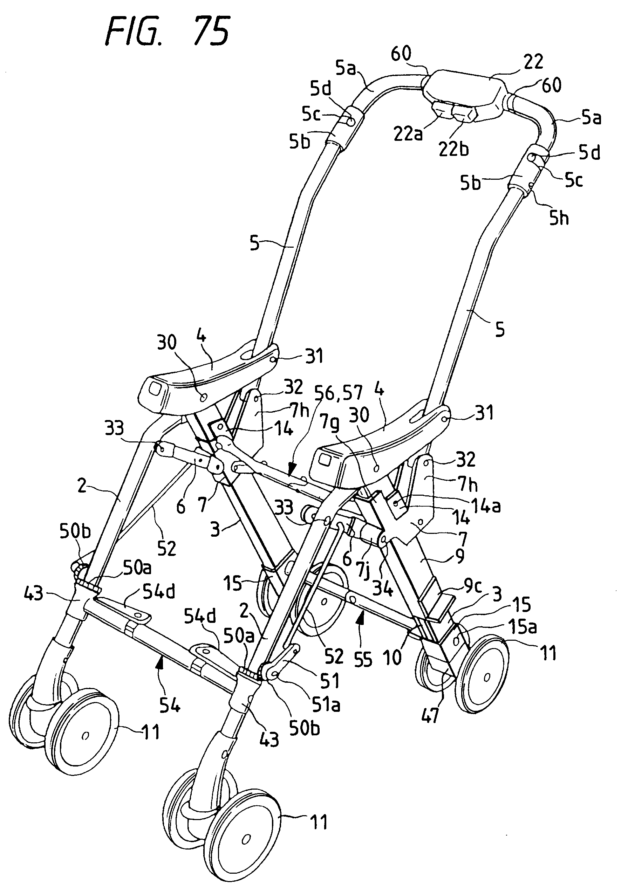

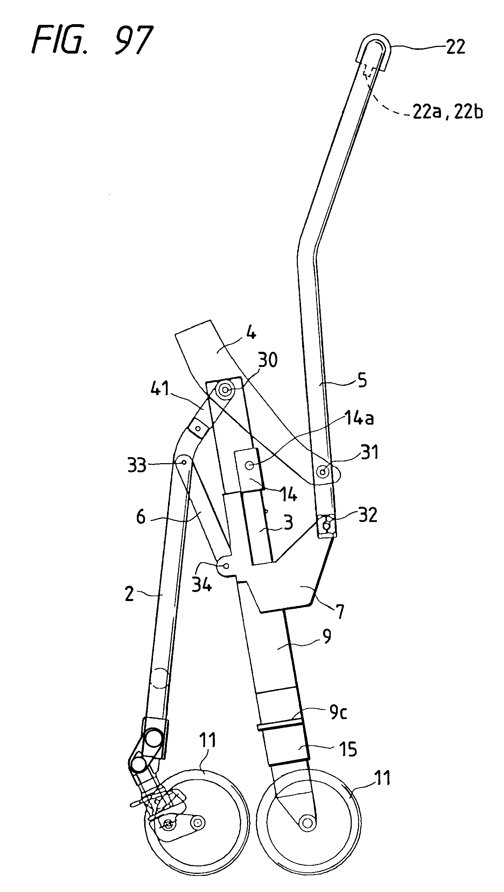

With reference to Figs. 75 through 97, the seventh embodiment will be described.

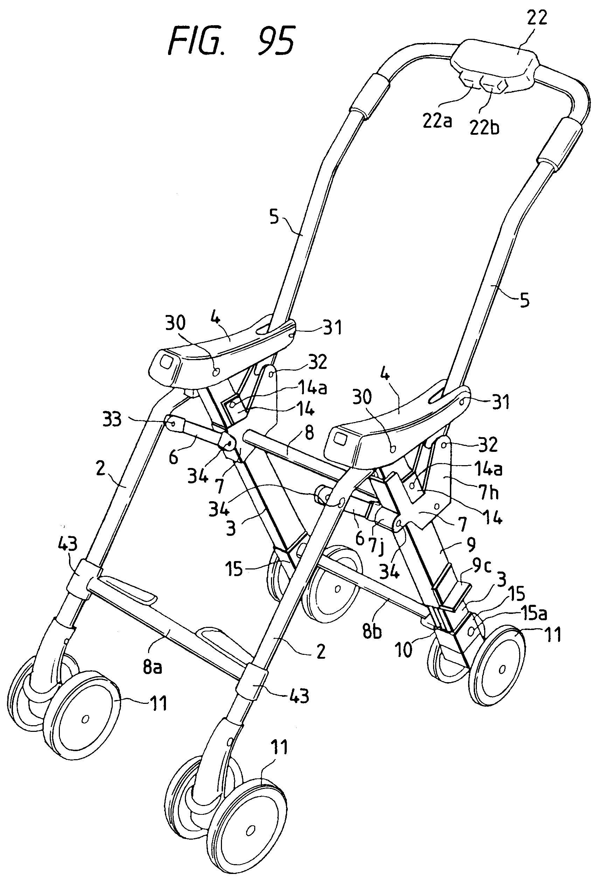

Throughout Figs. 95 through 97 showing the folding-in-two type baby buggy of this embodiment, the same reference numerals are provided to designate the corresponding elements shown in Fig. 75 through 94 that represent the folding-in-four type baby buggy.

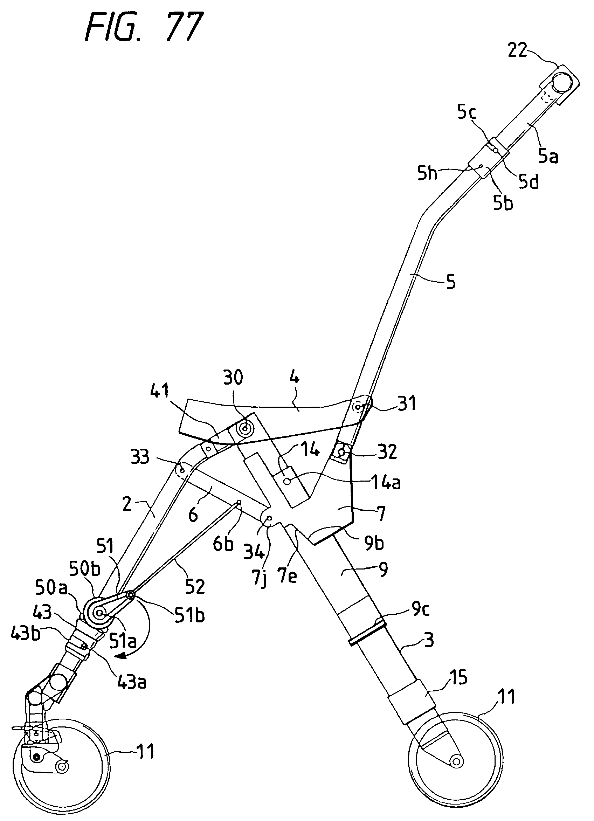

With reference to the above drawings, a side member on one side of the folding-in-four type baby buggy of this embodiment will be described. As shown in Fig. 77, a joint member 41 having a rectangular U-shaped cross section is attached to the upper end of a front leg 2. The upper end of the rear leg 3 is sandwiched between both sides of this joint member 41, and the joint member 41 and the upper end of the rear leg 3 are hinged to each other by the pivot pin 30. As a result of this, the front leg 2 and the rear leg 3 are rotated around the pivot pin 30 in the longitudinal direction of the baby buggy. The front leg 2 is made of a round pipe, and the rear leg 3 is made of a pipe member having a rectangular parallelepiped cross section. Other members having another shape are also usable. Moreover, the lower ends of the front and rear legs 2 and 3 are respectively provided with a wheel 11.

A lower portion of a press bar 5 is pivotally hinged to the rear end of an arm rest member 4 by a pivot pin 31. This press bar 5 is made of a round pipe or the like. The press bar 5 can be inclined in a rearward direction at a desired angle by adjusting an interval between the pivot pin 30 and the pivot 31 of the arm rest member 4.

One end of the side bar 6 is hinged to an upper portion of the front leg 2 by a pivot pin 33. The other end of the side bar 6 is connected to a protuberance 7j of a slider 7 by a pivot pin 34. This side bar 6 holds the front leg 2 and the rear leg 3 in an opened state. A degree of the opening between the front leg 2 and the rear leg 3 depends on the distance between the pivot pins 33 and 34.

In Fig. 77, a sleeve 5b is attached to the upper end of the press bar 5 with a screw or a pin 5h, and an elongated guide hole 5c is formed in the outer periphery of the sleeve 5b. The head of a screw or a pin 5d attached to the lower end of the upper collapsible bar 5a is engaged with the elongated guide hole 5c, whereby the collapsible bar 5a can rotate in the circumferential direction of the press bar 5.

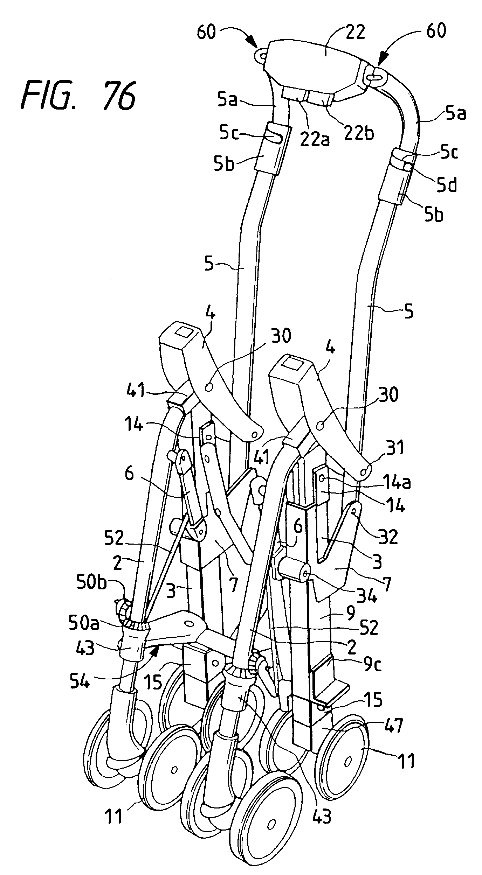

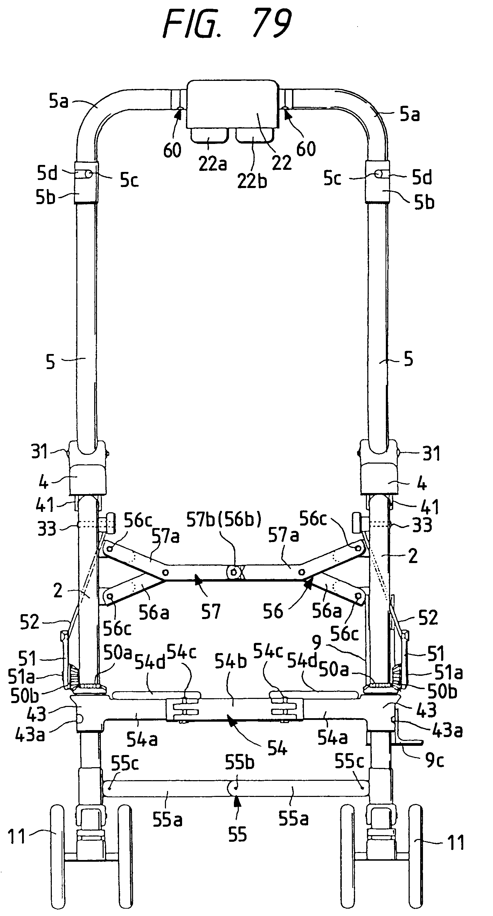

As shown in Fig. 79, the combination of the press bar 5 and a collapsible bar 5a are provided on both sides with respect to the longitudinal center of the framework of the baby buggy. The right and left collapsible bars 5a, 5a are respectively hinged to joint members 60, 60 on both sides of a button case 22 provided at the upper longitudinal center of the framework. As a result, it becomes possible to fold the framework in a rearward direction by turning the right and left collapsible bars 5a, 5a around the respective press bars 5, 5, as shown in Fig. 76.

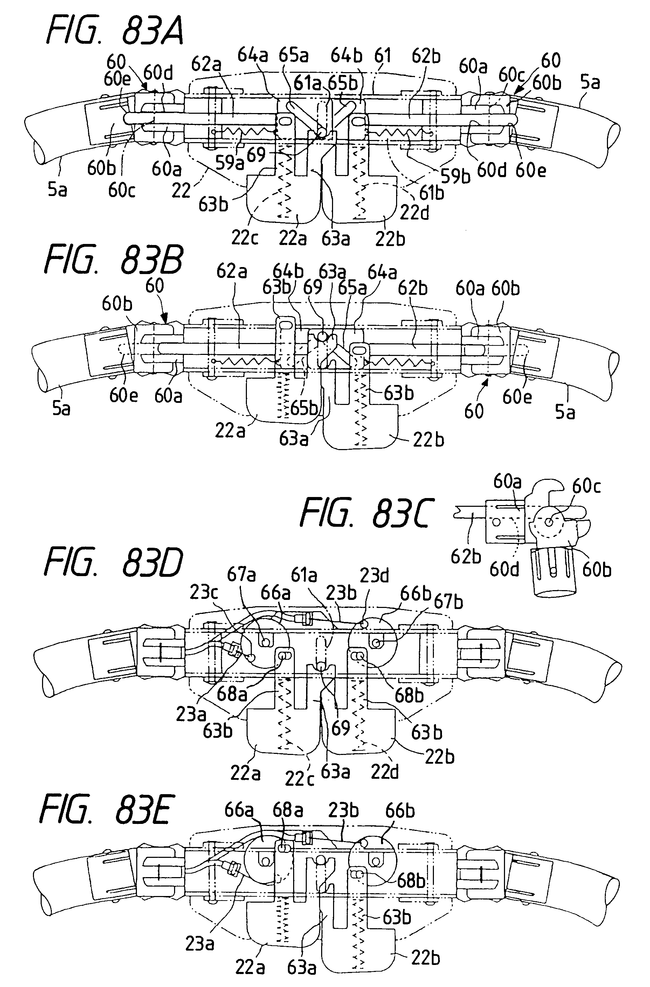

With reference to Figs. 83A through 83C, the folding structure of the joint member 60 will be described. A case body 61 (designated by a phantom line) is housed in the button case 22. Each of the joint members 60, 60 is made up of an inner member 60a and an outer member 60b which are fitted together in a collapsible manner. The inner member 60a is attached to the case body 61 and the outer member 60b is attached to the collapsible bar 5a. The inner member 60a and the outer member 60b are jointed together by a pivot pin 60c in such a way as to be collapsible in a substantially horizontal direction.

A through hole 60d is formed through the inner member 60a, whereas an insertion hole 60e is formed in the outer member 60b. Right and left rods 62a and 62b, which will be described later, are simultaneously insertable into the through holes 60d and 60e. As a result of the insertion of the right and left rods 62a and 62b into the through holes 60d and 60e, the inner members 60a and the outer members 60b are locked, whereby it the becomes impossible to fold the inner and outer members. When the right and left rods 62a and 62b are moved to the center of the case body 61, the inner member 60a and the outer member 60b on both sides of the button case are released from the locked state, whereby the collapsible bars 5a, 5a become freely collapsible in a substantially horizontal direction in relation to the button case 24.

The button case 22 is made up of a horizontal movement mechanism including right and left rods 62a and 62b shown in Figs. 83A and 83B, and a drawing mechanism including wires 23a and 23b shown in Figs. 83D and 83E. To make the drawings clear, Figs. 19A through 19E respectively illustrate each of the mechanisms. However, these mechanisms are all housed within the case body 61.

An elongated hole 61a (designated by a phantom line) is formed at the substantial center of the case body 61, as shown in Figs. 83A and 83B. Two operation buttons 22a and 22b are provided at a lower portion of the case body 61, and they are vertically movable by downward restoring forces of compression springs 22c and 22d incorporated in the respective operation buttons 22a and 22b.

A pin lock member 63a and a pin pivot member 63b are arranged side by side and project upwardly from each of the operation buttons 22a and 22b.

Upper and lower horizontal channels 61b are formed in the case body 61, and guide sliders 64a and 64b are respectively disposed in the horizontal channels 61b in such a way as to be horizontally slidable along the channels. The previously mentioned rods 62a and 62b are horizontally attached to the outer edges of the guide sliders 64a and 64b, respectively. As mentioned before, the rods 62a and 62b pass through the through holes 60d of the right and left inner members 60a and enter the insertion holes 60e of the right and left outer members 60b.

A diagonally elongated hole 65a is formed so as to extend from the corner of the guide slider 64a close to the pin lock member 63a of the operation button 22a, and a diagonally elongated hole 65b is formed so as to extend from the corner of the guide slider 64b close to the pin lock member 63a of the operation button 22b. A guide pin 69 is engaged with the elongated hole 61a of the case body 61, as well as being engaged with the longitudinally elongated holes 65a and 65b. The guide pin 69 is further received by recesses formed in upper portions of the pin lock members 63a. The guide sliders 64a and 64b are respectively pulled by springs 59a and 59b which possess drawing forces in the direction opposite to the leading ends of the rods 62a and 62b.

As described above, the horizontal moving mechanisms of the right and left operation buttons 22a and 22b are symmetrically provided about the longitudinal center of the framework of the baby buggy. As can be seen from Fig. 83B, if, for example, the left operation button 22a is pressed, the guide pin 69 engaged with the pin lock member 63a moves upward along the elongated hole 61a of the case body 61, and simultaneously the guide pin 69 simultaneously follows the diagonally elongated hole 65 of the left guide slider 64a. As a result, the guide slider 64a moves in a rightward direction along the horizontal channel 61b. Associated with the rightward movement of the guide slider, the left rod 62a attached to the left guide slider 64a also moves in the rightward direction, and hence the leading end of the left rod 62a is removed from the insertion hole 60e of the left outer member 60b, whereby the left joint member 60 becomes collapsible.

This series of operation also affects the right slider 64b and the right rod 62b in the same manner the instant the left operation button 22a is pressed up. Therefore, both rods 62a and 62b move inwardly by simply pressing the left operation button 22a, which affect the right and left joint members 60, 60. As a result, it becomes possible to simultaneously fold the right and left collapsible bars 5a, 5a in a substantially horizontal direction (see Fig. 83C).

The right operation button 22b, the right guide slider 64b, the right rod 62b are the same in configuration as their left side counterparts. The right operation button 22b operates in the same manner as the left operation button 22a. Therefore, even if either the left operation button 22a or the right operation button 22b is pressed up, both the right and left rods 62b and 62a move inwardly.

The operation buttons 22a and 22b are individually provided so as to separately draw the two wires 23a and 23b.

Pulleys 66a and 66b are provided side by side in the case body 61 so as to be rotatable around respective center shafts 67a and 67b, as shown in Figs. 83D and 83E. Wire lock pins 23c and 23d, to which the leading ends of the wires 23a and 23b are respectively fixed, are attached to the outer peripheries of the pulleys 66a and 66b, respectively. Further, lock pins 68a and 68b are attached to the outer peripheries of the pulleys 66a and 66b. These lock pins 68a and 68b are rotatively engaged with the pin pivot members 63b projecting from the operation buttons 22a and 22b. As a result of this, the respective pulleys 66a and 66b rotate around the center shafts 67a and 67b in conjunction with the upward movement of the operation buttons 22a and 22b, whereby the wires 23a and 23b can be drawn.

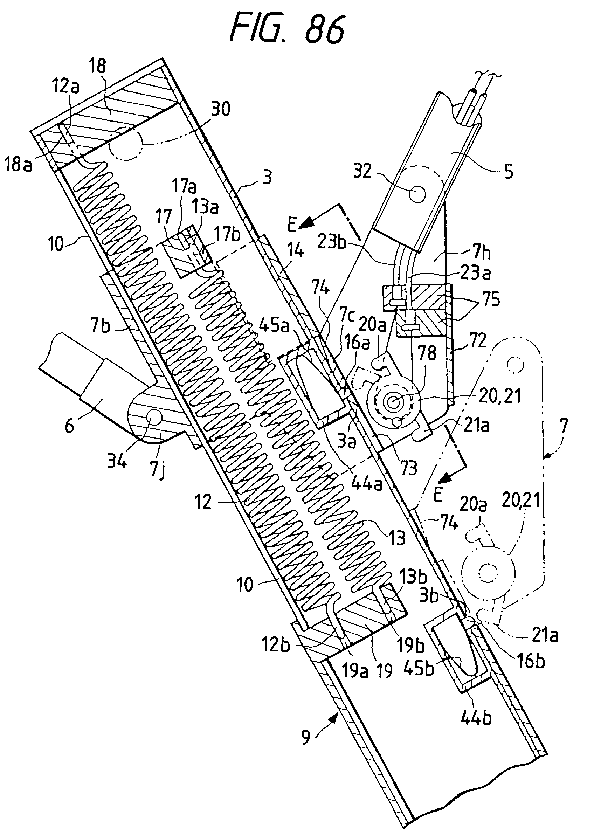

These wires 23a and 23b pass through the inside of the collapsible rods 5a and the press bars 5, and they are guided by sliders 7 which will be described later and are shown in Fig. 86. The thus guided wires individually rotate two rotating plates 20 and 21 respectively provided in the sliders 7. The corresponding wire 23a or 23b is drawn as a result of the pressing action of the operation button 22a or 22b. As previously mentioned, either the operation button 22a or the operation button 22b is pressed up, and the right and left rods 62a and 62b move inwardly at the same time, whereby it becomes possible to fold the right and left collapsible rods 5a, 5a in the manner as shown in Fig. 76.

The sliders 7, 7 are fitted around the outer periphery of upper portions of the right and left rear legs 3, 3 in a slidable manner. The construction common to the right and left sliders 7, 7 will be explained. As shown in the perspective view of Fig. 85E, the slider 7 is provided with a side plates 7a, 7a which are arranged parallel to each other in a symmetrical manner. As shown in Fig. 85B, the side plates 7a, 7a are connected to each other by a bottom plate 7b and a top plate 7c which are parallel to each other, thereby forming a rectangular parallelepiped internal cavity 70 through which the rear leg 3 passes in a slidable manner.

Unless the rear leg 3 is made of a rectangular pipe having a rectangular parallelepiped cross section, the cross section of the internal cavity 70 defined by the side plates 7a, 7a, the bottom plate 7b, and the top plate 7c of the slider 7 may be changed corresponding to the shape of the cross section of the rear leg 3.

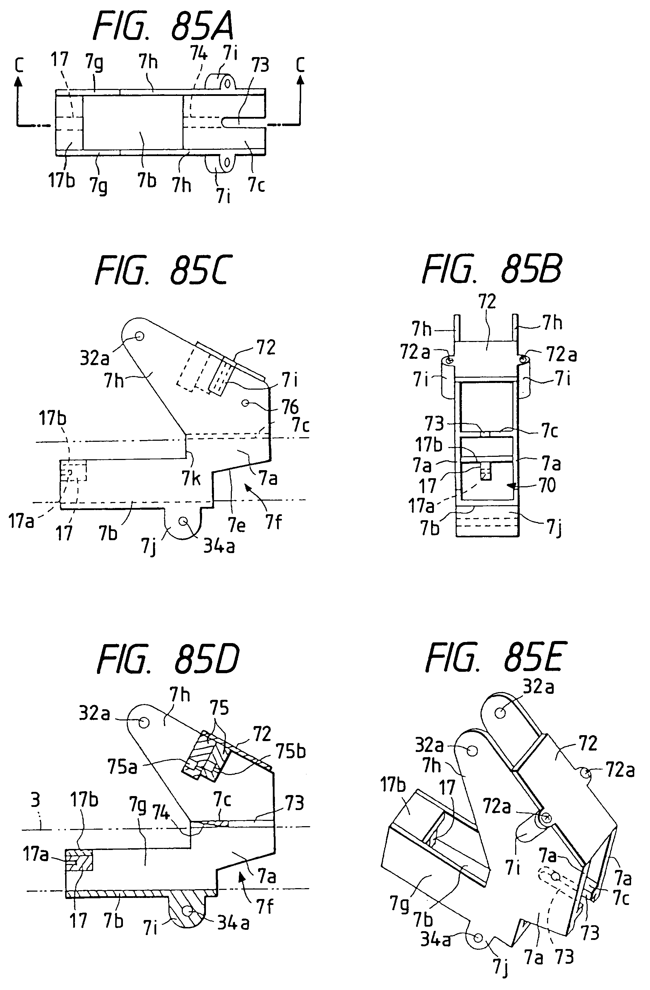

As shown in Fig. 85C, a rectangular notch 7f including a tapered portion 7e is formed at the corner of the bottom plate 7b, and an extended piece 7g consisting of a rectangular notch is formed at the diagonally opposite angle in relation to the tapered portion 7e. An angularly projecting piece 7h projects in an upward direction from a top plate 7c, and it is formed on the opposite upper side of the side plate 7a with respect to the notch 7f. A recessed side edge 7k is formed between the projecting piece 7h and the extended piece 7g.

A through hole 32a is formed in an upper part of the projecting piece 7h, and a pivot pin 32 for connecting the press bar 5 with the slider 7 is supported by this through hole 32a.

As shown in Fig. 85E, the upper sides of the projecting pieces 7h, 7h are connected together by the indication plate 72. This indication plate 72 is screwed to support sections 7i, 7i formed outside the projecting pieces 7h, 7h with screws 72a, 72a.

Two wire lock pieces 75 are mounted on the inner surface of the indication plate 72, as shown in Fig. 85D. These wire lock pieces 75 are provided for retaining the ends of two wires 23a, 23b which will be described later. A lock hole 75a is formed in each of the wire lock pieces 75 for locking the outer tube of each of the wires 23a, 23b, and a through hole 75b is further formed in this lock hole 75a so as to permit a metal wire in each of the wires 23a, 23b to pass through.

A protuberance 7j is formed at the bottom of the side plate 7a so as to project downward beyond the bottom plate 7b, and a through hole 34a for supporting a pivot pin 34 is drilled in this protuberance 7j. As shown in Fig. 77, the side bar 6 is hinged to an upper part of the front leg 2 by a pivot pin 33, and the rear end of this side bar 6 is connected to the pivot pin 34 of the protuberance 7j. As a result of this, the side bar 6 holds the front leg 2 and the rear leg 3 so that they are spaced apart from each other. Further, as will be described later, if the slider 7 moves along the rear leg 3 in the longitudinal direction thereof, the side bar 6 causes the front leg 2 to fold up.

The rear leg 3 having the pedal frame 9, which will be described later, will be referred hereinbelow the rear leg 3. The characteristic structure of the slider 7 provided on this rear leg 3 will be described. As shown in Fig. 85A or 85E, a lock piece 17 is fixed to the center of the inner surface of a support plate 17b which is provided between the upper edges of the extended pieces 7g, 7g on both sides of the slider 7. A notch 17a is formed in the side portion of the lock piece 17, and one side of a hook 13a of a second tension spring 13, which will be described later, can be hooked to this notch 17a.

An elongated hole 73 is formed longitudinally at the center of the edge of the top plate 7c in the direction in which the rear leg 3 is inserted into the slider 7. As shown in Fig. 85D, a slot 74 is formed in the inner surface of this top plate 7c. This slot 74 is tapered, in line with the hole 73, from the innermost end of the elongated hole 73 toward the opposite end of the top plate 7c so that the deepest part is the edge of the top plate opposite to the elongated hole 73, and the shallowest part is just next to the elongated hole 73. This guarantees that there is space, which is at least as large as the maximum projection of an upper knock pin 16a, between the outermost end of the tapered slot 74 of the top plate 7c and the surface of the rear leg 3. An upper knock pin 16a, which will be described later, first passes through the tapered slot 74 during the course of the upward movement of the slider 7 along the rear leg 3, and the upper knock pin 16a is then pressed to such an extent that the knock pin comes to a point below the rear leg 3. The moment the upper knock pin 16a reaches the elongated hole 73, the upper knock pin 16a projects away from the surface of the rear leg 3. This upper knock pin 16a is locked by the innermost end of the elongated hole 73, whereby the slider 7 is prevented from moving downward (see Fig. 86).

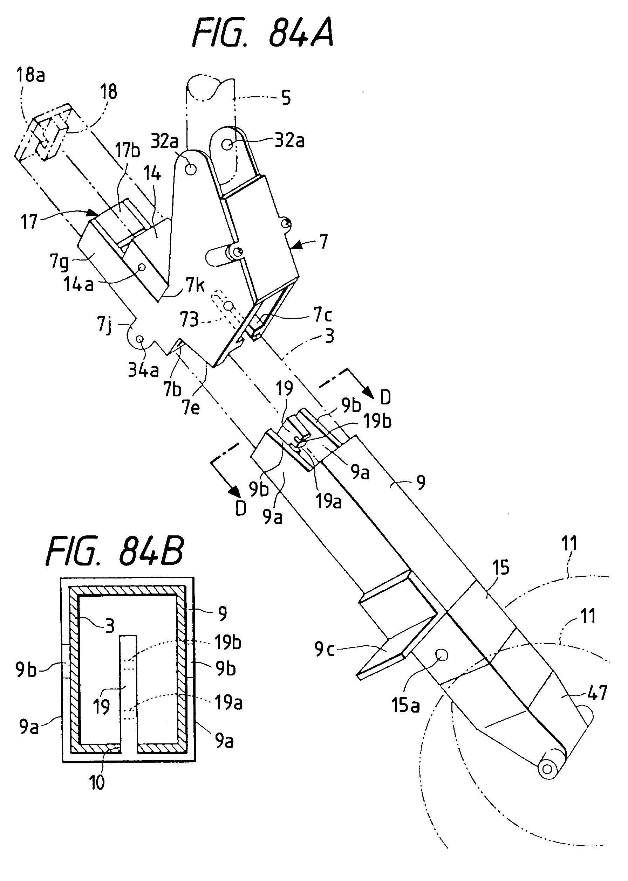

A shaft bearing 47 is attached to the lower end of each of the right and left rear legs 3, 3 for supporting the shaft of the wheel 11, as shown in Fig. 84. A lower stopper 15 is attached to the rear leg 3, at the position where the lower end is in contact with the upper end of the shaft bearing 47, by means of a screw or a pin 15a.

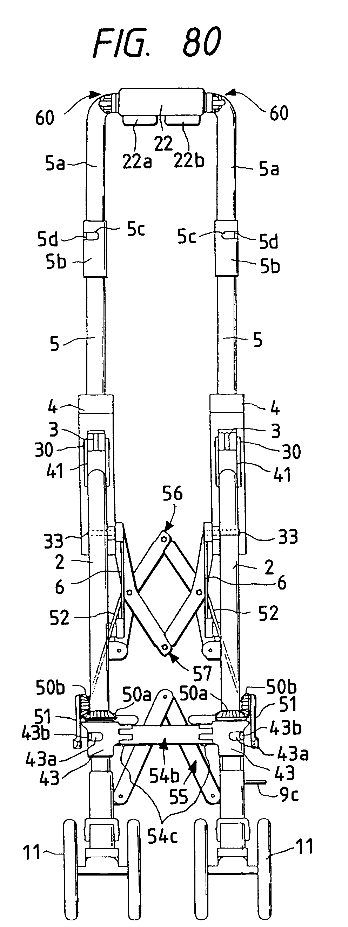

As shown in Fig. 79 or 80, front leg sleeve 43, 43 are rotatively attached to predetermined lower portions of the right and left front legs 2, 2. Specifically, a pin or a screw 43b (see Fig. 80) is attached to the predetermined lower position of the front leg 2 with its head projecting outside. The elongated guide hole 43a circumferentially formed in the front leg sleeve 43, and the head of the screw 43b is located on this. As a result of this, the front leg sleeve 43 is rotatable within the range of the length of the elongated guide hole 43a.

Further, as shown in Fig. 79, the right and left front leg sleeves 43, 43 are connected together by a front leg lateral bar 54. The front leg lateral bar 54 is made up of right and left lateral bar members 54a, 54a with a center lateral bar member 54b sandwiched between them. The lateral bar members 54a, 54a and the center lateral bar member 54 are hinged to each other by two pivot pins 54c, 54c. The right and left front leg sleeves 43, 43 rotate rearwardly in opposite directions, whereby the lateral bar 54 can be folded into a U-shaped form in a substantially rearward direction around the right and left pivot pins 54c, 54c (see Fig. 76).

First bevel gears 50a, 50a are respectively fitted around the outer peripheries of the front leg sleeves 43, 43. One of the first bevel gears 50a, 50a will now be explained. A second bevel gear 50b which meshes with the first bevel gear 50a is attached to the outside of the front leg 2 so as to be rotatable around a pivot pin 51a, as shown in Fig. 77. An rocking piece 51 projects from this second bevel gear 50b.

Further, as shown in Fig. 77, a joint bar 52 with both ends thereof being bent into a L-shaped form is rotatively hooked between a through hole 51b formed in the vicinity of the leading end of the rocking piece 51 and the through hole 6b formed at some point in the side bar 6.

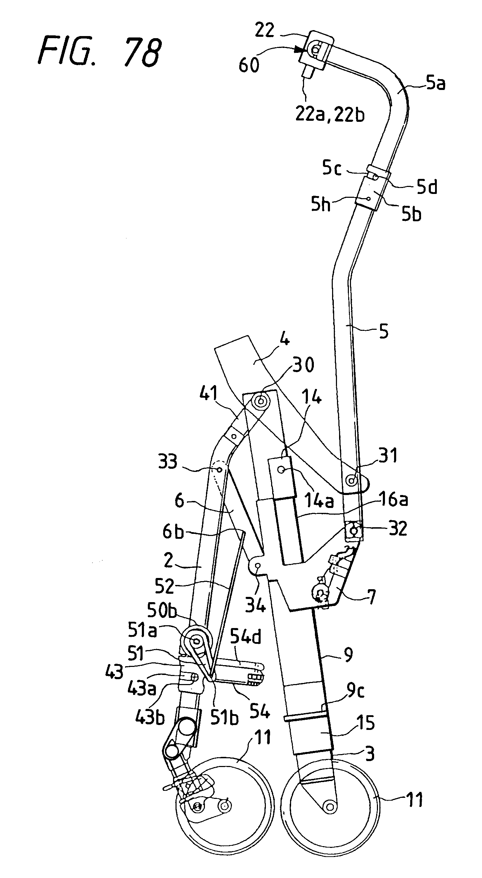

With this configuration, as shown in Fig. 78, when the right and left sliders 7, 7, which will be described later, move downward along the rear legs 3, 3 in the longitudinal direction thereof, the rocking pieces 51 rotate clockwise (in the direction designated by the arrow shown in Fig. 77) via the joint bars 52 as viewed from the side of the baby buggy. As shown in Fig. 80, when the first bevel gear 50a rotates the second bevel gears 50b in a inner rearward direction of the framework, so that the right and left front leg sleeves 43, 43 rotate in a rearward direction with respect to each other. The rearward rotation of the front leg sleeves 43 results in the front leg lateral bar 54 being folded into a U-shaped form around the pivot pins 54c, 54c, as a result of which the baby buggy can be laterally folded up.

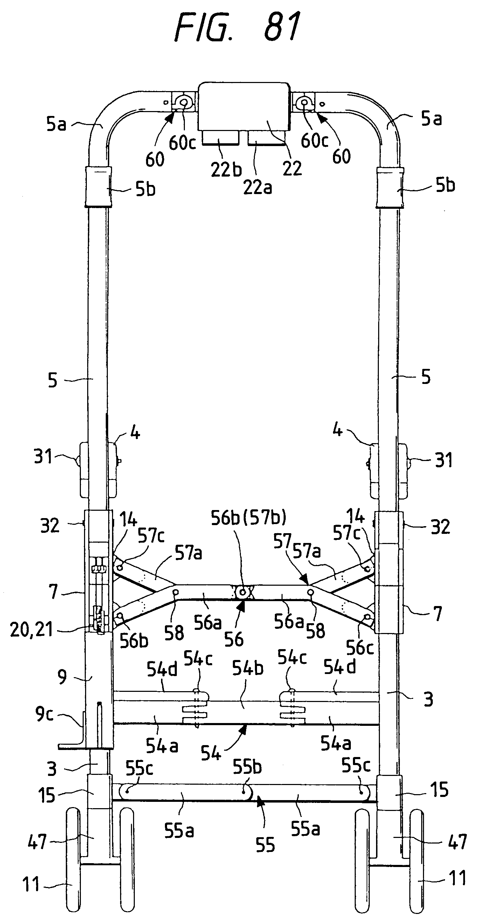

Further, as shown in Fig. 81 (Fig. 81 is a rear view), the right and left rear legs 3, 3 are connected together by a rear leg lateral bar 55. This rear lateral bar 55 is made up of right and left lateral bar members 55a, 55a, and these lateral bar members 55a, 55a are hinged to each other at one ends thereof by a pivot pin 55b in such a way as to be collapsible in an upward direction along the longitudinal center axis of the baby buggy. The opposite ends of the thus hinged lateral bar members 55a, 55a are rotatively hinged to right and left lower stoppers 15, 15, which are attached to lower portions of the rear legs 3, 3, by pivot pins 55c, 55c.

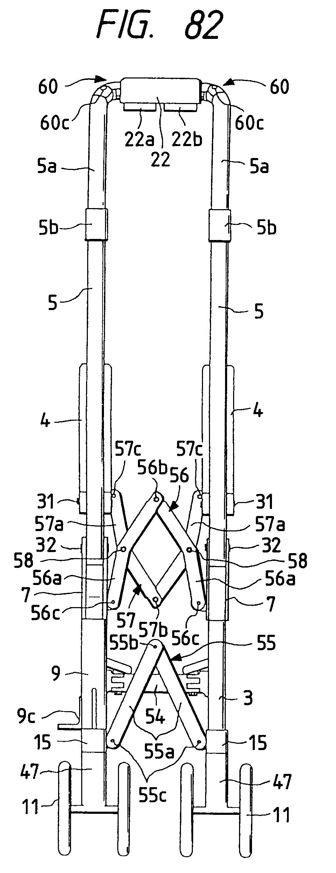

Furthermore, as shown in Fig. 81, the right and left sliders 7, 7 are connected together by a slider joint link 56. This slider joint link 56 is made up of two V-shaped collapsible bars 56a, 56a. These collapsible bars 56a, 56a are arranged with their hinged portions directed upward. These collapsible bars 56a, 56a are rotatively hinged to each other by a pivot pin 56b at the longitudinal center between the rear legs 3, 3. The opposite ends of the thus hinged collapsible bars 56a, 56a are respectively connected to the right and left sliders 7, 7 so as to be respectively rotatable around pivot pins 56c in such a way that the slider joint link 56 is pivotally collapsible with its center hinged portion moving upward in the longitudinal center of the baby buggy as it is shown in Fig. 82.

The right and left rear legs 3, 3 are connected together by a rear leg joint link 57 at upper portions of the sliders 7, 7, as shown in Fig. 81. Like the slider joint link 56, this rear leg joint link 57 is made up of right and left V-shaped collapsible bars 57a, 57a. These collapsible bars 57a, 57a are rotatively connected together by a pivot pin 57b, and the opposite ends of the thus connected collapsible bars 57a, 57a are respectively hinged to the right and left upper stoppers 14, 14 attached to the right and left rear legs 3, 3 by pivot pins 57c, 57c in such a way that the rear leg joint link 57 becomes collapsible within the plane in line with the longitudinal direction of the baby buggy. To fold the rear leg joint link 57 in the direction opposite to the folding direction of the slider joint link 56, the right and left collapsible bars 57a, 57a are arranged with their hinged portions directed downwards.

The slider link 56 and the rear leg joint link 57 are connected together at two hinged portions thereof by pivot pins 58, 58 in such a way as to be folded with their center hinged portions moving apart from each other.

By virtue of this configuration, the sliders 7 which will be described later are positioned at the upper stop position while the baby buggy is laterally unfolded as it is shown in Fig. 81. For this reason, the slider join link 56 and the rear leg join link 57 are stretched so as to be brought in line with each other. On the other hand, the right and left sliders 17, 17 which will be described later move downward to the lower stop positions when the baby buggy is laterally folded up as it is shown in Fig. 82. The slider joint link 56 and the rear leg joint link 57 are folded up by way of the pivot pins 58, 58 in such a way that the center hinged portions 56b and 57b move apart from each other in the longitudinal direction of the baby buggy.

A folding mechanism of this embodiment will be described in detail with particular attention being focused on the left rear leg 3 provided with the pedal frame 9 which will be described later.

As shown in Fig. 84, the slider 7 is provided on top of the rear leg 3, and the pedal frame 9 is fitted around the rear leg 3 in such a way as to be slidable in the longitudinal direction of the rear leg 3. Projections 9a, 9a including tapered portions 9b, 9b are formed at the upper side of the pedal frame 9, and the tapered portions 9b, 9b correspond to the tapered portions 7e, 7e of the slider 7. When the pedal frame 9 is moved upwards, the tapered portions 9b, 9b of the pedal frame 9 and the tapered portions 7e, 7e of the slider 7 come into slidable contact with each other. As a result, these tapered portions interlock with each other, and the pedal frame 9 is stopped.

On the other hand, when the pedal frame 9 moves downward along the rear leg 3, the lower end of the pedal frame 9 comes into contact with the upper end of the lower stopper 15 attached to the lower portion of the rear leg 3. A pedal 9c is mounted to the outer side surface of the pedal frame 9 so as to project outwardly. When the overall pedal frame 9 is moved downwardly, the user pushes down the pedal frame 9 with their foot on this pedal 9c.

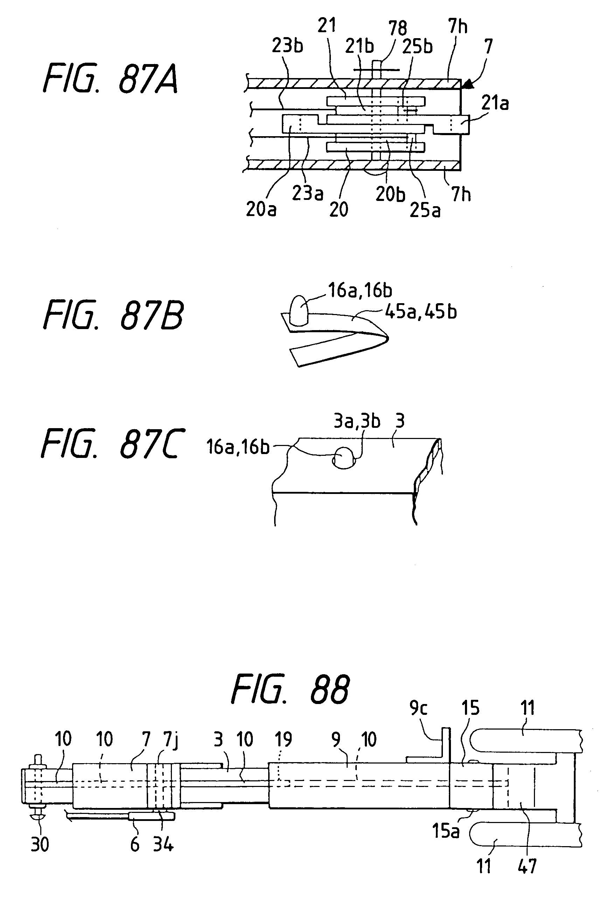

Fig. 88 is a plan view showing the front surface of the rear leg 3 provided with the pedal frame 9. An elongated guide hole 10 is formed in the front surface of the rear leg 3 along the substantial center from the upper end to the lower end of the rear leg.

As shown in Figs. 84A and 84B, two notches 19a and 19b which are spaced apart from each other are formed in the inner side surface of a lock piece 19 which is provided at the center of the bottom surface of the pedal frame 9 so as to project toward the inside of the rear leg 3. A lock piece 18 is fixedly disposed at the upper end of the rear leg 3, and a notch 18a is formed in the upper end side surface of the lock piece 18. Further, as previously mentioned, the notch 17a is formed in the lock piece 17 of the slider 7 (Fig. 85D).

As shown in Fig. 86, an upper hook 12a of a first tension spring 12 is hooked to the notch 18a of the lock piece 18 disposed at the upper end of the rear leg 3, whereas a lower hook 12b of the first tension spring 12 is hooked to the notch 19a of the lock piece 19 of the pedal frame 9.

An upper hook 13a of a second tension spring 13 which is disposed side by side the first tension spring 12 and is shorter than the same is hooked to the notch 17a of the lock piece 17 of the slider 7, whereas a lower hook 13b of the second tension spring 13 is hooked to the notch 19a of the lock piece 19 of the pedal frame 9.

Thus, the first tension spring 12 and the second tension spring 13 are arranged side by side within the rear leg 3, and the drawing forces of these springs affect on the movement of the slider 7 and the pedal frame 9 in the manner as will be described later.

Although a coil spring is used for the compression spring 12 in the above construction, another elastic member is also usable.

The first tension spring 12 and the second tension spring 13 are housed within the rear leg 3 in the above configuration. However, both of these springs, or one of them, may be provided outside the rear leg 3.

A hole 3a (see Fig. 87C) is formed in the side surface of the rear leg 3 so as to be in alignment with the innermost end of the elongated hole 73 of the top plate 7c of the slider 7 when the slider is located at the upper stop position and remains in contact with the upper stopper 14, as shown in Fig. 86. A spring chamber 44a is formed inside the rear leg 3 corresponding to the hole 3a, and a folded leaf spring 45a is housed in this spring chamber 44a. As shown in Fig. 87B, the upper knock pin 16a is mounted on the leaf spring 45a, and this upper knock pin 16a projects out of the hole 3a while being resiliently supported by the leaf spring 45a.

On the other hand, a hole 3b (see Fig. 87C) is formed in the side surface of the rear leg 3 so as to be in alignment with the upper edge of the pedal frame 9 when the pedal frame is located at the lower stop position and remains in contact with the lower stopper 15, as shown in Fig. 86. As with the spring chamber 44a, a spring chamber 44b is formed inside the rear leg 3 corresponding to the hole 3b, and a folded leaf spring 45b is provided in the spring chamber 44b. A lower knock pin 16b is attached to the leaf spring 45b, as shown in Fig. 87B. Moreover, the knock pin 16b projects out of the hole 3b while being resiliently supported by the leaf spring 45b, as shown in Fig. 87C.

The projections 7h, 7h of the slider 7 are respectively provided with two rotating plates 20 and 21 supported by a support shaft 78, as shown in Fig. 87A. These rotating plates 20 and 21 independently rotate and return to their original positions by means of torsion springs (not shown). The rotating plates 20 and 21 are provided with outer peripheral slots 20b and 21b, respectively. The wires 23a and 23b are provided around the outer peripheral slots 20b and 21b in a direction of reverse of rotation, and pins 25a and 25b attached to the leading ends of the wires 23a and 23b engage with the peripheries of the rotating plates 20 and 21. Furthermore, the rotating plates 20 and 21 have protuberances 20a and 21a, respectively (Fig. 86).

The wires 23a and 23b are respectively connected to the two operation buttons 22a and 22b provided at an upper part of the press bar 5 through the inner cavity of the press bar 5. If one of the operation buttons 22a, 22b is pressed, the wire 23a or 23b is drawn. Either the rotating plate 20 or the rotating plate 21 which is associated with the pressed button rotates around the support shaft 78. One of the protuberances 20a and 21a of the rotating plates 20 and 21 rotates, and the corresponding upper knock pin 16a or lower knock pin 16b is pressed to such an extent that the knock pin arrives at a point below the surface of the rear leg 3. As shown in Fig. 86, when the slider 7 moves again upward from the lower position (designated by a phantom line shown in Fig. 86) to an upper position, the tapered slot 74 formed on the inner surface of the top plate 7c of the slider 7 presses down the upper knock pin 16a to such an extent that the knock pin 16a arrives at the point below the surface of the rear leg 3. Hence, the upward movement of the slider 7 is not hindered by the upper knock pin 16a.

The operation of the folding-in-four type collapsible baby buggy having the above mentioned construction according to this embodiment will now be described.

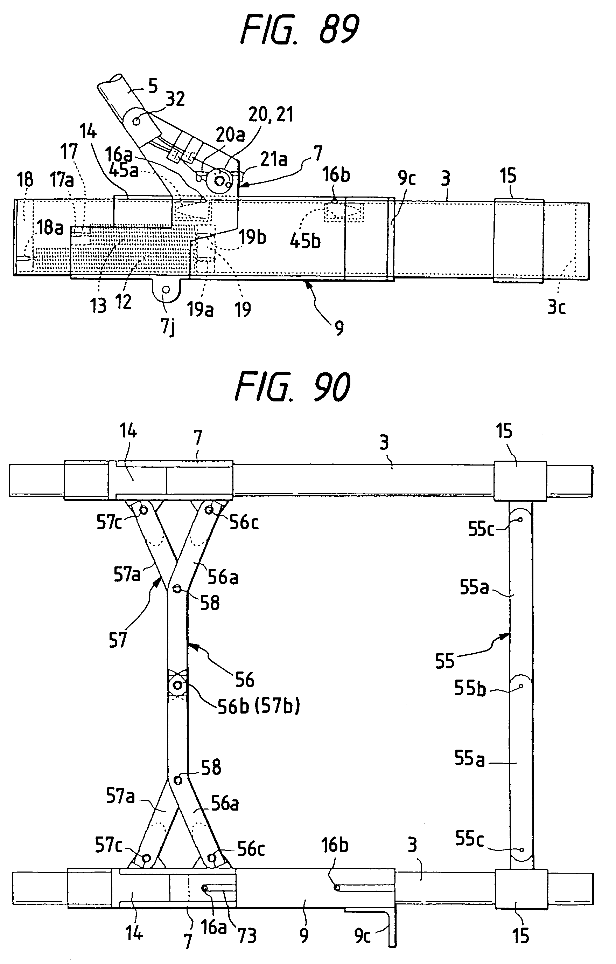

Fig. 89 shows the slider 7 and the pedal frame 9 when they are located at the upper stop position. The state of the slider and the pedal frame shown in this drawing corresponds to the state of the seating apparatus shown in Fig. 75. The side bar 6 pushes the front leg 2 in a forward direction, so that the legs are opened. Simultaneously, the press bar 5 is tilted in a rearward direction around the pivot pin 31 attached to the rear end of the arm rest member 4, whereby the baby buggy is unfolded.

With the baby buggy in the unfolded state, the front leg lateral bar 54 is stretched as it is shown in Fig. 79. Similarly, the rear leg lateral bar 55, the slider joint link 56, the portion of the rear leg joint link 57 between the right and left pivot pins 58, 58 are also stretched, as shown in Fig. 90. In this state, the upper stopper 14 hinders the upward movement of the slider 7, and the upper knock pin 16a projects to the outside so as to engage with the elongated hole 73 of the slider 7, as shown in Fig. 89. The upper knock pin 16a comes into contact with the innermost end of the elongated hole 73, whereby the slider 7 is prevented from moving downward.

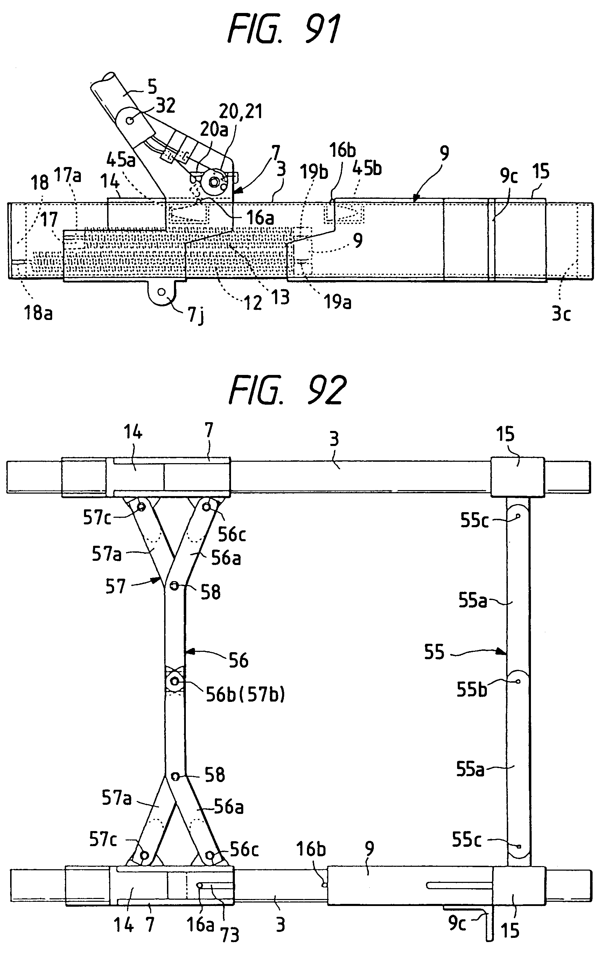

In Fig. 89, when the pedal frame 9 is located at the upper stop position, the lower knock pin 16b is kept pressed down by the inner wall surface of the pedal frame 9. Hence, the downward movement of the pedal frame 9 is not hindered by the lower knock pin 16b. If the pedal frame 9 is pushed down along the rear leg 3 until it comes into contact with the lower stopper 15, as shown in Fig. 91, the upper edge of the pedal frame 9 is engaged with the lower knock pin 16b projecting outside by the resilient force of the leaf spring 45b having been released from the compressed state. At this time, the pedal frame 9b is prevented from moving upwards and is held in a locked state.

In this state, the first tension spring 12 and the second tension spring 13 are stretched downwardly. At this time, resilient energy is stored in both the first tension spring 12 and the second tension spring 13. Specifically, the tension spring 12 possesses a drawing force for urging the pedal frame 9 upwardly, whereas the tension spring 13 possesses a drawing force for urging the slider 7 downwardly. The upward movement of the pedal frame 9 is prevented by the lower knock pin 16b, whereas the downward movement of the slider 7 is prevented by the upper knock pin 16a.

Further, as shown in Fig. 90, the slider 7 is kept unmoved in this state, and hence the rear leg lateral bar 55, the slider joint link 56, and the rear leg joint link 57 are held in the stretched state in the same manner as they are shown in Fig. 90.

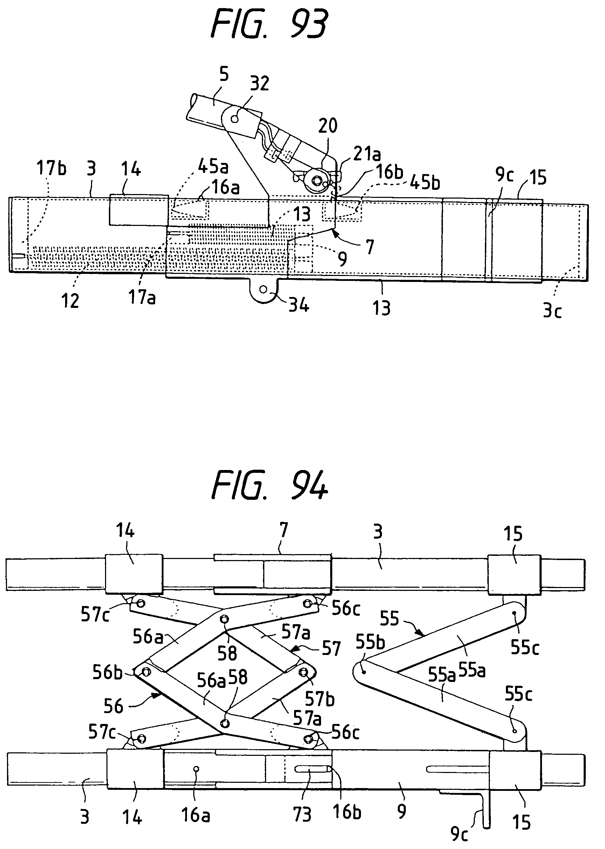

When the rotating plate 20 rotates as a result of the pressing of either the operation button 22a or 22b, as shown in Fig. 91, the protuberance 20a of the rotating plate 20 presses the upper knock pin 16a, whereby the slider 7 is released from its locked state. At this time, the drawing force of the tension spring 12 is released at one time, and the slider 7 is moved downward along the rear leg 3. As shown in Fig. 93, the slider 7 comes to a stop when the lower end of the slider 7 comes into contact with the upper edge of the pedal frame 9.

Associated with the downward movement of the slider 7 provided on the rear leg 3 having the pedal frame, the slider joint link 56 and the rear leg joint link 57 rotate around the right and left pivot pins 58, 58, as shown in Fig. 94. As a result, the center hinged portions 56b and 57b of the joint links 56 and 57 move away from each other in the longitudinal direction of the baby buggy. Together with this movement, the remaining slider 7 on the opposite side is also moved downward, which results in the rear legs being folded laterally. In conjunction with the folding movement of the rear legs, the rear leg lateral bar 55 is folded up at its hinged portion 55b, whereby the rear legs 3, 3 of the baby buggy are laterally folded up.

On the other hand, in conjunction with the downward movement of the right and left sliders 7, 7, the right and left front legs 2, 2 are folded toward the rear legs 3, 3 via the side bars 6, 6, as shown in Fig. 78. Concurrently, the leading end of the rocking piece 51 is rotated downwardly around the rotating axis of the rocking piece via the joint bar 52. The second bevel gear 50b attached to the rocking piece 51 rotates clockwise as viewed from the outside. Associated with the rotation of the right and left second bevel gears 50b, 50b, the right and left first bevel gears 50a, 50a rotate as being shown in Fig. 80. The right and left front sleeves 43, 43 attached to the first bevel gears 50a, 50a rearwardly rotate in opposite directions. As a result, the front leg lateral bar 54 fixed with both ends thereof attached to the sleeves 43, 43 is folded up around the right and left pivot pins 54c, 54c, so that the right and left front legs 2, 2 are laterally folded up.

Further, together with the downward movement of the right and left sliders 7, 7, the right and left front legs 2, 2 are respectively folded toward the rear legs 3, 3 via the side bars 6, 6, as shown in Fig. 76. As a result, the baby buggy is longitudinally folded up.

In this way, the right and left front legs 2, 2 and the right and left rear legs 3, 3 of the baby buggy are laterally folded up in association with the downward movement of the right and left sliders 7, 7, and, at the same time, the baby buggy is longitudinally folded up. The overall framework of the baby buggy is folded up as shown in Fig. 76, that is, the framework is folded up in both the longitudinal and lateral directions thereof.

When the rotating plate 21 rotates as a result of the pressing action of the other button of the operation buttons 22a and 22b, as shown in Fig. 93, the protuberance 21a of the rotating plate 21 presses the lower knock pint 16b down, so that the pedal frame 9 is released from the locked state. At this time, the drawing force of the second tension spring 13 is released, so that the pedal frame 9 is moved upwardly. Simultaneously, the pedal frame 9 pushes up the slider 7, as a result of which the slider 7 returns to come into contact with the upper stopper 14 and is held in the stopped state. At this time, the upper knock pin 16a prevents the slider 7 from moving downward again.

In association with the upward movement of the pedal frame, the slider joint link 56 and the rear leg joint link 57 return to their original stretched states, and the rear leg lateral bar 55 is also stretched. Simultaneously, the right and left side bars 6, 6 rotate around the portions thereof (pivot pins 33, 33) hinged to the front legs 3, 3, so that the front legs 2, 2 are pushed forward. Concurrently, the right and left arm rest members 5, 5 and the right and left press bars 5, 5 carry out the operation opposite to the folding operation as previously mentioned. As a result, the right and left front legs 2, 2, the arm rest members 4, 4, and the press bars 5, 5 return to their stretched states as shown in Fig. 75.

At the same time, the right and left rocking pieces 51, 51 rotate in the opposite direction via the right and left joint bars 52, 52 hinged to the right and left side bars 6, 6. As a result, the right and left second bevel gears 50b, 50b rotate in the direction in which they return to their original positions. Simultaneously, the right and left first bevel gears 50a, 50a are rotated, which again brings the front leg lateral bar 54 to its original stretched state.

Thus, the baby buggy is laterally and longitudinally unfolded at the same time, as shown in Fig. 75.

In the above construction, if the second tension spring 13 is removed from the rear leg 3, the drawing force will not act on the slider 7 even when the pedal frame 9 moved to the lower stop position. For this reason, the framework is not unfolded. However, if the framework is designed so as to be manually unfolded, the baby buggy does not need the second tension spring 13.

Further, in the above construction, in the even that the first tension spring 12 is removed from the rear leg 3, the upward drawing force will not act on the pedal frame 9 even when the pedal frame 9 is released from the locked state after having been moved to the lower stop position, and hence the slider 7 does not move upward and the framework will not be folded up. However, if the framework is designed so as to be manually folded up, the baby buggy does not need the first tension spring 12.

The folding-in-two type baby buggy of this embodiment will be described. As illustrated in Figs. 95 through 97, the side members on both sides of the baby buggy, that is, the front legs 2, the rear legs 3, the arm rest members 4, the press bars 5, the side bars 6, and the various members which connect them together are the same in configuration and operation as those used for the previously mentioned folding-in-four type baby buggy.

The slider 7 provided on the rear leg 3 is shown in Fig. 85, and the pedal frame 9 is shown in Fig. 84. Fig. 83 shows the internal structure of the button case 22 provided at the intermediate joint section between the press bars 5, 5. Fig. 83 shows the upper knock pin 16a and the lower knock pin 16b. The first and second tension springs 12 and 13 provided side by side within the rear leg 3 are shown in Fig. 86. These members are the same in configuration and operation as those used for the folding-in-four type baby buggy.

This folding-in-two type baby buggy is not unfolded laterally, and hence the press bar 5 is designed so as not to be collapsible. The joint members provided in the lateral direction of the baby buggy are fixed to the associated members.

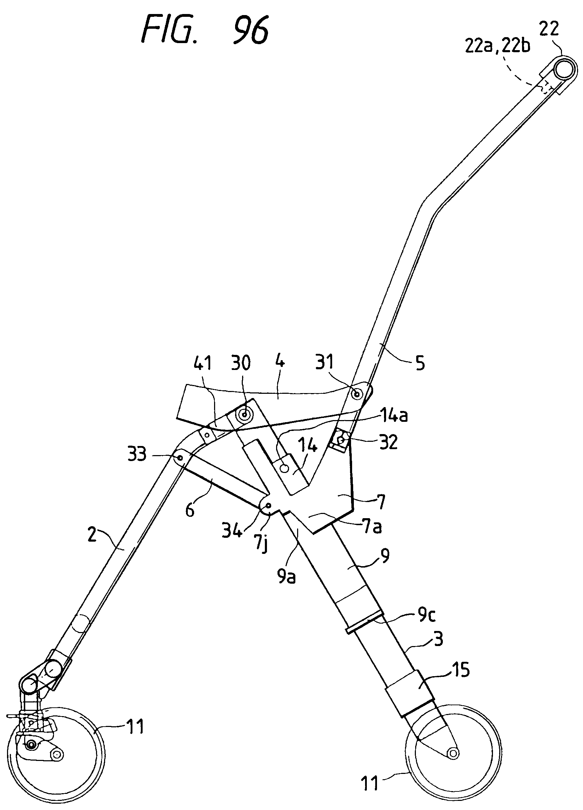

In other words, as shown in Fig. 96, the upper ends of the front leg 2 and the rear leg 3 are hinged to the arm rest member 4 by the pivot pin 30, respectively. The rear end of the arm rest member 4 is hinged to the press bar 5 by the pivot pin 30, whereas the lower end of the press bar 5 is hinged to the slider 7 which longitudinally slides over the rear leg 3 by the pivot pin 32. The side bar 6, which is hinged at one end thereof to the slider 7 by the pivot pin 34, is further hinged at the other end thereof to the front leg 2 by the pivot pin 33. Thus, the framework is constructed in a symmetrical way in relation to the longitudinal axis of the baby buggy. The right and left sliders 7, 7, the right and left front legs 2, 2, and the right and left rear legs 3, 3 are connected together by lateral bars 8, 8a, and 8b having a predetermined length, whereby the folding-in-two type baby buggy can be arranged as it is shown in Fig. 95.

Moreover, in the case of this folding-in-two type baby buggy, it can be folded up and unfolded in its longitudinal direction by the pressing down action of the pedal frame 9 and the operation of the operation buttons 22a and 22b completely in the same manner as the folding-in-four type baby buggy is folded up and unfolded, except that the framework of the folding-in-four type baby buggy is laterally folded up and unfolded.

### Eighth embodiment

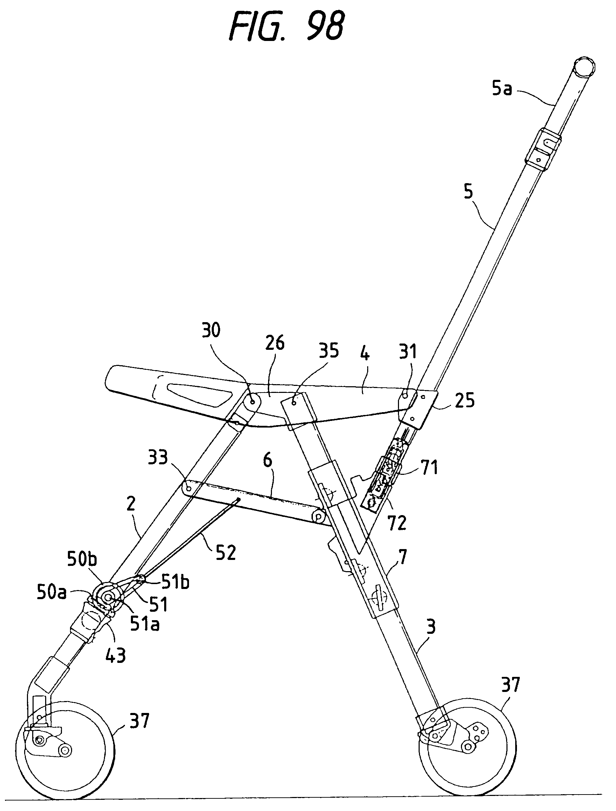

With reference to Figs. 98 through 102, a collapsible baby buggy of the eighth embodiment will be described.

This collapsible baby buggy has substantially the same framework as the baby buggy in the sixth embodiment. The baby buggy of this embodiment is different from the baby buggy in the sixth embodiment in that the slider 7 of the sixth embodiment is driven by the electric motor 13. However, in this embodiment, the slider 7 is manually moved. The baby buggy of this embodiment will now be described mainly focusing on the differences between the sixth embodiment and the eighth embodiment.

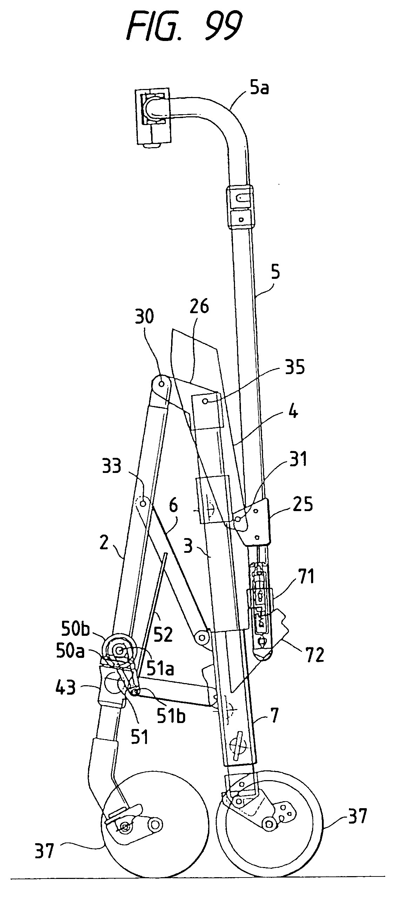

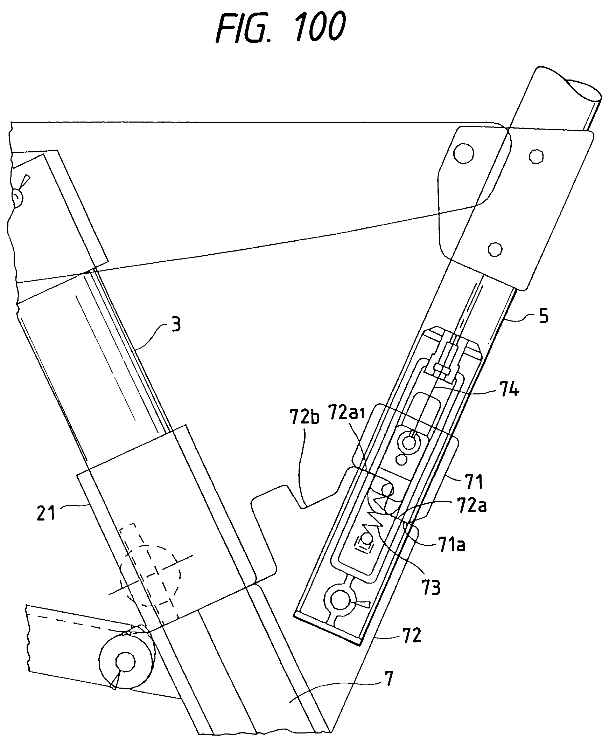

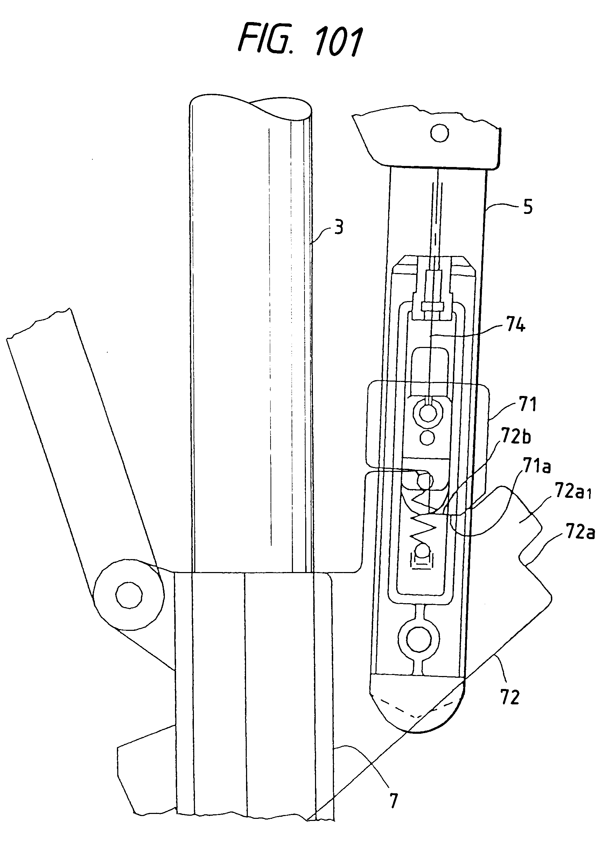

In the drawings, the same reference numerals are provided to designate the corresponding features of the sixth embodiment, and their explanation will be omitted here for brevity. Fig. 98 is a side elevation showing the structure of the collapsible baby buggy of this embodiment when it is unfolded. Fig. 99 is a side elevation showing the structure of the collapsible baby buggy shown in Fig. 98 when it is folded up. Fig. 100 is an enlarged view showing the principal elements of the baby buggy shown in Fig. 98. Fig. 101 is an enlarged view showing the principal elements shown in Fig. 99.

The sliders 7, 7 are provided on the outer periphery of the right and left rear legs 3, 3 in a slidable fashion. A fitting slider 71 which fits to the slider 7 is slidably provided on the press bar 5 hinged to the slider 7. A fitting portion 71a for fitting purposes is formed in the fitting slider 71. On the other hand, a fitting projection 72 for fitting purposes is integrally formed on the slider 7. Two types of fitted portions 72a and 72b which fit to the fitting portion 71a are formed in the fitting projection 72.

The fitted portion 72a of these fitting portions is formed in a rearward direction in relation to the fitting projection 72, and the fitted portion 72a retains the baby buggy in an unfolded state. In other words, the fitted portion 72a is formed at the position where it can fit to the fitting portion 71a of the fitting slider 71 when the press bar 5 is tilted at a large angle with respect to the rear leg 3 while the baby buggy is unfolded. The other fitted portion 72b is formed in a forward direction in relation to the fitting projection 72 in order to retain the baby buggy in a folded state. In other words, the fitted portion 72b is formed at the position where it can fit to the fitting portion 71a of the fitting slider 71 when the press bar 5 is tilted at a small angle with respect to the rear leg 3 while the baby buggy is folded up.

Each of the fitting portion 71a and the fitted portion 72a or 72b is shaped like a crank as viewed from its side, as shown in Figs. 100 and 101. Because of the presence of the fitted portion 72a having a crank shape, a protuberance 72a1 is formed next to this fitted portion 72a in the forward direction. By virtue of this protuberance, in the event that a large force is exerted on the slider, it is impossible for the fitting portion 71a of the fitting slider 71 to pass the protuberance 72a1. As a result, the baby buggy is prevented from being folded up and is held in the unfolded state.

The fitting slider 71 is urged in the direction in which it fits to the corresponding fitted portion by means of a tension spring 73 disposed within the press bar 5. Conversely, the side of the fitting slider 71 opposite to its urged side is connected to a release wire 74 disposed in the press bar 5. This release wire 74 is designed to disengage the fitting slider 71 from the fitted portion when a switch of the case 24 provided at an upper part of the press bar 5 is pressed.

The slider 7 is provided with an unillustrated pedal (which doubles as a handle) so that the user can manually move the slider in the vertical direction while the fitting slider 71 is disengaged from the fitted portion.

The operation of the collapsible baby buggy of this embodiment having the above mentioned construction will be described hereinbelow.

Figs. 98 and 100 show the unfolded baby buggy with the slider 7 being in contact with a stopper 21 and remaining in a stopped state at an upper stop position. Specifically, the side bar 6 pushes the front leg 2 in a forward direction, whereby the legs are opened. At the same time, the press bar 5 is supported and tilted in a rearward direction by the pivot pin 32 hinged to the slider 7 and the pivot pin 31 hinged to the rear end of the arm rest member 4, so that the baby buggy is unfolded.

To fold up the unfolded baby buggy, the switch of the case 24 provided at the upper portion of the press bar 5 is pressed. In response to this pressing action, the wire 74 draws the fitting slider 71, so that the fitting slider 71 is disengaged from the slider 7. While the fitting slider 71 is in the disengaged state, the slider 7 is manually moved in a downward direction by pressing the pedal downwards with hand or foot. In association with this downward pressing action, the press bar 5, the arm rest member 4, and the side bar 6 rotate around the hinged portions (the pivot pins 31, 32, and 35), as a result of which the press bar 5 projects upright whilst the arm rest member 4 is tilted steeply in a downward direction.

As a result of the downward movement of the hinged portion (the pivot pin 34) between the slider 7 and the side bar 6, the front leg 2 hinged to the side bar 6 by the pivot pin 33 rotates around the hinged portion (the pivot pin 30) where the front leg 2 is hinged to the rear leg 3, as a result of which the front leg 2 is folded toward the rear leg 3. In this way, the baby buggy is folded up longitudinally.

To unfold the folded-up baby buggy, the switch of the case 24 at the upper part of the press bar 5 is pressed in the same manner as it is practiced in the above. As a result, the wire 74 draws the fitting slider 71 so as to disengage from the slider 7. While the fitting slider 71 is held in the disengaged state, the slider 7 is manually moved in the upward direction by drawing the pedal upwards with hands or foot. In association with the upward movement of the slider 7, the hinged portions (the pivot pins 32 and 34) where the slider 7 is hinged to the press bar 5 and the side bar 6 move upward. In the manner of reverse of the folding-up operation, the press bar 5 is tilted in the rearward direction whilst the arm rest member 4 is held in the horizontal state again. The front leg 2 is pushed in an opening direction, as a result of which the overall baby buggy is unfolded as it is shown in Fig. 98.

### (Another Modified Example shown in Diagrammatic Representation)

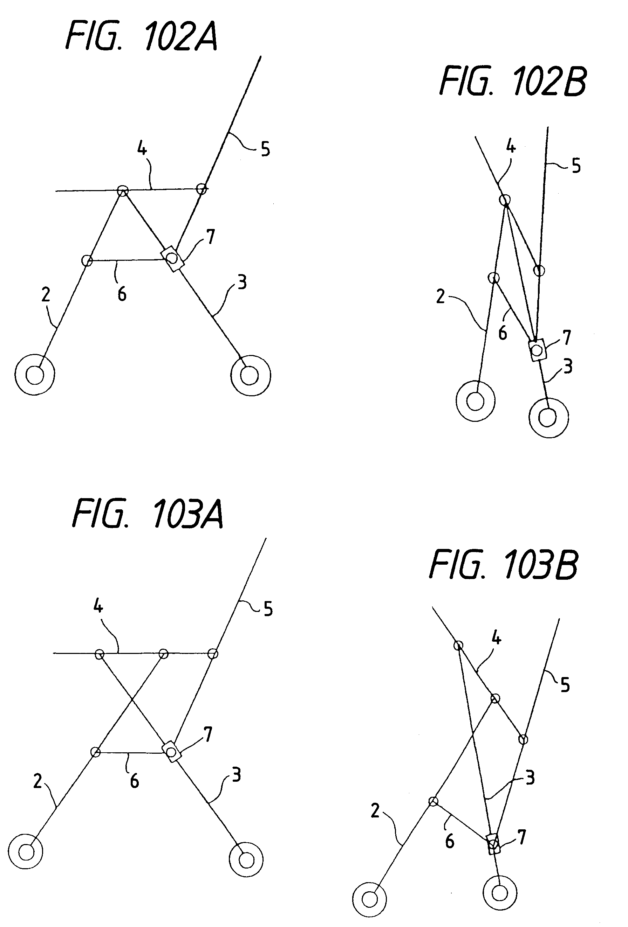

Figs. 102 through 105 are diagrammatic representations (hereinafter referred to as a diagram) which illustrate the fundamental framework of a practicable baby buggy of this invention in a simple line. Throughout the drawings, the diagram designated by (A) shows the unfolded baby buggy, whereas the diagram designated by (B) shows the folded-up baby buggy.

The baby buggies of the first, second, and seventh embodiments are characterized in that the front leg 2 and the rear leg 3 are hinged at their upper ends to the arm rest member 4 by the pivot pin 30. They belong to the type of the baby buggy represented by the diagram shown in Fig. 102. The baby buggies of the third, fourth, fifth, sixth, and eighth embodiments are characterized in that the front leg 2 and the rear leg 3 are hinged at their upper ends to the arm rest member 4 by the pivot pin 30 and the upper end of the rear leg 3 is hinged to the arm rest member 4 by the pivot pin 35 provided in the vicinity of the pivot pin 30.

However, the baby buggy of this invention that can be put into practice is not limited to the types of the baby buggies disclosed in the first through eighth embodiments. In other words, the present invention can be applied to any type of baby buggy so long as it has a framework comprising: the front leg 2 and the rear leg 3 which are hinged at their upper ends to the arm rest member 4, the arm rest member 4 hinged at its rear end to the press bar 5, the press bar 5 hinged at its lower end to the slider 7 which moves in the longitudinal direction of the rear leg 3, and the side bar 6 hinged at its one end to the slider 7 and hinged at its other end to the front leg 2.

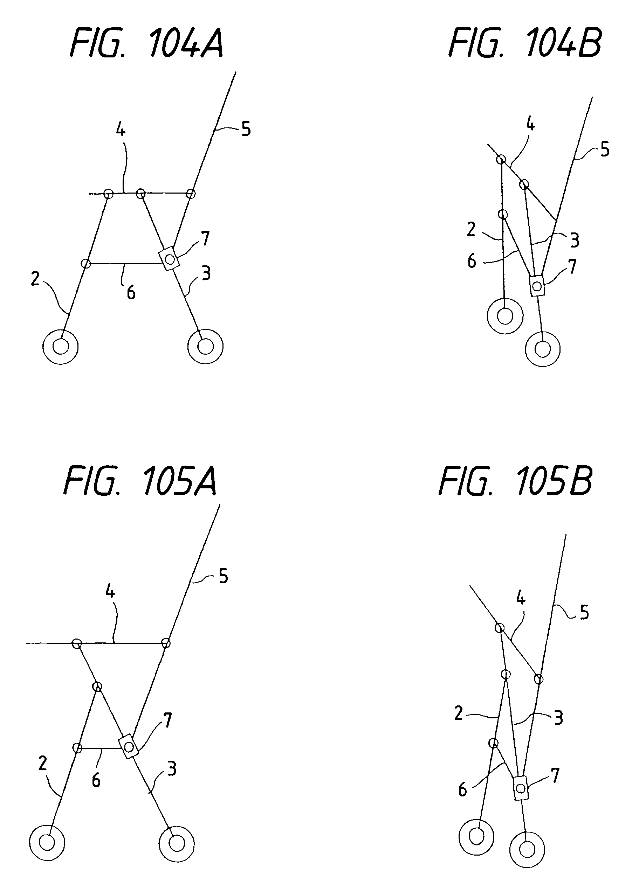

At this time, the connection between the front leg and the rear leg is not limited to the previously mentioned connection, that is, the connection in which the front leg 2 and the rear leg 3 are hinged at their upper ends to the arm rest member 4 by the common pivot pin, as shown in Fig. 102. The front leg 2 and the rear leg 3 which cross each other may be hinged to the arm rest member 4 by different pivot pins, as shown in Fig. 103. Alternatively, the front leg 2 and the rear leg 3 which do not cross each other may be hinged to the arm rest member 4 by different pivot pins, as shown in Fig. 104. Further, the front leg 2 is hinged at its upper end to some point around the upper end of the rear leg 3 by a pivot pin, and this rear leg 3 is hinged at its uppermost end to the arm rest member 4 by a different pivot pin, as shown in Fig. 105. In any one of these types (shown in Figs. 102 through 105), the front leg 2 and the rear leg 3 are hinged substantially at their upper ends to the arm rest member 4.

### (Modified Example of Baby Buggy for Different Use)

The seating apparatuses disclosed in the first through eighth embodiments are baby buggies. However, the application of the present invention is not limited to the baby buggy. In other words, the present invention is applicable to any type of seating apparatus so long as it has a framework comprising: the front leg 2 and the rear leg 3 which are hinged at their upper ends to the arm rest member 4, the arm rest member 4 hinged at its rear end to the press bar 5, the press bar 5 hinged at its lower end to the slider 7 which moves in the longitudinal direction of the rear leg 3, and the side bar 6 hinged at its one end to the slider 7 and hinged at its other end to the front leg 2.

For example, the present invention is applicable to a wheel chair on which a patient or a person having a physical burden seats themselves, so that an attendant can move the patient by pushing the wheel chair. Further, the present invention is applicable to a mobile wheel chair which employs an electric motor for its driving source. This invention is also applicable to a push chair for the aged which the aged in delicate health uses instead of a walking stick when walking. The push chair of this type has a seat so that the aged can sit on the seat if they got tired from the walk. Generally, this type of push chair has an internal space for storing belongings. Moreover, the seating apparatus of this invention is usable as a baby chair called a rack which allows an infant to be reliably seated by the side of the table in a restaurant.

### Ninth Embodiment

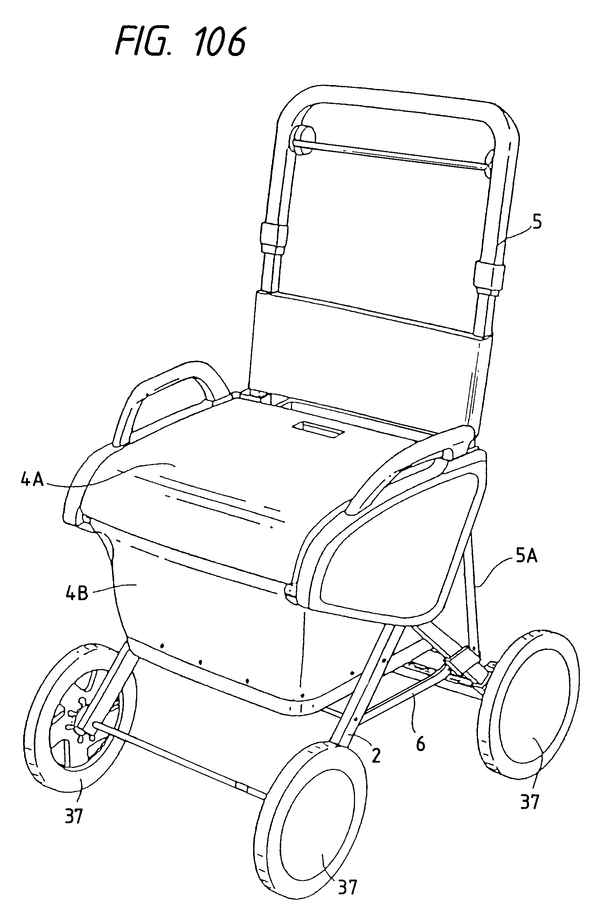

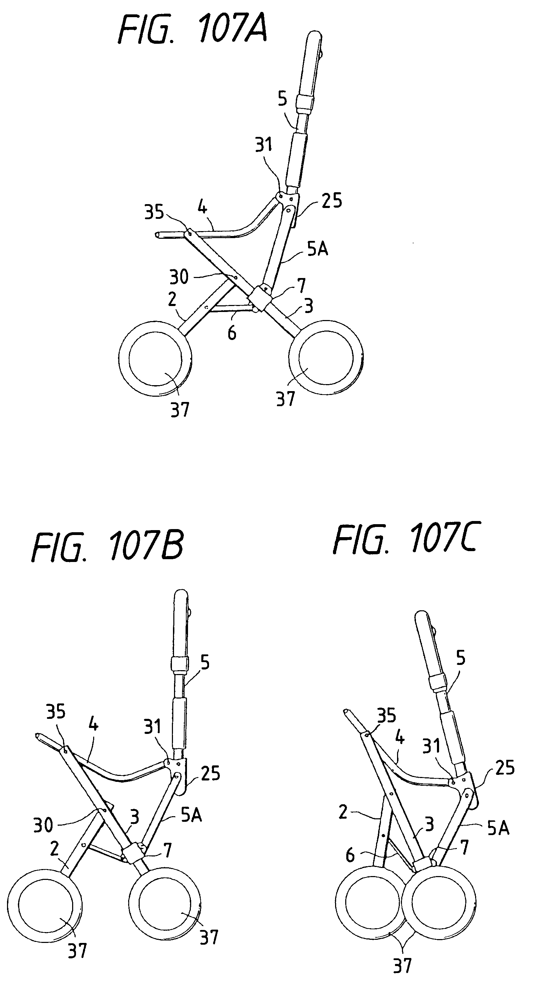

Figs. 106 and 107 show a ninth embodiment in which a seating apparatus of this invention used as a push chair for the aged.

Fig. 106 is a perspective view showing a collapsible push chair for the aged of this embodiment. Fig. 107 is a side view showing the framework of the collapsible push chair for the aged. Fig. 107A shows the push chair when it is unfolded. Fig. 107B shows the during the course of the unfolding action of the push chair. Fig. 107 shows the push chair when it is folded up.

This collapsible push chair is provided with a side member comprising the front leg 2, the rear leg 3, the arm rest member 4, the press bar 5, and the side bar 6, and this side member is common to the right and left sides of the framework. The construction of the side member on one side of the framework will be described. The mechanism for connecting the side members on both sides is the same as the mechanism used in the above embodiments, and hence its explanation will be omitted.

In the drawings, the upper end of the rear leg 3 is rotatively hinged to the arm rest member 4 by the pivot pin 35, and the upper end of the front leg 2 is rotatively hinged to an upper portion of the rear leg 3 by the pivot pin 30. The front leg 2 and the rear leg 3 are respectively provided with wheels 37. The rear end of the arm rest member 4 is rotatively hinged to a press bar sleeve 25 attached to the lower end of the press bar 5 by the pivot pin 31. This press bar 5 is made of a round pipe, and its one end is curved. As shown in Fig. 4, the press bars 5 are directed with their curved portions up and they are connected to each other so as to form a substantial U shape. This press bar 5 is used instead of the walking stick when the aged in poor health walks.

The sliders 7 are fitted around the outer periphery of the right and left rear legs 3, 3 in a slidable manner. A press bar auxiliary member 5A is rotatively jointed to the press bar sleeve 25 attached to the lower end of the press bar 5. The lower end of this press bar auxiliary member 5A is hinged to the slider 7 by a pivot pin 32. One end of the side bar 6 is hinged to the slider 7. The other end of the side bar 6 is hinged to the front leg 2.

One continuous member was used for the press bar 5 in the first through eighth embodiments. However, in this embodiment, the rotative press bar auxiliary member 5A is attached to the lower end of the press bar 5. As a result, the press bar 5 becomes collapsible and can be folded into two. Since the press bar is collapsible, the overall framework can be folded up much smaller (Fig. 107C).

Like the slider of the eighth embodiment, the slide may be manually moved, or it may be actuated by an electric motor in the same manner as in the fifth or sixth embodiment. Further, the slider may be moved by a spring as it is in the first, second, third, fourth, and seventh embodiment. Accordingly, the explanation of the mechanism for moving the slider, the first means for holding the seating apparatus in the unfolded state, and the second means for holding the seating apparatus in the folded up state will be omitted here for brevity.

A cover 4A which doubles a seat is stretched between both arm rest members 4. The aged seats themselves on this cover 4A which doubles as the seat if they got tired after walking. This seat cover 4A can be opened and closed, and a space for storing belongings is formed below this cover 4A. This space is surround by a bag-like container 4B except for the top of the space, whereby belongings can be held in this space.

### (Other Modified Example)

In the previously mentioned embodiments, the slider is moved using a spring (Embodiment 1 to Embodiment 4, and Embodiment 7) or an electric motor (Embodiment 5 and Embodiment 6), or the slider is manually moved (Embodiment 8). However, another system may be employed in another embodiment. For example, the slider may be moved utilizing the torque of mobile wheels or using an air cylinder.

Moreover, in the previous embodiments, the seating apparatus is folded up and unfolded using a spring (Embodiment 1, Embodiment 2, and Embodiment 7); it is manually unfolded but folded up using a spring (Embodiment 3 and Embodiment 4); it is unfolded and folded up using an electric motor (Embodiment 5 and Embodiment 6); and it is manually unfolded and folded up (Embodiment 8). However, another combination of actuating systems may be adopted in another embodiment for unfolding and folding up the seating apparatus.

For example, the seating apparatus is unfolded using a spring but folded up manually; it is unfolded using a spring but folded up using an electric motor; it is unfolded using an electric motor but folded up using a spring; it is unfolded using an electric motor but folded up manually; or it is unfolded manually but folded up using an electric motor.

In the previous embodiments, in the case of the seating apparatus which is unfolded and folded up using a spring, it is unfolded using a compression spring but folded up using a tension spring (Embodiment 1 and Embodiment 2); and it is unfolded and folded up using a tension spring (Embodiment 7). In another embodiment, the seating apparatus may be unfolded using a tension spring but folded up using a compression spring; or it may be unfolded and folded up using a compression spring. In these cases, a torsion spring or a spiral spring is usable for the compression spring or the tension spring.

In the previous embodiments, the first retaining means for holding the seating apparatus in an unfolded state used in the first, second, or seventh embodiment is the upper knock pin 16a, whereas the second retaining means for holding the seating apparatus in a folded up state is the lower knock pin 16b. In the third or fourth embodiment, the first retaining means is the knock pin 16, and the second retaining means is the compression spring 12. In the fifth or sixth embodiment, the first and second retaining means are the electric motor 13 used for unfolding and folding up the seating apparatus. In the eighth embodiment, the first and second retaining means are the fitting slider 71 which fits to the slider 7. However, the first and second retaining means are not limited to these elements, but any mechanism may be used as the retaining means so long as it holds the seating apparatus in the unfolded or folded up state.

In the third or fourth embodiment, the seating apparatus is unfolded manually but folded up using a spring. The second retaining means for holding the seating apparatus in the folded up state doubles as the spring 12 for folding up the seating apparatus. However, in another embodiment wherein the seating apparatus is unfolded using a spring but folded up manually, the first retaining means for holding the seating apparatus in the unfolded state can double as the spring used for unfolding the seating apparatus.

In the previous embodiments, the storage means for storing urging forces in the spring (referred to as a folding-up spring) which urges the slider downwardly for folding up purposes and the spring (referred to as an unfolding spring) which urges the slider upwardly was a manual system for manually storing the forces (which are generated resulting from the pressing down action) (Embodiment 1, Embodiment 2, and Embodiment 7). However, another system may be adopted in another embodiment. For example, a system for storing an urging force using an electric motor or utilization of rotation of mobile wheels can be adopted.

### [Effects of the Invention]

As has been described above, the seating apparatus is folded up by moving the slider (7) downwardly, and it is held in the folded up state by the second retaining means. Conversely, if the slider (7) is moved upwardly, the seating apparatus is unfolded. The seating apparatus is held in the unfolded state by the first retaining means. In this way, this invention adopts a new slide system instead of the conventional bracket that utilizes rotation movement or inverting movement. By virtue of the slide system, there is no dead point resulting from the rotating movement of the conventional bracket, and hence it is unnecessary for the user to have a certain level of skill when unfolding and folding up the seating apparatus. In other words, the adoption of the slide system, it becomes possible to provide a framework which can be folded up and unfolded in a simple operation.

By virtue of the third aspect of the present invention, when the first retaining means is released, the slider is moved downwardly by the folding-up spring, whereby the seating apparatus is automatically folded up. The seating apparatus is held in the folded-up state by the folding-up spring. In this way, the automatic folding-up action of the seating apparatus becomes available.

By virtue of the fourth aspect of the present invention, when the second retaining means is released, the slider is moved upward by the unfolding spring, whereby the seating apparatus is automatically unfolded. The seating apparatus is held in the unfolded state by the unfolding spring. In this way, the automatic unfolding action of the seating apparatus becomes available.

By virtue of the fifth or sixth aspect of the invention, urging forces are separately stored in the folding-up spring and the unfolding spring by means of the storing means. The releasing means releases the urging force stored in the folding-up spring, whereby the seating apparatus is automatically folded up. The releasing means releases the urging force stored in the unfolding spring, whereby the seating apparatus is automatically unfolded. In this way, the automatic unfolding and folding up action of the seating apparatus become available.

By virtue of the sixth aspect of the present invention, the folding-up spring and the unfolding spring are put into a deflected state by manually pressing down the slider, so that urging forces are stored in the springs. The manual storage of the urging forces becomes easy.

By virtue of the seventh aspect of the present invention, the slider is moved by the electric motor. The seating apparatus can be held in either the unfolded or folded up state when the electric motor is stopped. Hence, it becomes unnecessary for the user to store urging forces in the spring, thereby rendering the seating apparatus more convenient.

By virtue of the ninth to sixteenth aspects of the present invention, the slider moves in the longitudinal direction of the rear leg as a result of the restoring forces of the tension spring and the compression spring attached to one rear leg by simply pressing down the pedal attached to the rear leg to the lower stop position and, subsequently, unlocking the slider. In association with this movement, the right and left front legs, the right and left rear legs, the arm rest members, and the press bar are folded up.

To unfold the folded up baby buggy, the pedal is urged from the lower position upward and the slider is pushed up as a result of the restoring force of the compression spring by simply unlocking the pedal frame. In association with this upward movement of the slider, the right and left front legs, the right and left rear legs, the arm rest members, and the press bar are unfolded. In the collapsible baby buggy of this type, if the slider and the pedal frame are designed so as to be unlocked by the operation of an operation button provided at an upper part of the press bar, it becomes possible for the user to easily fold the baby buggy up by pressing down the pedal and pressing the operation button. Subsequently, it becomes possible to unfold the baby buggy by simply pressing the operation button.

As mentioned above, the collapsible baby buggy of this invention does not use the conventional rotating type bracket at all. Instead of the bracket, the present invention adopts the slide system wherein the slider moves along the rear leg as a result of restoring forces of the tension spring and the compression spring. As a result, it becomes unnecessary for the user to perform conventional laborious operations which require a certain level of skill. The baby buggy can be unfolded and folded up in the previously mentioned simple operation.

By virtue of the seventeenth to twenty-fifth aspects of the invention, the slider moves downwards in the longitudinal direction of the rear leg as a result of the restoring forces of the tension spring and the compression spring disposed in one rear leg by simply pressing down the pedal provided on the rear leg and, subsequently, unlocking the slider. In association with the downward movement of the slider, the right and left front legs, the right and left rear legs, the arm rest members, and the press bar are folded up. Simultaneously, together with the downward movement of the slider, the side bars and the joint bars rotate, and the front leg sleeves rotate via the first and second bevel gears. The folding action of the front leg lateral bar allows the seating apparatus to be folded up laterally.

To unfold the folded up baby buggy, the pedal is urged upward from the lower stop position and the slider is pushed up as a result of the restoring force of the compression spring by simply unlocking the pedal frame. In association with this upward movement of the slider, the right and left front legs, the right and left rear legs, the arm rest members, and the press bar are unfolded. Simultaneously, together with the upward movement of the slider, the side bars and the joint bars rotate, and the front leg sleeves rotate via the first and second bevel gears. The linear stretching of the front leg lateral bar allows the seating apparatus to be unfolded laterally.

In the collapsible baby buggy of this type, if the slider and the pedal frame are designed so as to be unlocked by operating an operation button provided at an upper part of the press bar, it becomes possible for the user to fold the baby buggy up in both the lateral and longitudinal directions thereof at one time by the pressing action of the pedal and the operation button. Subsequently, the baby buggy can be unfolded in the longitudinal and lateral directions thereof by simply pressing the operation button.

As previously mentioned, the collapsible baby buggy of this invention does not use the conventional rotating type bracket at all. Instead of the bracket, the present invention adopts the slide system wherein the slider moves along the rear leg as a result of restoring forces of the tension spring and the compression spring. As a result, it becomes unnecessary for the user to perform conventional laborious operations which require a certain level of skill. The baby buggy can be unfolded and folded up in the previously mentioned simple operation.

By virtue of the twenty-sixth to thirty-second aspects of the present invention, when the slider moves downward in the longitudinal direction of the rear leg resulting from the pressing down of the pedal provided on the rear leg, the right and left front legs, the right and left rear legs, the arm rest members, and the press bar are folded up.

To unfold the folded up baby buggy, the slider moves upward from the lower stop position as a result of the restoring force of the compression spring (or the drawing force of the drawing spring) by simply unlocking the slider. In association with this upward movement of the slider, the right and left front legs, the right and left rear legs, the arm rest members, and the press bar are unfolded.

In the collapsible baby buggy of this type, if the slider is designed so as to be unlocked by operating an operation button provided at an upper part of the press bar, it becomes possible for the user to fold the baby buggy up by pressing down the pedal. Subsequently, the baby buggy can be unfolded by simply pressing the operation button.

As previously mentioned, the collapsible baby buggy of this invention does not use the conventional rotating type bracket at all. Instead of the bracket, the present invention adopts the slide system wherein the slider moves along the rear leg as a result of a restoring force of the compression spring (or the drawing force of the drawing spring). As a result, it becomes unnecessary for the user to perform conventional laborious operations which require a certain level of skill. The baby buggy can be unfolded and folded up in the previously mentioned simple operation.

By virtue of the thirty-third to thirty-ninth aspects of the present invention, the slider moves downward in the longitudinal direction of the rear leg by pressing down the pedal attached to the rear leg. Together with the downward movement of the slider, the right and left front legs, the right and left rear legs, the arm rest members, and the press bar are folded up. Simultaneously, in association with the downward movement of the slider, the side bars and the joint bars rotate, and the front leg sleeves rotate via the first and second bevel gears. The folding action of the front leg lateral bar allows the seating apparatus to be folded up laterally.

To unfold the folded up baby buggy, the slider moves upward from the lower stop position as a result of the restoring force of the compression spring (or the drawing force of the drawing spring) by simply unlocking the slider. In association with this upward movement of the slider, the side bars and the joint bars rotate, and the front leg sleeves rotate via the first and second bevel gears. The linear stretching of the front leg lateral bar allows the seating apparatus to be unfolded laterally.

In the collapsible baby buggy of this type, if the slider is designed so as to be unlocked by operating an operation button provided at an upper part of the press bar, it becomes possible for the user to fold the baby buggy up by pressing down the pedal. Subsequently, the baby buggy can be unfolded by simply pressing the operation button.

As previously mentioned, the collapsible baby buggy of this invention does not use the conventional rotating type bracket at all. Instead of the bracket, the present invention adopts the slide system wherein the slider moves along the rear leg as a result of a restoring force of the compression spring (or the drawing force of the drawing spring). As a result, it becomes unnecessary for the user to perform conventional laborious operations which require a certain level of skill. The baby buggy can be unfolded and folded up in the previously mentioned simple operation.

By virtue of the forty to forty-fourth aspects of the present invention, the slide can be moved upward or downward in the longitudinal direction of the rear leg by rotating the male screw rod, provided in the rear leg, in the normal or reverse direction using an electric motor. As a result of the upward or downward movement of the slider, the hinged portions of the slider attached to the side bar and the press bar also move upward or downward in the longitudinal direction of the rear leg, whereby the front legs are attracted toward the rear legs or pushed in a forward direction. Thus, the front and rear legs are opened or closed. Simultaneously, the arm rest members are tilted in a rearward direction or returned to the horizontal state, whereas the press bar projects upright or is tilted in a rearward direction. In this way, the baby buggy can be folded up or unfolded in its longitudinal direction.

As previously mentioned, the collapsible baby buggy of this invention does not use the conventional rotating type bracket at all. Instead of the bracket, the present invention adopts the slide system wherein the slider moves upward or downward along the rear leg by the operation of the switch of the electric motor. As a result, it becomes unnecessary for the user to perform conventional laborious operations which require a certain level of skill. The baby buggy can be unfolded and folded up in the previously mentioned simple operation.

By virtue of the forty-fifth to forty-ninth aspects of the present invention, the slide moves downward in the longitudinal direction of the rear leg by rotating the male screw rod, provided in the rear leg, using an electric motor. As a result of the downward movement of the slider, the right and left front legs, the right and left rear legs, the arm rest members, and the press bar are folded up. Simultaneously, in association with the downward movement of the slider, the side bars and the joint bars rotate, and the front leg sleeves rotate via the first and second bevel gears. The folding action of the front leg lateral bar allows the seating apparatus to be folded up laterally.

When the electric motor is reversely driven so as to rotate the male screw bar in the direction opposite to the direction of the rotation performed when the slider is moved downward, the slider moves upward from the lower stop position. Simultaneously, together with the upward movement of the slider, the side bars and the joint bars rotate, and the front leg sleeves rotate via the first and second bevel gears. The linear stretching of the front leg lateral bar allows the seating apparatus to be unfolded laterally.

As previously mentioned, the collapsible baby buggy of this invention does not use the conventional rotating type bracket at all. Instead of the bracket, the present invention adopts the slide system wherein the slider moves upward or downward along the rear leg by the operation of the switch of the electric motor. As a result, it becomes unnecessary for the user to perform conventional laborious operations which require a certain level of skill. The baby buggy can be unfolded and folded up in the previously mentioned simple operation.

By virtue of the fiftieth to fifty-fifth aspects of the present invention, it is possible to constitute a slide system wherein the slider moves along the rear leg as a result of the drawing forces of the first tension spring and the second tension spring provided common to the folding-in-four type baby buggy which is folded up and unfolded longitudinally and laterally and the folding-in-two type baby buggy which is folded up and unfolded only its longitudinal direction.

In both the folding-in-four type baby buggy and the folding-in-two type baby buggy, the slider moves down in the longitudinal direction of the rear leg as a result of the drawing force of the second tension spring provided on one rear leg by simply pressing down the pedal disposed on the rear leg and, subsequently, unlocking the slider. In association with this downward movement of the slider, the right ant left front legs, the right and left rear legs, the arm rest members, and the press bar are folded up.

In the case of the folding-in-four type baby buggy, the front leg lateral bar is folded together with the downward movement of the slider, and the connecting members such as the slider joint link and the rear leg joint link are folded at the hinged portions formed therein. As a result, the front and rear legs can be simultaneously folded up in the lateral direction thereof.

To unfold the folded up baby buggy irrespective of whether it is the folding-in-four type or folding-in-two type, the pedal is urged upward from the lower stop position as a result of the drawing force of the first tension spring by simply unlocking the pedal frame. Simultaneously, the slider is moved upward, and the right ant left front legs, the right and left rear legs, the arm rest members, and the press bar are unfolded as a result of the upward movement of the slider.

In the case of the folding-in-four type baby buggy, the front leg lateral bar is stretched together with the upward movement of the slider, and the connecting members such as the slider joint link and the rear leg joint link are stretched again at the hinged portions formed therein. As a result, the front and rear legs can be simultaneously unfolded in the lateral direction thereof.

As previously mentioned, the collapsible baby buggy of this invention does not use the conventional rotating type bracket at all. Instead of the bracket, the present invention adopts the slide system wherein the slider moves upward or downward along the rear leg as a result of the drawing forces of the first and second tension springs. As a result, it becomes unnecessary for the user to perform conventional laborious operations which require a certain level of skill. The baby buggy can be unfolded and folded up in the previously mentioned simple operation.

## Claims

1. A collapsible seating apparatus comprising:
a framework including:
a front legs and rear legs respectively hinged at their upper ends to arm rest members;
press bars respectively hinged to the rear ends of the arm rest members;
sliders slidable along the rear legs in the longitudinal direction thereof and being hinged to the lower ends of the press bars; and
side bars each with one end thereof being hinged to the slider and with the other end thereof being hinged to the front leg.

2. A collapsible seating apparatus as claimed in claim 1, further comprising:
first retaining means for holding the slider located at an upper position in order to retain the seating apparatus in an unfolded state; and
second retaining means for holding the slider located at a lower position in order to retain the seating apparatus in a folded up state.

3. The collapsible seating apparatus as defined in claim 2, wherein the second retaining means includes folding spring for resiliently urging the slider in an upward direction.

4. The collapsible seating apparatus as defined in claim 2, wherein the first retaining means includes an unfolding spring for resiliently urging the slider in a downward direction.

5. The collapsible seating apparatus as defined in claim 2, further comprising:
a folding spring for resiliently urging the slider in an upward direction;
an unfolding spring for resiliently urging the slider in a downward direction;
storage means for individually storing the urging forces of the folding and unfolding springs;
releasing means for individually releasing the urging forces of the folding and unfolding springs stored in the storage means and transmitting the thus released forces to the slider.

6. The collapsible seating apparatus as defined in claim 5, wherein the storage means has a mechanism for storing urging forces which are generated by making the folding and unfolding springs flex using a manual depressing force.

7. The collapsible seating apparatus as defined in claim 2, wherein the first means and the second means include an electric motor for moving the slider upwardly and/or downwardly, respectively.

8. The collapsible seating apparatus as defined in claims 1, wherein the seating apparatus is at least one of a baby buggy, a wheel chair, a baby chair and a push chair for the aged.

9. A collapsible seating apparatus as claimed in claim 1, further comprising:
lateral bars having a predetermined length which respectively connect together the right and left sliders, the right and left front legs, and the right and left rear legs;
a pedal frame which is disposed on one of the right and left rear legs and slides over the rear leg having the pedal frame in the longitudinal direction thereof below the slider;
a tension spring and a compression spring disposed longitudinally along the rear leg having the pedal frame;
a lock piece of the slider to which the upper end of the tension spring is fixed;
a lock piece of the pedal frame to which the lower end of the tension spring is fixed, the compression spring being sandwiched between the lock piece of the pedal frame and a lower bottom of the rear leg;
an upper stopper attached to an upper portion of the rear leg so as to prevent the upward movement of the slider;
an upper knock pin being disposed in a releasable manner in the upper portion of the rear leg for preventing the downward movement of the slider from the position where the slider is stopped by the upper stopper;
a lower stopper attached to a lower portion of the rear leg to prevent the downward movement of the pedal frame; and
a lower knock pin being disposed in a releasable manner in the lower portion of the rear leg for preventing the upward movement of the pedal frame from the position where the pedal frame is stopped by the lower stopper.

10. A collapsible seating apparatus as claimed in claim 1, further comprising:
a front leg sleeve rotatively fitted around the front leg at a predetermined location in a lower portion of the front legs, first bevel gear attached to outer circumference of the front leg sleeve, a second bevel gear rotatively attached to the outside of the front leg for meshing with the first bevel gear, a rocking piece attached to the second bevel gear, and a joint bar which pivotally connects the rocking piece with the side bar;
a front leg lateral bar being hinged at a point thereof and having both ends thereof attached to the right and left front leg sleeves;
a slider joint link being hinged at the center thereof and having both ends thereof hinged to the right and left sliders;
a rear leg joint link being hinged at the center thereof and having both ends thereof hinged to upper portions of the right and left rear legs;
the slider joint link and the rear leg joint link being hinged together at points on both sides of the center link joints thereof;
a pedal frame which is disposed on one of the right and left rear legs and slides over the rear leg in the longitudinal direction thereof below the slider;
a tension spring and a compression spring longitudinally disposed along the rear leg;
a lock piece of the slider to which the upper end of the tension spring is fixed;
a lock piece of the pedal frame to which the lower end of the tension spring is fixed, the compression spring being sandwiched between the lock piece of the pedal frame and a lower portion of the rear leg;
an upper stopper attached to an upper portion of the rear leg to prevent the upward movement of the slider;
an upper knock pin being disposed in a releasable manner in the upper portion of the rear leg for preventing the downward movement of the slider from the position where the slider is stopped by the upper stopper;
a lower stopper attached to a lower portion of the rear leg to prevent the downward movement of the pedal frame; and
a lower knock pin being disposed in a releasable manner in the lower portion of the rear leg for preventing the upward movement of the pedal frame from the position where the pedal frame is stopped by the lower stopper.

11. The collapsible seating apparatus as defined in claim 10, wherein the right and left press bars are jointed together at upper portions thereof, and the upper ends of the right and left press bars are respectively connected to both ends of a case housing the operation buttons in a collapsible manner.

12. A collapsible seating apparatus as claimed in claim 1, further comprising:
lateral bars having a predetermined length which respectively connect together the right and left sliders, the right and left front legs, and the right and left rear legs;
a pedal projecting outside from the slider disposed on either of the right and left rear legs;
a compression spring which is disposed along the rear leg in the longitudinal direction thereof and is sandwiched between a lock piece attached to the slider and a lock piece attached to a lower portion of the rear leg;
an upper stopper attached to an upper portion of the rear leg to prevent the upward movement of the slider;
a lower stopper attached to a lower portion of the rear leg to prevent the downward movement of the slider; and
a knock pin provided in a releasable manner so as to prevent the upward movement of the slider from the position where the slider is stopped by the lower stopper.

13. A collapsible seating apparatus as claimed in claim 1, further comprising:
a front leg sleeve rotatively fitted around the front leg at a predetermined location in a lower portion of the front leg, a first bevel gear attached to outer circumference of the front leg sleeve, a second bevel gear rotatively attached to the outside of the front leg for meshing with the first bevel gear, a rocking piece attached to the second bevel gear, and a joint bar which pivotally connects the rocking piece with the side bar;
a front leg lateral bar being hinged at a point thereof and having both ends thereof attached to the right and left front leg sleeves;
a slider joint link being hinged at the center thereof and having both ends thereof hinged to the right and left sliders;
a rear leg joint link being hinged at the center thereof and having both ends thereof hinged to upper portions of the right and left rear legs, the slider joint link and the rear leg joint link being hinged together at points on both sides of the center link joints thereof;
a pedal projecting outside from the slider disposed on either of the right and left rear legs;
a compression spring disposed along the rear leg in the longitudinal direction thereof being sandwiched between a lock piece attached to the slider and a lock piece attached to a lower portion of the rear leg;
an upper stopper attached to an upper portion of the rear leg to prevent the upward movement of the slider;
a lower stopper attached to a lower portion of the rear leg to prevent the downward movement of the slider; and
a knock pin being disposed in a releasable manner in the lower portion of the rear leg to prevent the upward movement of the slider from the position where the slider is stopped by the lower stopper.

14. A collapsible seating apparatus as claimed in claim 1, further comprising:
lateral bars having a predetermined length for respectively connecting together the right and left front legs, the right and left rear legs, and the right and left sliders;
at least one electric motor capable of rotating in forward and reverse directions which is disposed at an upper portion of at least one of the right and left rear legs;
a male screw shaft connected to a rotary shaft of the motor in the longitudinal direction of the rear leg;
a slide member which is attached to the slider in such a way as to be movable in the longitudinal direction of the rear leg; and
a female screw thread of the slide member, into which the male screw shaft is screwed.

15. A collapsible seating apparatus as claimed in claim 1, further comprising:
a front leg sleeve rotatively fitted around the front leg at a predetermined location in a lower portion of the front leg, a first bevel gear attached to outer circumference of the front leg sleeve, a second bevel gear rotatively attached to the outside of the front leg for meshing with the first bevel gear, a rocking piece attached to the second bevel gear, and a joint bar which pivotally connects the rocking piece to the side bar;
a front leg lateral bar being hinged at a point thereof and having both ends thereof attached to the right and left front leg sleeves;
a slider joint link being hinged at the center thereof and having both ends thereof hinged to the right and left sliders;
a rear leg joint link being hinged at the center thereof and having both ends thereof hinged to upper portions of the right and left rear legs, the slider joint link and the rear leg joint link being hinged together at points on both sides of the center link joints thereof;
at least one electric motor which is capable of rotating in forward and reverse directions and is disposed at an upper portion of at least one of the right and left rear legs;
a male screw shaft connected to a rotary shaft of the motor in the longitudinal direction of the rear leg;
a slide member which is attached to the slider in such a way as to be movable in the longitudinal direction of the rear leg; and
a female screw thread of the slide member into which the male screw shaft is screwed.

16. A collapsible seating apparatus as claimed in claim 1, further comprising:
a pedal frame which is disposed on one of the right and left rear legs and slides over the rear leg in the longitudinal direction thereof below the slider; and
first and second tension springs disposed side by side in the longitudinal direction of the rear leg having the pedal frame, wherein the first tension spring is attached at the upper end thereof to a lock member provided at the upper end of the rear leg and is attached at the other end thereof to a lock piece of the pedal frame, and the second tension spring is attached at the upper end thereof to a lock piece of the slider and is attached at the lower end thereof to a lock piece of the pedal frame.

17. A collapsible seating apparatus as claimed in claim 1, further comprising:
a first bevel gear attached to outer circumference of the front leg sleeve;
a second bevel gear rotatively attached to the outside of the front leg for meshing with the first bevel gear;
a rocking piece attached to the second bevel gear; a joint bar which pivotally connect the rocking piece to the side bar;
a lateral bar being hinged at a point thereof and having both ends thereof attached to the right and left front leg sleeves;
a slider joint link being hinged at the center thereof and having both ends thereof hinged to the right and left sliders;
a rear leg joint link being hinged at the center thereof and having both ends thereof hinged to upper portions of the right and left rear legs, the slider joint link and the rear leg joint link being hinged together at points on both sides of the center link joints thereof;
a pedal frame which is disposed on either of the right and left rear legs and slides over the rear leg in the longitudinal direction thereof below the slider;
first and second tension springs disposed side by side in the longitudinal direction of the rear leg having the pedal frame, wherein the first tension spring is attached at the upper end thereof to a lock member provided at the upper end of the rear leg and is attached at the other end thereof to a lock piece of the pedal frame, and the second tension spring is attached at the upper end thereof to a lock piece of the slider and is attached at the lower end thereof to a lock piece of the pedal frame;
an upper stopper attached to an upper portion of the rear leg to prevent the upward movement of the slider;
an upper knock pin being disposed in a releasable manner in the upper portion of the rear leg to prevent the downward movement of the slider from the position where the slider is stopped by the upper stopper;
a lower stopper attached to a lower portion of the rear leg to prevent the downward movement of the pedal frame; and
a lower knock pin being disposed in a releasable manner in the lower portion of the rear leg to prevent the upward movement of the pedal frame from the position where the pedal frame is stopped by the lower stopper.

18. A collapsible seating apparatus as claimed in claim 1, further comprising:
lateral bars having a predetermined length which respectively connect together the right and left sliders, the right and left front legs, and the right and left rear legs;
a pedal frame which is disposed on one of the right and left rear legs and slides over the rear leg in the longitudinal direction thereof below the slider;
first and second tension springs disposed side by side in the longitudinal direction of the rear leg having the pedal frame, wherein the first tension spring is attached at the upper end thereof to a lock member provided at the upper end of the rear leg and is attached at the other end thereof to a lock piece of the pedal frame, and the second tension spring is attached at the upper end thereof to a lock piece of the slider and is attached at the lower end thereof to a lock piece of the pedal frame;
an upper stopper attached to an upper portion of the rear leg to prevent the upward movement of the slider;
an upper knock pin being disposed in a releasable manner in the upper portion of the rear leg to prevent the downward movement of the slider from the position where the slider is stopped by the upper stopper;
a lower stopper attached to a lower portion of the rear leg to prevent the downward movement of the pedal frame; and
a lower knock pin being disposed in a releasable manner in the lower portion of the rear leg to prevent the upward movement of the pedal frame from the position where the pedal frame is stopped by the lower stopper.

19. The collapsible seating apparatus as defined in any one of claims 9 and 10, wherein the tension spring and the compression spring are disposed within the rear leg, and the lock piece of the slider and the lock piece of the pedal frame project to the inside of the rear leg through an elongated guide hole formed in the longitudinal direction of the rear leg.

20. The collapsible seating apparatus as defined in claim 9 and 10, wherein the upper knock pin and the lower knock pin being respectively supported by elastic members so as to project out of holes drilled in the side surface at the upper and lower portions of the rear leg; and further comprising:
two rotating plates which are rotatively fixed coaxially with respect to the slider and resiliently return to their original positions, the rotating plates being respectively linked to two operation buttons disposed at an upper portion of the press bars by way of respective wires; and
protuberances formed on the respective rotating plates, whereby the rotation of each of the rotating plates resulting from the pressing action of each of the operation buttons causes each of the protuberances of the rotating plates to press one of the upper knock pin and the lower knock pin to such an extent that the knock pin comes to the point below the surface of the rear leg.

21. The collapsible seating apparatus as defined in any one of claims 9 and 10 wherein the tension spring and the compression spring are disposed outside the rear leg.

22. The collapsible seating apparatus as defined in any one of claims 9 and 10, wherein the tension spring and the compression spring includes coil springs, respectively.

23. The collapsible seating apparatus as defined in any one of claims 9, 10, 12, 13, 16, 17 and 18, wherein the compression spring includes a gas spring.

24. The collapsible seating apparatus as defined in any one of claims 9, 10, 16, 17 and 18, wherein the framework is manually folded up as a result of the elimination of the tension spring.

25. The collapsible seating apparatus as defined in one of claims 9, 10, 16, 17 and 18, wherein the framework is manually unfolded as a result of the elimination of the compression spring.

26. The collapsible seating apparatus as defined in any one of claims 12 and 13, wherein the knock pin being supported by an elastic member so as to project out of the side surface at the lower portion of the rear leg; and
further comprising:
a rotating plate which is rotatively attached to the slider and resiliently returns to its original position, the rotating plate being linked to an operation button disposed at upper portion of the press bar by way of a wire; and
a protuberance formed on the rotating plate, whereby the rotation of the rotating plate resulting from the pressing action of the operation button causes the protuberance of the rotating plate to press the knock pin to such an extent that the knock pin comes to the point below the surface of the rear leg.

27. The collapsible seating apparatus as defined in any one of claims 12 and 13, wherein a tension spring provided along the rear leg in the longitudinal direction thereof is sandwiched between a lock piece attached to the slider and a lock piece attached to an upper portion of the rear leg.

28. The collapsible seating apparatus as defined in any one of claims 12 and 13, wherein one of the compression spring and the tension spring is disposed within the rear leg.

29. The collapsible seating apparatus as defined in any one of claims 12 and 13, wherein one of the compression spring and the tension spring is disposed outside the rear leg.

30. The collapsible seating apparatus as defined in any one of claims 12 and 13, wherein one of the compression spring and the tension spring includes a coil spring.

31. The collapsible seating apparatus as defined in any one of claims 14 and 15, wherein the slide member is attached to the slider disposed along the outer periphery of the rear leg, the slide member projects to the inside of the rear leg along an elongated guide hole formed in the rear leg in the longitudinal direction thereof, and the male screw shaft at the upper and lower portions thereof being supported in a slidable way by the inside of the rear leg is screwed into the female screw thread of the slide member provided within the rear leg.

32. The collapsible seating apparatus as defined in any one of claims 14 and 15, wherein the male screw shaft is disposed outside the rear leg.

33. The collapsible seating apparatus as defined in any one of claims 14 and 15, wherein stopper means are disposed at upper and lower portions of the rear leg for preventing the upper and lower movement of the slider at a predetermined location.

34. The collapsible seating apparatus as defined in any one of claims 14 and 15, wherein a switch for starting or stopping the electric motor is provided at an upper portion of the press bar.

35. The collapsible seating apparatus as defined in any one of claims 17 and 18, wherein the upper knock pin and the lower knock pin being respectively supported by elastic members so as to project out of holes drilled in the side surface at the upper and lower portions of the rear leg; and
further comprising:
two rotating plates which are rotatively fixed coaxially with respect to the slider and resiliently return to their original positions, the rotating plates being respectively linked to two operation buttons disposed at an upper portion of the press bars by way of respective wires; and
protuberances formed on the respective rotating plates, whereby the rotation of each of the rotating plates resulting from the pressing action of each of the operation buttons causes each of the protuberances of the rotating plates to press the upper knock pin or the lower knock pin to such an extent that the knock pin comes to the point below the surface of the rear leg.
